(19)

**Europäisches Patentamt**
**European Patent Office**
**Office européen des brevets**

(11)  **EP 4 708 550 A2**

(12)  **EUROPEAN PATENT APPLICATION**

(43) Date of publication:
**11.03.2026 Bulletin 2026/11**

(21) Application number: **25200700.0**

(22) Date of filing: **08.09.2025**

(51) International Patent Classification (IPC):
*H01M 50/552* (2021.01)     *H01M 50/562* (2021.01)

(52) Cooperative Patent Classification (CPC):
**H01M 50/562; H01M 50/552**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024   CN 202411252093
14.01.2025   CN 202510059075**

(71) Applicants:
• **Eve Energy Co., Ltd.**
  **Huizhou, Guangdong 516006 (CN)**
• **HUIZHOU EVE POWER CO., LTD**
  **Huizhou, Guangdong 516039 (CN)**
• **Eve Power Co., Ltd.**
  **Jingmen, Hubei 448000 (CN)**

(72) Inventors:
• **HE, Wei**
  **Huizhou, Guangdong, 516006 (CN)**
• **ZHENG, Xu**
  **Huizhou, Guangdong, 516006 (CN)**
• **SHU, Kuanjin**
  **Huizhou, Guangdong, 516006 (CN)**
• **DUAN, Dong**
  **Huizhou, Guangdong, 516006 (CN)**
• **YAN, Bo**
  **Huizhou, Guangdong, 516006 (CN)**
• **LIU, Ziwen**
  **Huizhou, Guangdong, 516006 (CN)**

(74) Representative: **Berggren Oy**
  **P.O. Box 16**
  **Fabianinkatu 21**
  **00101 Helsinki (FI)**

(54)  **CONDUCTIVE STRUCTURE AND MANUFACTURING METHOD THEREOF, COVER PLATE ASSEMBLY, AND BATTERY CELL**

(57)     The present application provides a conductive structure and a manufacturing method thereof, a cover plate assembly, and a battery cell. The conductive structure includes: a first-metal post including a first end and a second end opposite to each other; and a second-metal layer bonded to a surface of the first-metal post. The second-metal layer wraps the first end and extends toward the second end. In the conductive structure, the second-metal layer bonded to the surface of the first end of the first-metal post is arranged to extend from the surface of the first end of the first-metal post to the second end.

FIG. 2

EP 4 708 550 A2

## Description

TECHNICAL FIELD

The present application relates to the technical field of batteries, and in particular, to a conductive structure, a manufacturing method of a conductive structure, a cover plate assembly, and a battery cell.

BACKGROUND

A pole is an important component that connects the inside with outside of a battery core (also referred to as a battery cell). Generally, an end of the pole is connected to an external circuit outside the battery core, such as being connected to a module bus bar, and another end of the pole is connected to an internal circuit inside the battery core, such as being connected to a tab of an electrode assembly through a current collector. Currently, most poles are made of single metal material, for example, a positive pole is made of aluminum and a negative pole is made of copper. However, the poles made of a single metal material are easy to pose welding difficulties. Taking the negative pole as an example of a pure copper pole as an example, when the pure copper pole and a terminal pressing block are welded by laser, in order to reduce the costs and the weight of the battery core, the terminal pressing block is generally made of aluminum. However, due to the difference in melting points between copper and aluminum, laser welding may easily fail, leading to cracking.

In order to reduce the difficulty of welding, a composite pole is designed in related arts. The composite pole includes two metal layers of different materials stacked on top and bottom, and the different metal layers are joined together by friction welding or stamping. Taking the composite pole as an example of the negative pole, the composite pole includes an aluminum layer and a copper layer. However, the bonding strength between different metal layers in the composite pole is limited, leading to the metal layer connected to an electrode assembly easily detaching and falling into the interior of the battery core, thereby resulting in the failure of the battery core.

SUMMARY

Embodiments of the present application provide a conductive structure and a manufacturing method thereof, a cover plate assembly, and a battery cell, which can address the technical problem of a metal layer in a composite pole easily detaching.

In a first aspect, embodiments of the present application provide a conductive structure, including:

a first-metal post including a first end and a second end opposite to each other; and
a second-metal layer bonded to a surface of the first-metal post, the second-metal layer wrapping the first end and extending toward the second end.

In one embodiment, the second-metal layer and the first-metal post are cooperated with each other in an embedding manner.

In one embodiment, an end portion of the second-metal layer is embedded in the first-metal post.

In one embodiment, a first gap is presented between the end portion of the second-metal layer and the first-metal post.

In one embodiment, an end surface and a transition surface connected in sequence are formed on the end portion of the second-metal layer, and the first gap is formed only between the end surface and the transition surface and the first-metal post, a side of the end surface away from the transition surface is connected to an outer surface of the second-metal layer, and the transition surface is curved and transitioned from the end surface onto the first-metal post.

In one embodiment, an average dimension of the first gap is less than 0.1 mm.

In one embodiment, an end portion of the second-metal layer includes a first extension segment and/or a second extension segment, the first extension segment extends in a first direction, the second extension segment extends in a second direction, and the first direction intersects with the second direction.

In one embodiment, the conductive structure is a pole, a supporting surface is formed on an end portion of the second-metal layer, and the supporting surface is configured to support a terminal pressing block.

In one embodiment, the supporting surface is an inclined surface, and in a direction away from the first end, the inclined surface gradually approaches an outer side surface of the first-metal post from an outer side surface of second-metal layer.

In one embodiment, the inclined surface is an inclined flat surface, and an included angle between the inclined flat surface and the outer side surface of the second-metal layer ranges from 110° to 130°.

In one embodiment, the supporting surface is a step surface, the step surface includes a first sub-step surface and a second sub-step surface connected in sequence, a number of the first sub-step surface is greater than or equal to 1, and a number of the second sub-step surface is greater than or equal to 1.

In one embodiment, a height of the second sub-step surface along an axial direction of the pole is greater than or equal to 0.2 mm, and/or a width of the first sub-step surface along a radial direction of the pole is greater than or equal to 0.2 mm.

In one embodiment, a width of the supporting surface along a radial direction of the pole is greater than or equal to 0.3 mm and is less than or equal to a thickness of the second-metal layer.

In one embodiment, the first-metal post is radially protruded to form a boss, and the second-metal layer extends at least onto the boss.

In one embodiment, the boss is located at the first end, and the boss is completely encased within the second-metal layer.

In one embodiment, the conductive structure is a pole and a current collector integrated with each other, the boss is the current collector, the current collector is configured to be connected with a tab.

In one embodiment, the boss is arranged away from the first end, and a radial dimension of the boss is greater than a radial dimension of the first end.

In one embodiment, the boss is located at the second end, and the boss portion is exposed outside the second-metal layer.

In one embodiment, the conductive structure is a pole and a terminal pressing block integrated with each other, and the boss is the terminal pressing block.

In one embodiment, the second-metal layer includes a first section, a second section, and a third section, the first section corresponds to an end surface of the first end, the second section corresponds to a side surface of the first end, the third section corresponds to a side surface of the boss adjacent to the first end, and the second section connects the first section with the third section.

In one embodiment, the third section is formed as an end portion of the second-metal layer, and the third section is embedded in the boss.

In one embodiment, an average thickness of the first section is greater than an average thickness of the second section, and the average thickness of the second section is greater than an average thickness of the third section.

In one embodiment, the average thickness of the second section is greater than half of the average thickness of the first section, and/or the average thickness of the third section is greater than half of the average thickness of the second section.

In one embodiment, a thickness of a portion of the second section adjacent to the third section is greater than a thickness of a portion of the second section adjacent to the first section.

In one embodiment, the end surface of the first end is locally recessed to form a groove, the first section includes a first sub-section, a second sub-section, and a third sub-section connected in sequence, the first sub-section is located outside the groove, the second sub-section is located on a sidewall of the groove, and the third sub-section is located on a bottom wall of the groove.

In one embodiment, a vertical distance between an outer surface of the first sub-section and an outer surface of the third sub-section is less than or equal to 2.5 mm.

In one embodiment, an average thickness of the first sub-section is greater than or equal to 0.5 mm, and/or the average thickness of the second section is greater than or equal to 0.5 mm.

In one embodiment, the second sub-section extends obliquely from the first sub-section toward the third sub-section, and an inclination angle of the second sub-section is greater than or equal to 15° and is less than or equal to 60°.

In one embodiment, the boss is located between the first end and the second end, and the radial dimension of the boss is further greater than a radial dimension of the second end.

In one embodiment, the second-metal layer further includes a fourth section, the fourth section corresponds to a side surface of the boss, and the fourth section is connected to the third section.

In one embodiment, along an axial direction of the first-metal post, a distance between an outer surface of the third section and an end of the fourth section facing away from the first end is defined as a, and along a radial direction of the first-metal post, a distance between an outer surface and an inner surface of the fourth section is defined as e, and $a > e > 0.5$ mm.

In one embodiment, the second-metal layer further includes a fifth section, the fifth section corresponds to a side surface of the boss away from the first end, and the fourth section connects the fifth section with the third section.

In one embodiment, along an axial direction of the first-metal post, a distance between an inner surface of the fifth section and an inner surface of the third section is defined as b, and $b > 0.5$ mm.

In one embodiment, along an axial direction of the first-metal post, a distance between an outer surface of the third section and an outer surface of the fifth section is defined as h2; along a radial direction of the first-metal post, a distance between an outer surface of the fourth section and a root on a side of the boss adjacent to the second end is defined as c, and a distance between the outer surface of the fourth section and an end of the fifth section adjacent to a central axial line of the first-metal post is defined as d; $c > h2$ and $d \geq 2/3c$, or $c \leq h2$ and $d > 0.5$ mm.

In one embodiment, the fourth section and the fifth section form an inversely-clasping layer wrapping a free end of the boss, and along an axial direction of the first-metal post, a distance between an outer surface of the third section and an outer surface of the inversely-clasping layer is defined as K1, a thickness of the inversely-clasping layer is defined as K2, and $f = K2/K1$, and f is greater than or equal to 0.3 and is less than 1.

In one embodiment, an edge of the end surface of the first end is recessed to form a first stepped portion, and the second-metal layer further includes a second stepped portion, the second stepped portion matches the first stepped portion, the second stepped portion is connected between the first section and the second section, and the second stepped portion is configured to be connected with a tab.

In one embodiment, the second stepped portion includes a first step surface and a second step surface connected with each other, a width of the first step surface along a radial direction of the first-metal post is greater than or equal to 0.5 mm, and a height of the second step surface along an axial direction of the first-metal post is greater than or equal to 0.4 mm.

In one embodiment, the first-metal post is an aluminum post, and the second-metal layer is a copper layer.

In one embodiment, an average thickness of the second-metal layer ranges from 0.1 mm to 3 mm.

In one embodiment, an uneven micro-structure is provided at a bonding interface between the second-metal layer and the first-metal post.

In one embodiment, a diameter of the conductive structure is less than or equal to 30 mm.

In one embodiment, the first-metal post includes a first segment and a second segment connected to each other, an outer diameter of the first segment is less than an outer diameter of the second segment, an end of the first segment away from the second segment is the first end, and an end of the second segment away from the first segment is the second end; the second-metal layer includes a barrel body and a flange, the barrel body wraps the first segment, the flange is connected to an end portion of the barrel body adjacent to the second segment, the flange extends in a radial direction of the conductive structure and embedded in an end surface of the second segment facing the first segment; and in an axial direction of the conductive structure, the flange has a thickness dimension Hb, and the thickness dimension Hb of at least part of the flange increases as approaching an axial line of the conductive structure.

In one embodiment, in a longitudinal cross-section of the conductive structure passing through the flange, along a direction toward the axial line of the conductive structure, a bonding interface formed between the flange embedded in the second segment includes a first line segment, a second line segment, and a third line segment connected in sequence; and a curvature of the second line segment is less than a curvature of the first line segment and a curvature of the third line segment.

In one embodiment, the curvature of the third line segment is greater than the curvature of the first line segment.

In one embodiment, the curvature of the first line segment ranges from $2 \times 10^{-4}$ mm$^{-1}$ to $8 \times 10^{-4}$ mm$^{-1}$, and the curvature of the third line segment ranges from $7 \times 10^{-3}$ mm$^{-1}$ to $1.2 \times 10^{-2}$ mm$^{-1}$.

In one embodiment, the curvature of the second line segment is less than or equal to $1 \times 10^{-4}$ mm$^{-1}$.

In one embodiment, in the longitudinal cross-section, along the axial direction of the conductive structure, a bonding interface formed between a surface of the second-metal layer adjacent to the axial line of the conductive structure and an outer circumferential surface of the first-metal post includes a fourth line segment and a fifth line segment, and both ends of the fourth line segment are connected to the third line segment and the fifth line segment, respectively; and a curvature of the fourth line segment is less than the curvature of the third line segment and a curvature of the fifth line segment.

In one embodiment, the curvature of the first line segment is less than the curvature of the fifth line segment.

In one embodiment, the curvature of the first line segment ranges from $3 \times 10^{-4}$ mm$^{-1}$ to $9.5 \times 10^{-4}$ mm$^{-1}$, the curvature of the third line segment ranges from is $5 \times 10^{-4}$ mm$^{-1}$ to $2 \times 10^{-3}$ mm$^{-1}$, and the curvature of the fifth line segment ranges from $7 \times 10^{-4}$ mm$^{-1}$ to $3 \times 10^{-3}$ mm$^{-1}$.

In one embodiment, the curvature of the fourth line segment is less than or equal to $1 \times 10^{-4}$ mm$^{-1}$.

In one embodiment, in the longitudinal cross-section of the conductive structure, the first-metal post includes a plurality of forging flow lines, and a contact area between the first-metal post and the second-metal layer forms a bonding interface; the first-metal post includes a bonding region adjacent to the second-metal layer, a plurality of the forging flow lines within the bonding region extend along the bonding interface; the bonding region includes a compact region, a spacing of a plurality of the forging flow lines within the compact region is less than a spacing of a plurality of the forging flow lines within other regions of the bonding region; and the compact region includes a first dense region, a second dense region, and a third dense region, and along a thickness direction of the second-metal layer, the first dense region and the second dense region are arranged opposite to the third line segment and the fifth line segment, respectively; and the third dense region is disposed at an axial line of the first-metal post and is arranged away from a bottom wall of the barrel body.

In one embodiment, two end points of the second line segment are defined as a point U and a point V, respectively; and a straight line UV and the radial direction of the conductive structure form an included angle W on a side facing away from the flange, satisfying: $0 < W \le 20°$.

In one embodiment, the outer diameter of the second segment is defined as Rb1, and a maximum radius of the flange is defined as Rb2, satisfying: $65\% Rb1 \le Rb2 \le 93\% Rb1$.

In one embodiment, a plurality of flanges are provided, the plurality of flanges are sequentially arranged along a circumferential direction of the conductive structure, and at least two of the flanges are oppositely arranged along the radial direction of the conductive structure.

In one embodiment, in an axial cross-section of the conductive structure, a length of a bonding interface formed through the contact between the first-metal post and the second-metal layer is defined as Lb, and an outer diameter of the barrel body is defined as $\varphi b0$, satisfying: $1\varphi b0 \le Lb \le 5\varphi b0$.

In one embodiment, $\varphi b0 \le 4$ mm, and $3.6\varphi b0 \le Lb \le 5\varphi b0$; 4 mm $< \varphi b0 < 8$ mm, and $3\varphi b0 \le Lb \le 3.6\varphi b0$;

and φb0 ≥ 8 mm, and 1φb0 ≤ Lb ≤ 3φb0.

In one embodiment, the second-metal layer further includes transition portions, and the transition portions are connected to an end surface of the barrel body adjacent to the second segment; and the transition portions are embedded in an end surface of the second segment facing the first segment, and a part of a bonding interface between the transition portions and the second segment is located on a circumferential surface of the second segment.

In one embodiment, a cross-section of the second segment is shaped as a rectangle, two of the flanges are arranged at intervals along a direction of long sides of the rectangle, the flanges extend along wide sides of the rectangle, two of the transition portions are arranged at intervals along a direction of narrow sides of the rectangle, and the transition portions extend along the long sides of the rectangle.

In one embodiment, end surfaces of the transition portions away from the axial line of the conductive structure is coplanar with a sidewall on which the long sides of the second segment are located.

In one embodiment, a contact area between the first-metal post and the second-metal layer forms a bonding interface; the conductive structure includes a metal mixing layer, the metal mixing layer extends along the bonding interface, the metal mixing layer wraps the bonding interface, and the metal mixing layer includes a first metal material and a second metal material mixed with each other; and a thickness of the metal mixing layer is defined as Dc, and the thickness of the metal mixing layer is not uniform.

In one embodiment, the thickness Dc satisfies: 1 μm ≤ Dc ≤ 8 μm.

In one embodiment, the metal mixing layer includes a first mixing portion and a second mixing portion, the first mixing portion is formed by mixing a material of a bottom wall of the barrel body and a material of an end surface of the first segment away from the second segment, and the second mixing portion is formed by mixing a material of a portion of an inner circumferential surface of the barrel body adjacent to the flange and a material of a portion of an outer circumferential surface of the first segment adjacent to the second segment; and a thickness of the first mixing portion is greater than a thickness of the second mixing portion.

In one embodiment, the metal mixing layer is a metallurgical layer, or the metal mixing layer is an alloy layer in which the first metal material and the second metal material are embedded with each other.

In one embodiment, the flange extends in a looped shape along a circumferential direction of the first segment.

In one embodiment, a diameter of an end of the first segment adjacent to the second segment is less than a diameter of an end of the first segment away from the second segment.

In one embodiment, an end surface of the second segment facing the first segment is provided with a fitting groove, and the flange is embedded in the fitting groove; and a second gap is formed between the flange and the fitting groove.

In one embodiment, the second gap is located between an end of the flange away from an axial line of the conductive structure and a groove wall of the fitting groove.

In one embodiment, the second segment has a thickness Da in the axial direction of the conductive structure; a dimension of the second gap in the radial direction of the conductive structure is defined as La, satisfying: 0 < La ≤ 10% Da; and/or a dimension of the second gap in the axial direction of the conductive structure is defined as Ha3 satisfying: 0 < Ha3 ≤ 40%Da.

In one embodiment, an end of the barrel body away from the second segment is provided with a matching groove.

In one embodiment, the first segment includes a matching bottom wall away from the second segment, and a bottom wall of the barrel body protrudes toward the matching bottom wall to be embedded within the matching bottom wall.

In one embodiment, the first segment includes a matching bottom wall away from the second segment, and a peripheral edge of the matching bottom wall protrudes toward a peripheral edge of a bottom wall of the barrel body, so as to be embedded in the bottom wall of the barrel body.

In one embodiment, a diameter of an end of the barrel body away from the second segment is less than a diameter of an end of the barrel body adjacent to the second segment.

In one embodiment, an outer circumferential surface of the barrel body is a tapered surface, or a stepped groove b is formed at an end of the outer circumferential surface of the barrel body away from the second segment, and the stepped groove b extends in a looped shape along a circumferential direction of the barrel body.

In one embodiment, in the longitudinal cross-section of the first-metal post, a boundary line of a part of the second segment is an inclined line disposed at an acute angle to an axial line of the first-metal post.

In one embodiment, in the longitudinal cross-section of the first-metal post, a boundary line corresponding to a circumferential surface of the second segment is the inclined line; and/or the second segment includes a second surface facing away from the second-metal layer, and in the longitudinal cross-section of the first-metal post, a boundary line corresponding to a portion of the second surface adjacent to an edge is the inclined line.

In one embodiment, an end surface of the second segment facing away from the first segment is provided with an inwardly-recessed hole, the inwardly-recessed hole extends along an axial line of the first-metal post, and the inwardly-recessed hole is disposed adjacent to the axial line of the first-metal post; and a diameter of the inwardly-recessed hole decreases as approaching the first segment.

In one embodiment, the conductive structure further includes a second metal strip, the second metal strip is disposed on a circumferential surface of the second segment and disposed away from the first segment, and the second metal strip extends in a looped shape along a circumferential line of the second segment.

In one embodiment, the conductive structure is a pole of a battery cell, and at least an end portion of the flange is configured to be located on a side of a cover plate of the battery cell facing away from an electrode assembly of the battery cell.

In one embodiment, the second end of the first-metal post is provided with extension portions extending toward the first end, the extension portions at least wrap a part of an end portion of the second-metal layer.

In one embodiment, at least two sides of the second-metal layer are wrapped by the extension portion, and thicknesses of two of the extension portions are different.

In one embodiment, the first-metal post includes a first segment and a second segment connected in sequence, an outer diameter of the first segment is less than an outer diameter of the second segment, the second segment includes a first surface adjacent to the first segment, an end of the first segment away from the second segment is the first end, and an end of the second segment away from the first segment is the second end; and an end of the extension portions is connected to a circumferential surface of the second segment, and another end of the extension portions extends toward the first end.

In one embodiment, a diameter of the second segment is defined as $\varphi d$, along a radial direction of the first-metal post, a thickness of each of the extension portions is defined as Dd, satisfying: $0 < Dd \leq 0.3\varphi d$.

In a second aspect, embodiments of the present application also provide a manufacturing method of a conductive structure, including:

provide a blank material, the blank material including a first layer and a second layer, the first layer including a first metal, and the second layer including a second metal;

placing the blank material in a mold cavity of a first cold heading mold, and keeping the first layer and the second layer sequentially stacked along a direction from the outside to the inside of the mold cavity; and

performing a first cold heading treatment on the blank material, such that when the first layer presses the second layer by means of high-force constraint of the first cold heading mold, the first layer deforms and penetrates into the second layer, and the second layer is thinned and extends toward a peripheral side of the first layer.

In one embodiment, in the blank material, the first layer and the second layer are stacked and bonded together.

In one embodiment, the providing the blank material includes:

providing a composite plate, the composite plate including the first layer and the second layer stacked and bonded together; and

performing die cutting on the composite plate to obtain the blank material.

In one embodiment, the manufacturing method of the conductive structure further includes: before placing the blank material in the mold cavity, screening the blank material such that the second layer faces a bottom wall of the mold cavity when the blank material is fed into the mold cavity.

In one embodiment, the manufacturing method of the conductive structure further includes: after performing the first cold heading treatment on the blank material, placing the blank material in a second cold heading mold, and pressing a side surface of the first layer facing away from the second layer.

In a third aspect, embodiments of the present application also provide a cover plate assembly, including:

a cover plate; and the aforementioned conductive structure or the conductive structure obtained through the manufacturing method mentioned of the conductive structure. The conductive structure is provided penetrating the cover plate.

In one embodiment, the conductive structure is a pole, or the conductive structure is a pole and a terminal pressing block integrated with each other; and the cover plate assembly further includes a current collector, and the current collector is located on a side of the cover plate and welded to the conductive structure.

In one embodiment, the cover plate assembly further includes:

a first insulating member disposed between the conductive structure and the cover plate; and
a second insulating member disposed between the cover plate and the current collector; and/or
the cover plate assembly further includes a sealing member, and the sealing member is disposed between the cover plate and the conductive structure.

In one embodiment, the sealing member is located on a side of the cover plate adjacent to the first insulating member; alternatively, the sealing member is located on a side of the cover plate adjacent to the second insulating member.

In one embodiment, a surface of the first insulating member facing away from the cover plate is provided with an air-exhausting groove, and both ends of the air-exhausting groove extend to an inner circumferential surface and an outer circumferential surface of the first insulating member, respectively.

In one embodiment, the first-metal post includes a first segment and a second segment connected to each other, an outer diameter of the first segment is less than an outer diameter of the second segment; an end of the first segment away from the second segment is the first end, and an end of the second segment away from the first segment is the second end; the second-metal layer includes a barrel body and a flange, the barrel body wraps the first segment, the flange is connected to an end portion of the barrel body adjacent to the second segment, the flange extends in a radial direction of the conductive structure and embedded in an end surface of the second segment facing the first segment; the second segment and the flange are located on a side of the first insulating member facing away from the cover plate; the second segment includes a first surface adjacent to the first segment, the first surface includes a first region located on an outer peripheral side of the flange; a surface of the flange facing away from the second segment is a second region; and a height difference is presented between the first region and the second region, and both the first region and the second region are connected with the first insulating member in a pressing manner.

In one embodiment, along an axial direction of the first-metal post, the first region is outwardly protruded along an axial direction of the conductive structure to form the height difference, and a thickness dimension of the first region protruding relative to the second region is defined as Ha1, and a thickness of the second segment in the axial direction of the conductive structure is defined as Da, satisfying: $0 < Ha1 \leq 15\%Da$.

In one embodiment, $2\%Da \leq Ha1 \leq 15\%Da$.

In one embodiment, along an axial direction of the first-metal post, the second region is outwardly protruded along an axial direction of the conductive structure to form the height difference, and a thickness dimension of the second region protruding relative to the first region is Ha2, and a thickness of the second segment in the axial direction of the conductive structure is defined as Da, satisfying: $0 < Ha2 \leq 15\%Da$.

In one embodiment, $2\%Da \leq Ha2 \leq 15\%Da$.

In one embodiment, the first region is outwardly protruded along an axial direction of the conductive structure to form a first protruding portion, and the first protruding portion extends in a looped shape along a circumferential direction of the conductive structure; or the second region is outwardly protruded along the axial direction of the conductive structure to form a second protruding portion, and the second protruding portion extends in a looped shape along the circumferential direction of the conductive structure.

In one embodiment, the conductive structure further includes a bottom plate; the second-metal layer includes a barrel body, and the barrel body wraps the first end and extends toward the second end; and the bottom plate is connected with an end of the barrel body away from the second end.

In one embodiment, the bottom plate is sleeved on the barrel body and riveted to the barrel body; and the end of the barrel body away from the second end is provided with a pre-punched hole, and a hole diameter of the pre-punched hole gradually increases along a direction away from the second end.

In one embodiment, a stepped groove b is formed at the end of the barrel body away from the second end, the stepped groove b extends in a looped shape along a circumferential direction of the barrel body, and the bottom plate is sleeved in the stepped groove b.

In one embodiment, the bottom plate is welded to the barrel body.

In one embodiment, the first-metal post includes a first segment and a second segment connected to each other, an outer diameter of the first segment is less than an outer diameter of the second segment, an end of the first segment away from the second segment is the first end, and an end of the second segment away from the first segment is the second end; the second-metal layer includes a barrel body, and the barrel body wraps the first segment; and the second segment is configured to be located outside a battery cell, and an end of the barrel body away from the second segment is configured to be connected with a current collector, such that the conductive structure is clamped onto the cover plate of the battery cell through the current collector and the second segment.

In a fourth aspect, embodiments of the present application also provide a battery cell, including:

> a shell including an accommodating cavity;
> an electrode assembly disposed in the accommodating cavity and including a tab; and
> the aforementioned cover plate assembly connected to the shell and closing an opening of the accommodating cavity. The conductive structure is connected to the tab.

Beneficial effects of the embodiments of the present application are as follows:

In the embodiments of the present application, the second-metal layer bonded to the surface of the first end of the first-metal post is arranged to extend from the surface of the first end of the first-metal post to the second end, that is, an end surface of the first end of the first-metal post and at least part of a side surface of the first-metal post are covered by the second-metal layer. Compared to the form where the second-metal layer is only set on the end surface of one end of the first-metal post, in the embodiments of the present application, a bonding area between the second-metal layer and the first-metal post is effectively increased, the overcurrent capacity of the conductive structure is ensured, the bonding strength between the second-metal layer and the first-metal post is improved, and the risk of the second-metal layer detaching is reduced.

BRIEF DESCRIPTION OF THE DRAWINGS

In order to more clearly illustrate the technical proposals in the embodiments of the present application, the accompanying drawings that need to be used in the description of the embodiments will be briefly introduced below. Apparently, the accompanying drawings in the following description are only some embodiments of the present application, and for those skilled in the art, other accompanying drawings may be obtained from these accompanying drawings without making creative labor.

FIG. 1 is schematic diagram of a front-viewing structure of a first conductive structure provided in embodiments of the present application.
FIG. 2 is a schematic diagram of a sectional structure of the conductive structure in FIG. 1.
FIG. 3 is an enlarged view of portion A in FIG. 2.
FIG. 4 is a schematic diagram of a front-viewing structure of a second conductive structure provided in embodiments of the present application.
FIG. 5 is a schematic diagram of a sectional structure of the conductive structure in FIG. 4.
FIG. 6 is a schematic diagram of a three-dimensional structure of a third conductive structure provided in embodiments of the present application.
FIG. 7 is a schematic diagram of a sectional structure of the conductive structure in FIG. 6.
FIG. 8 is a schematic diagram of a sectional structure of a cover plate assembly formed by assembling the conductive structure in FIG. 6 on a cover plate.
FIG. 9 is an exploded view of the cover plate assembly in FIG. 8.
FIG. 10 is a schematic diagram of a sectional structure of a fourth conductive structure provided in embodiments of the present application.
FIG. 11 is an enlarged view of portion B in FIG. 10.
FIG. 12 is a schematic diagram of a sectional structure of a fifth conductive structure provided in embodiments of the present application.
FIG. 13 is an enlarged view of portion C in FIG. 12.
FIG. 14 is a schematic diagram of a sectional structure of a conductive module formed by assembling the conductive structure in FIG. 12 and a terminal pressing block.
FIG. 15 is a schematic diagram of a sectional structure of the terminal pressing block in FIG. 14.
FIG. 16 is a three-dimensional schematic diagram of a sixth conductive structure provided in embodiments of the present application.
FIG. 17 is a schematic diagram of a sectional structure of the conductive structure in FIG. 16.
FIG. 18 is an exploded view of a cover plate assembly formed by assembling the conductive structure in FIG. 16 on a cover plate.
FIG. 19 is a schematic diagram of a sectional structure of a seventh conductive structure provided in embodiments of the present application.
FIG. 20 is an enlarged view of portion D in FIG. 19.
FIG. 21 is a schematic diagram of a sectional structure of an eighth conductive structure provided in embodiments of the present application.
FIG. 22 is an enlarged view of portion E in FIG. 21.
FIG. 23 is a schematic diagram of a sectional structure of a ninth conductive structure provided in embodiments of the present application.
FIG. 24 is an enlarged view of portion F in FIG. 23.
FIG. 25 is a three-dimensional schematic diagram of a tenth conductive structure provided in embodiments of the present application from a viewing angle.
FIG. 26 is a three-dimensional schematic diagram of the conductive structure in FIG. 25 from another viewing angle.
FIG. 27 is a schematic diagram of a sectional structure of the conductive structure in FIG. 25.
FIG. 28 is an enlarged view of portion G in FIG. 27.
FIG. 29 is a structural schematic diagram of an eleventh conductive structure provided in embodiments of the present application.
FIG. 30 is an enlarged view of portion A in FIG. 29.
FIG. 31 is an enlarged view of another structure at portion A in FIG. 29 provided by embodiments of the present application.
FIG. 32 is a schematic diagram of forging flow lines of a first-metal post provided in embodiments of the present application.
FIG. 33 is a structural schematic diagram of a twelfth conductive structure provided in embodiments of the present application.
FIG. 34 is a structural schematic diagram of a second-metal layer provided in embodiments of the present application.
FIG. 35 is a structural schematic diagram of another second-metal layer provided in embodiments of the present application.
FIG. 36 is an enlarged view of portion B in FIG. 29.
FIG. 37 is an enlarged view of another structure at portion B in FIG. 29.
FIG. 38 is a structural schematic diagram of a thirteenth conductive structure provided in embodiments of the present application.
FIG. 39 is a structural schematic diagram of a fourteenth conductive structure provided in embodiments of the present application.
FIG. 40 is a structural schematic diagram of a first cover plate assembly provided in embodiments of the present application.
FIG. 41 is a structural schematic diagram of a second cover plate assembly provided in embodiments of the present application.
FIG. 42 is a structural schematic diagram of a third cover plate assembly provided in embodiments of the present application.
FIG. 43 is a structural schematic diagram of a fourth cover plate assembly provided in embodiments of the present application.

FIG. 44 is a structural schematic diagram of a fifth cover plate assembly provided in embodiments of the present application.

FIG. 45 is a structural schematic diagram of a first insulating member provided in embodiments of the present application.

FIG. 46 is a structural schematic diagram of a fifteenth conductive structure provided in embodiments of the present application.

FIG. 47 is a structural schematic diagram of a sixteenth conductive structure provided in embodiments of the present application.

FIG. 48 is a structural schematic diagram of a seventeenth conductive structure provided in embodiments of the present application.

FIG. 49 is a structural schematic diagram of an eighteenth conductive structure provided in embodiments of the present application.

FIG. 50 is a schematic diagram of a sectional structure of a battery cell provided in embodiments of the present application.

FIG. 51 is a structural schematic diagram of a battery cell provided in embodiments of the present application.

Reference numerals are as follows:
10, conductive structure; 101, pole; 1011, second metal strip; 1012, inwardly-recessed hole; 1013, first surface; 1014, second surface; 1015, first region; 1016 second region; 1017, first protruding portion; 1018, second protruding portion; 1019, bottom plate; 102, terminal pressing block; 1, first-metal post; 14, first segment; 141, matching bottom wall; 15, second segment; 151, extension portion; 16, fitting groove; 161, first line segment; 162, second line segment; 163, third line segment; 164, fourth line segment; 165, fifth line segment; 166, sixth line segment; 17, bonding interface; 18, forging flow line; 19, bonding region; 191, compact region; 1911, first dense region; 1912, second dense region; 1913, third dense region; 192, metal mixing layer; 1921, first mixing portion; 1922, second mixing portion; 11, first end; 11, first stepped portion; 11b, groove; 12, second end; 13, boss; 2, second-metal layer; 27, barrel body; 271, matching groove; 272, stepped groove b; 273, pre-punched hole; 28, flange; 281, transition portion; 29, second gap; 20, end portion; 201, first extension segment; 202, second extension segment; 20a, first gap; 20b, end surface; 20c, transition surface; 203, supporting surface; 2031, inclined surface; 2032, step surface; 20321, first sub-step surface; 20322, second sub-step surface; 21, first section; 211, first sub-section; 212, second sub-section; 213, third sub-section; 22, second section; 23, third section; 24, fourth section; 25, fifth section; 251, inversely-clasping layer; 26, second stepped portion; 261, first step surface; 262, second step surface; 100, cover plate assembly; 110, cover plate; 112, first insulating member;

1121, air-exhausting groove; 113, second insulating member; 114, mounting hole; 115, liquid-injecting hole; 120, current collector; 121, protruding bump; 130, sealing member; 140, explosion-proof valve; 1000, battery cell; 1100, shell; 1110, accommodating cavity; 1200, electrode assembly; 1210, tab.

DETAILED DESCRIPTION

Technical proposals in embodiments of the present application will be described clearly and completely below in conjunction with the accompanying drawings in the embodiments of the present application, and it is apparent that described embodiments are only some of the embodiments and not all of the embodiments of the present application. Based on the embodiments of the present application, all other embodiments obtained by those skilled in the art without creative work fall within the protection scope of the present application.

In addition, it should be understood that specific embodiments described herein are only used to explain and illustrate the present application and are not intended to limit the present application. In the present application, unless otherwise specified, orientational terms used such as "upper" and "lower" usually refer to upper and lower positions of a device in actual use or working state, and specifically orientations in the drawings, while the terms "inside" and "outside" refer to a position relative to an outline of the device.

Terms such as "first" and "second" are used herein for purposes of description, and should not be interpreted as indication or implication of relative importance, or implied indication of a number of the technical features. Thus, features defined by "first" and "second" may explicitly or implicitly include one or more of the features. In the description of the present application, "plurality of" means two or more, unless expressly and specifically defined otherwise.

In the description of the present application, it is to be noted that, unless expressly stated and defined otherwise, the terms "install", "communicate", and "connect" are to be understood in a broad sense, for example, as a fixed connection, as a detachable connections, or integral connections connection, as an mechanical connection, as an electrical connection, as an communication with each other, as an direct connection, as an indirect connection by means of an intermediate medium, as an internal communication of two elements, or as an interaction of two elements. For those ordinary skilled in the art, the specific meanings of the above terms in the present application can be understood on a case-by-case basis.

The terms "include", "comprise", or any of their variations are intended to encompass non-exclusive inclusion, thereby meaning that a process, method, article, or device that includes a series of elements not only includes those elements but also includes other elements not explicitly listed, or elements inherent to such a process, method, article, or device. Without further limitation, an element defined by the statement "comprising a/an" does not exclude the possibility of additional identical elements being present in the process, method, article, or device that includes the said element.

In the description of embodiments of the present application, words such as "for example" or "such as" are used to indicate illustration, explanation, or description. Any embodiment or design described as "for example" or "such as" in the embodiments of the present application should not be construed as being preferable or having more advantages compared to another embodiment or design. The use of words "for example", "such as", etc. is intended to present relative concepts in a clear manner.

In order to facilitate the understanding of the proposals of the present application, the spline curves and arrows used in the drawings are explained as follows: components indicated by spline curves without arrows are solid components, i.e., components with a solid structure; components indicated by spline curves with arrows are virtual components, i.e., components without a solid structure.

Since a composite pole includes metal layers of different materials, the thermal expansion coefficients of different metals are usually different, resulting in a decrease in the bonding force between the metal layers in the composite pole under high-temperature working conditions, making them prone to separation and detachment. Moreover, the bonding force between the metal layers in the composite pole is affected by a bonding area, and when a diameter of the composite pole is relatively small, the metal layer in the composite pole are also prone to detachment.

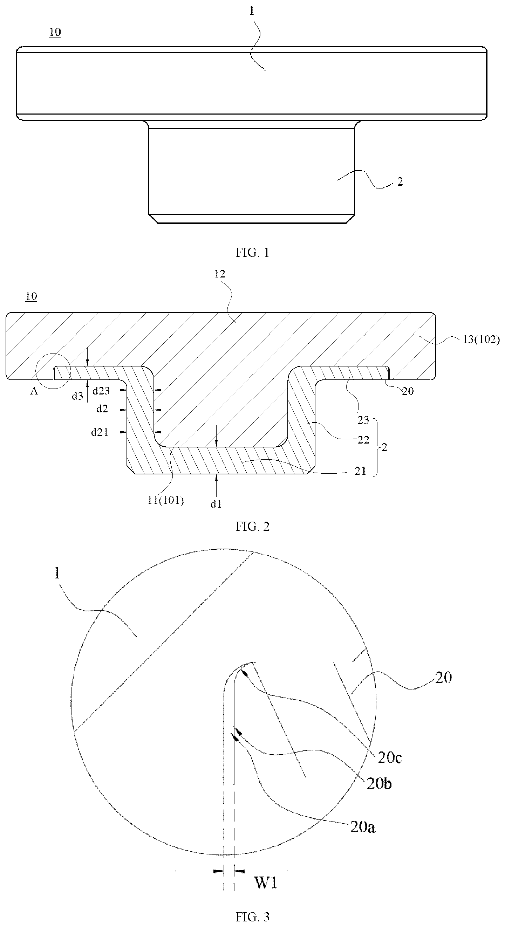

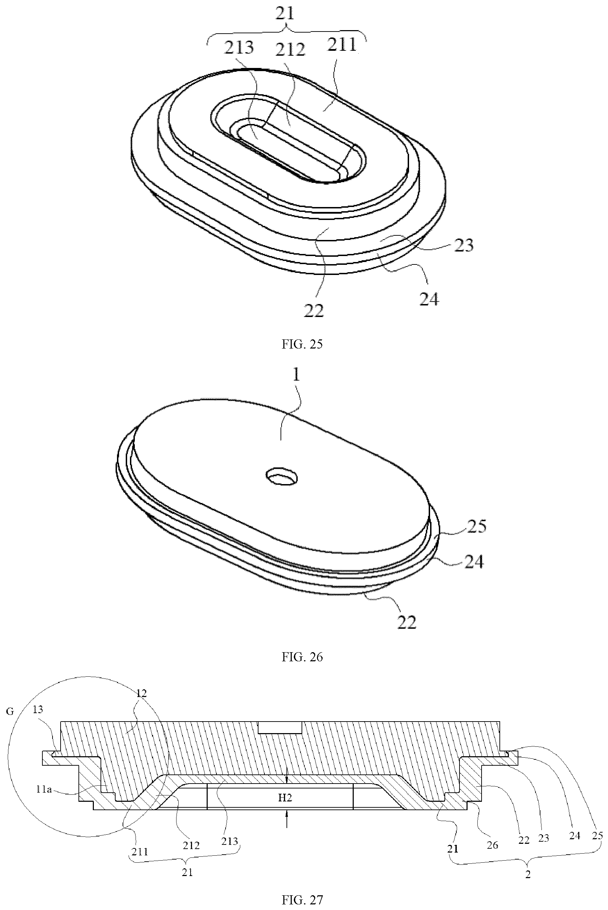

In view of the problem of the metal layer in the composite pole easily detaching, leading to the failure of a battery core, embodiments of the present application provide a conductive structure, a manufacturing method of a conductive structure, a cover plate assembly, and a battery cell, as shown in FIG. 1 to FIG. 51.

In a first aspect, embodiments of the present application provide a conductive structure. The conductive structure is configured to connect an internal circuit of a battery cell with a circuit external to the battery cell (referred to as an external circuit for short), thereby enabling communication between the battery cell and the external circuit, which facilitates the external circuit supplying power to the battery cell (i.e., charging the battery cell) or the battery cell supplying power to the external circuit (i.e., discharging the battery cell). Specifically, the conductive structure may be used to be assembled onto a cover plate of the battery cell.

Specifically, referring to FIG. 1 to FIG. 28, the conductive structure 10 includes a first-metal post 1 and a second-metal layer 2, and the second-metal layer 2 is bonded to a surface of the first-metal post 1. The first-metal post 1 has two ends opposite to each other, namely a first end 11 and a second end 12, respectively. The second-metal layer 2 wraps the first end 11 and extends toward the second end 12.

Optionally, the second-metal layer 2 is configured to connect with a tab. The tab may be a tab welded to an electrode assembly or an uncoated region of a tab piece where no active material is applied.

The conductive structure 10 includes the first-metal post 1 and the second-metal layer 2. It can be understood that the first-metal post 1 may be a columnar structure, and a material of the first-metal post 1 includes a first metal. The second-metal layer 2 may be a layered structure, and a material of the second-metal layer 2 includes a second metal. The second metal and the first metal are different metals. Optionally, a conductivity of the second metal is greater than a conductivity of the first metal, that is, the conductivity of the second metal is better than the conductivity of the first metal. Optionally, the fluidity of the first metal is greater than the fluidity of the second metal. Optionally, the hardness of the second metal is better than the hardness of the first metal.

The second-metal layer 2 is bonded to the surface of the first-metal post 1, which means that the second-metal layer 2 is located on an outer surface of the first-metal post 1, and the second-metal layer 2 is also bonded to the first-metal post 1. The bonding here means that the second-metal layer 2 and the first-metal post 1 are not separated simply under the action of an internal force. For example, the second-metal layer 2 is physically bonded to the first-metal post 1. As an example, the second-metal layer 2 and the first-metal post 1 may be joined together by cold heading, or the second-metal layer 2 and the first-metal post 1 may be a composite metal plate.

It is understood that the second-metal layer 2 wraps a surface of the first end 11, and the second-metal layer 2 extends from the surface of the first end 11 toward the second end 12. The second-metal layer 2 extends from the first end 11 toward the second end 12, specifically, an end portion 20 of the second-metal layer 2 extends toward the second end 12, which may mean that the end portion 20 of the second-metal layer 2 extends to the second end 12, or the end portion 20 of the second-metal layer 2 extends to a position between the first end 11 and the second end 12. Optionally, the end portion 20 of the second-metal layer 2 extends to the second end 12, but the second-metal layer 2 does not completely wrap the second end 12, that is to say the second end 12 is at least partially exposed outside the second-metal layer 2 to facilitate a direct connection between the second end 12 and other components. The end portion 20 of the second-metal layer 2 refers to a portion at an edge of the second-metal layer 2. The second-metal layer 2 is configured to connect with the tab. It may either be a direct connection between the second-metal layer 2 and the tab, or the second-metal layer 2 may be connected to the tab through other intermediate components (e.g., a current collector 120). As an example, the second-metal layer 2 is configured to be welded to a current collector 120, and the current collector 120 is welded to the tab. The tab refers to a metal conductor that leads positive and negative electrodes out of a battery cell (i.e., a battery core). As an example, the current collector 120 includes at least one of a current collecting plate and a connecting piece.

When the conductive structure 10 is applied to the battery cell, the first end 11 of the first-metal post 1 faces the inside of the battery cell, and the second end 12 faces the outside of the battery cell. The second-metal layer 2 wraps the first end 11 of the first-metal post 1 and extends from the first end 11 toward the second end 12, so that the second-metal layer 2 can also serve as a protective layer to separate the first end 11 of the first-metal post 1 from the electrolyte in the battery cell, and reduce the risk of the first end 11 being corroded by the electrolyte.

In the conductive structure 10 provided in embodiments of the present application, the second-metal layer 2 bonded to the surface of the first-metal post 1 is arranged to extend from the surface of the first end 11 of the first-metal post 1 toward the second end 12, that is, an end surface of the first end 11 of the first-metal post 1 and at least part of a side surface of the first-metal post 1 are covered by the second-metal layer 2. Compared to the form where the second-metal layer 2 is only set on the end surface of one end of the first-metal post 1, in the embodiments of the present application, a bonding area between the second-metal layer 2 and the first-metal post 1 is effectively increased, the overcurrent capacity (referred to as the overcurrent capacity) of the conductive structure 10 is ensured, the bonding strength between the second-metal layer 2 and the first-metal post 1 is improved, and the risk of the second-metal layer 2 detaching is reduced.

In addition to increasing the bonding area between the second-metal layer 2 and the first-metal post 1, the second-metal layer 2 is provided so as to extend from the first end 11 of the first-metal post 1 toward the second end 12, thereby shortening a distance between the second-metal layer 2 and the second end 12, and thus shortening a current flow path and improving the overcurrent capability of the conductive structure 10.

In some embodiments, referring to FIG. 2, FIG. 5, FIG. 7, FIG. 10, FIG. 15, FIG. 17, FIG. 19, FIG. 21, FIG. 23, and FIG. 27, the second-metal layer 2 and the first-metal post 1 are cooperated with each other in an embedding manner. It can be that a part of the second-metal layer 2 is embedded in the first-metal post 1, or a part of the first-metal post 1 is embedded in the second-metal layer 2. By matching the second-metal layer 2 and the first-metal post 1 in an embedding manner, the bonding area between the second-metal layer 2 and the first-metal post 1 can be increased to a certain extent, thereby enhancing the overcurrent capability of the conductive structure 10 and reducing the risk of separation between the second-metal layer 2 and the first-metal post 1.

In some embodiments, referring to FIG. 2, FIG. 5, FIG. 7, FIG. 10, FIG. 15, FIG. 17, and FIG. 19, the end portion 20 of the second-metal layer 2 is embedded in the first-metal post 1. Since the bonding between the end portion 20 of the second-metal layer 2 and the first-metal post 1 is usually easy to form a weak point, by embedding the end portion 20 of the second-metal layer 2 in the first-metal post 1, the bonding area between the end portion 20 of the second-metal layer 2 and the first-metal post 1 is increased, thereby improving the overcurrent capacity and enhancing the bonding strength. In addition, the end portion 20 of the second-metal layer 2 is hidden in the first-metal post 1, an external force are less likely to scrape the end portion 20 of the second-metal layer 2, thereby reducing the risk of the second-metal layer 2 detaching. The end portion 20 of the second-metal layer 2 is embedded in the first-metal post 1, which may means that the end portion 20 of the second-metal layer 2 is partially embedded in the first-metal post 1, or the end portion 20 of the second-metal layer 2 is entirely embedded in the first-metal post 1.

In some embodiments, referring to FIG. 2 and FIG. 3, there is a first gap 20a between the end portion 20 of the second-metal layer 2 and the first-metal post 1. Since the material of the first-metal post 1 is the first metal, the material of the second-metal layer 2 is the second metal, the first metal is different from the second metal, and the thermal expansion coefficients between different metals are different, so that under high-temperature conditions, the first gap 20a can provide a buffer space for the one with a larger volume expansion of the first-metal post 1 and the second-metal layer 2, and a tight fit between the end portion 20 of the first-metal post 1 and the second-metal layer 2 is ensured, thereby reducing the risk of the second-metal layer 2 being separated from the first-metal post 1 due to volume expansion.

In some embodiments, referring to FIG. 3, an average dimension W1 of the first gap 20a between the end portion 20 of the second-metal layer 2 and the first-metal post 1 is less than 0.1 mm. The average dimension W1 refers to an average distance between the end portion 20 of the second-metal layer 2 and the first-metal post 1. The average dimension W1 should not be too large, otherwise the bonding effect of the first-metal post 1 and the second-metal layer 2 may be affected, and it is difficult to achieve tightness between the end portions 20 of the first-metal post 1 and the second-metal layer 2 at high temperatures. As an example, W1 may be 0.01 mm, 0.02 mm, 0.03 mm, 0.04 mm, 0.05 mm, 0.06 mm, 0.07 mm, 0.08 mm, 0.09 mm, or 0.1 mm.

In some embodiments, referring to FIG. 3, an end surface 20b and a transition surface 20c are formed on the end portion 20 of the second-metal layer 2, and the end surface 20b and the transition surface 20c are sequentially connected. Between the second-metal layer 2 and the first-metal post 1, the first gap 20a is formed only between the end surface 20b and the transition surface 20c and the first-metal post 1. A side of the end surface 20b away from the transition surface 20c is connected to an outer surface of the second-metal layer 2, and the transition surface 20c is curved and transitioned from the end surface 20b onto the first-metal post 1. The outer surface of the second-metal layer 2 refers to the surface of the second-metal layer 2 exposed outside, and typically the outer surface of the second-metal layer 2 faces away from the first-metal post 1. As an example, the transition surface 20c is an arc-shaped curved surface, and a distance between the transition surface 20c and the first-metal post 1 decreases in a direction approaching the first-metal post 1. By forming the first gap 20a only between the end surface 20b and the transition surface 20c and the first-metal post 1, the bonding area between the second-metal layer 2 and the first-metal post 1 is ensured.

In some embodiments, the end portion 20 of the second-metal layer 2 may also be disposed so as not to be embedded in the first-metal post 1.

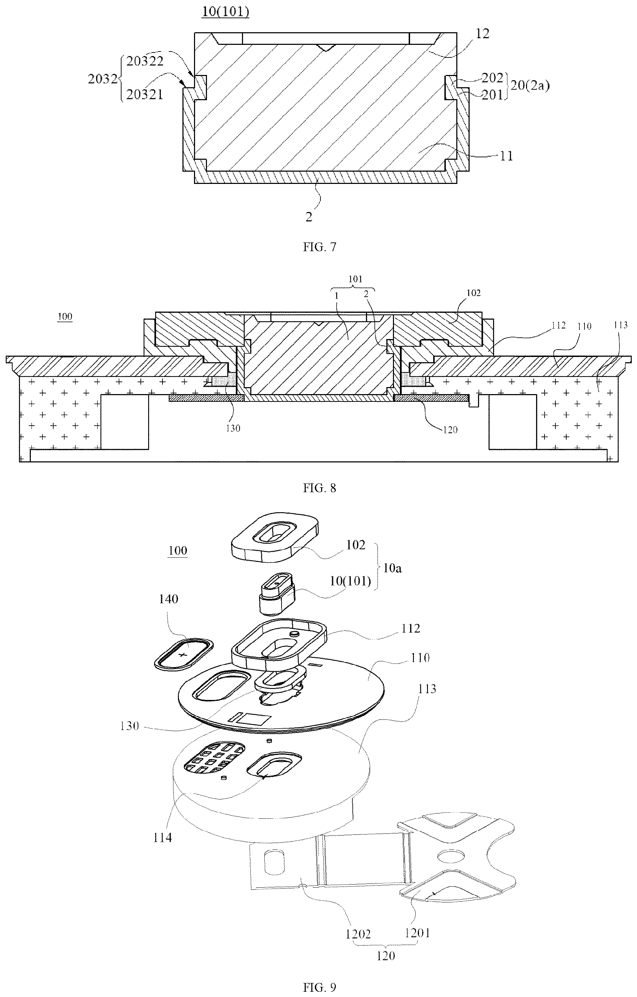

In some embodiments, referring to FIG. 7, the end portion 20 of the second-metal layer 2 includes a first extension segment 201 and/or a second extension segment 202. The first extension segment 201 refers to a portion of the end portion 20 of the second-metal layer 2 extending in a first direction, and the second extension segment 202 refers to a portion of the end portion 20 of the second-metal layer 2 extending in a second direction, where the first direction intersects the second direction. Optionally, the first direction and the second direction are perpendicular to each other. As an example, the first direction is a radial direction of the first-metal post 1, and the second direction is an axial direction of the first-metal post 1. That is, the end portion 20 of the second-metal layer 2 may extend in different directions on the surface or inside the first-metal post 1, may extend linearly, or may extend in a bending manner.

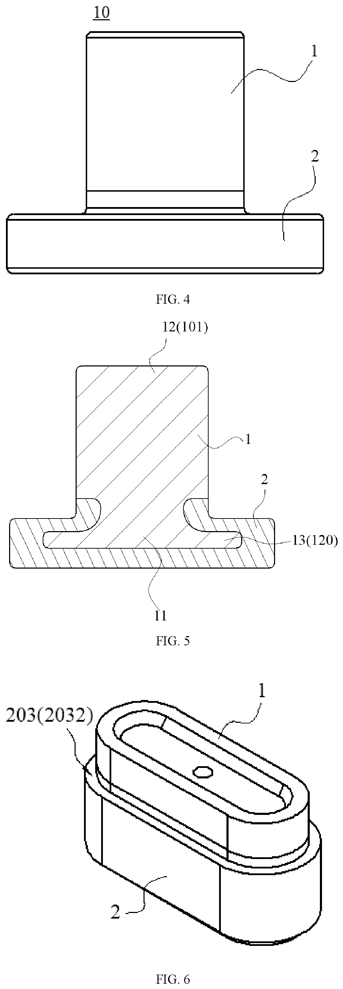

In some embodiments, referring to FIG. 6 to FIG. 15, the conductive structure 10 is a pole 101. A supporting surface 203 is formed on the end portion 20 of the second-metal layer 2, and the supporting surface 203 is configured to support a terminal pressing block 102. That is, the pole 101 and the terminal pressing block 102 are provided separately. Both the pole 101 and the terminal pressing block 102 are components in the battery cell. The pole 101 is usually partially located inside the battery cell and connected to an electrode assembly, and partially located outside the battery cell, and the terminal pressing block 102 is located outside the battery cell and connected to the pole 101. The terminal pressing block 102 fixes the pole 101 to the cover plate 110, and the terminal pressing block 102 can also be configured to be electrical connected with an external structure, for example, the terminal pressing block 102 is connected to a module bus bar. The end portion 20 of the second-metal layer 2 is provided with the supporting surface 203, and the supporting surface 203 is configured to support the terminal pressing block 102. Specifically, the supporting surface 203 is connected to an outer side surface of the second-metal layer 2, and the outer surface of the second-metal layer 2 includes the outer side surface of the second-metal layer 2 and the supporting surface 203, that is, the supporting surface 203 is a part of the outer surface of the second-metal layer 2. Optionally, the supporting surface 203 may be at least one of a step surface, a flat surface, and an arc surface. When the pole 101 is connected to the terminal pressing block 102, the terminal pressing block 102 is supported on the supporting surface 203. When a gap between the pole 101 and the terminal pressing block 102 is welded by laser welding, the supporting surface 203 may serve as a bottom surface of the gap and block the laser light during welding, thereby reducing the risk of laser penetration.

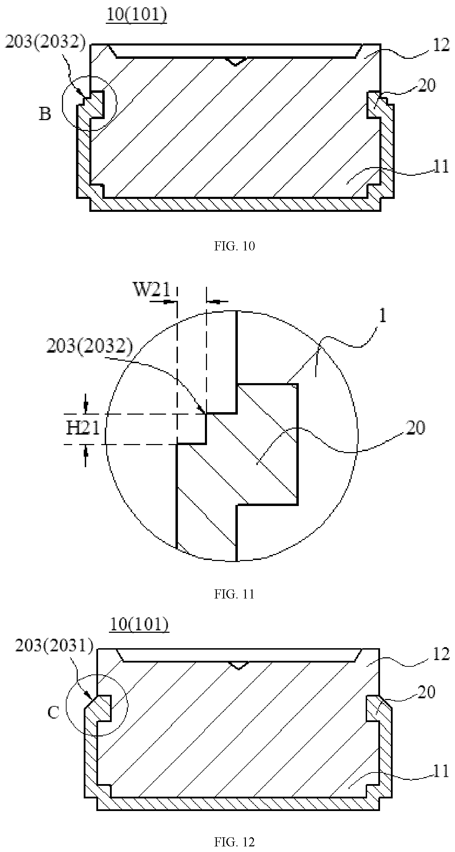

In some embodiments, referring to FIG. 12 to FIG. 15, the supporting surface 203 is an inclined surface 2031, and in a direction away from the first end 11, the inclined surface 2031 gradually approaches an outer side surface of the first-metal post 1 from the outer side surface of second-metal layer 2. The inclined surface 2031 may be an inclined flat surface or an inclined curved surface. As an example, the inclined curved surface is an inclined arc surface, where the inclined arc surface may be an arc surface that arches in a direction away from the second-metal layer 2, and the inclined arc surface may be an arc surface that sinks in a direction towards the second-metal layer 2. By setting the supporting surface 203 as the inclined surface 2031, and by having the inclined surface 2031 gradually approach the first-metal post 1 in the direction away from the first end 11, the terminal pressing block 102, when supported on the inclined surface 2031, may generate an inward-pressing sub-force along a radial direction of the pole 101 on the inclined surface 2031. This causes the end portion 20 of the second-metal layer 2 to adhere more closely to the first-metal post 1, thereby reducing the risk of detachment of the second-metal layer 2.

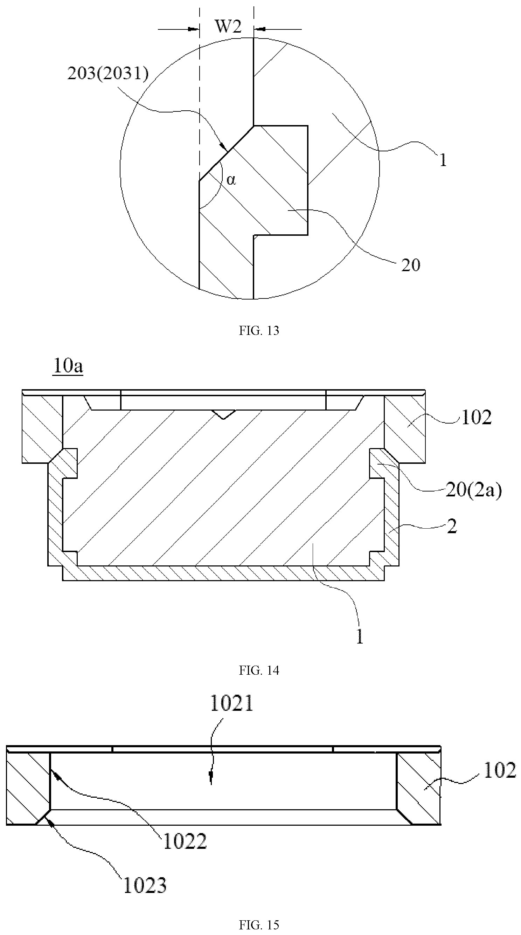

In some embodiments, referring to FIG. 13, the inclined surface 2031 is an inclined flat surface, and an included angle $\alpha$ between the inclined flat surface and the outer side surface of the second-metal layer 2 ranges from 110° to 130°. The included angle $\alpha$ within the aforementioned range allows the second-metal layer 2 and the first-metal post 1 to form a deformed interlocking bonding interface under the action of the inward-pressing sub-force along the radial direction and applied by the terminal pressing block 102, thereby enhancing the bonding effect between the second-metal layer 2 and the first-metal post 1. As an example, the included angle $\alpha$ may be 110°, 115°, 120°, 125°, or 130°.

In some embodiments, referring to FIG. 6 to FIG. 11, the supporting surface 203 is a step surface 2032, and the step surface 2032 includes a first sub-step surface 20321 and a second sub-step surface 20322 connected in sequence. The first sub-step surface 20321 refers to a surface extending in a first direction, and the second sub-step surface 20322 refers to a surface extending in a second direction, where the first direction intersects the second direction. Optionally, the first direction and the second direction are perpendicular to each other. As an example, the first direction is a radial direction of the first-metal post 1, and the second direction is an axial direction of the first-metal post 1. Optionally, the second sub-step surface 20322 and the first sub-step surface 20321 are both flat surfaces. A number of the second sub-step surfaces 20322 is greater than or equal to 1, and a number of the first sub-step surfaces 20321 is greater than or equal to 1. In other words, the number of the second sub-step surface 20322 may be one or a plurality, and the number of the first sub-step surface 20321 may be one or a plurality. Here, a plurality refers to two or more. When the number of the second sub-step surfaces 20322 is one and the number of the first sub-step surfaces 20321 is also one, the obtained step surface 2032 is a single-step surface. When the number of at least one of the second sub-step surface 20322 and the first sub-step surface 20321 is a plurality, the obtained step surface 2032 is a multi-step surface. As an example, the number of the second sub-step surfaces 20322 is two, and the number of the first sub-step surfaces 20321 is also two. In the single-step surface, the second sub-step surface 20322 and the first sub-step surface 20321 are sequentially connected to each other. In the multi-step surface, the second sub-step surfaces 20322 and the first sub-step surfaces 20321 are alternately connected in sequence. By setting the supporting surface 203 as the step surface 2032, the stability of the fit between the terminal pressing block 102 and the pole 101 can be improved, and the risk of laser penetration during laser welding can be reduced.

In some embodiments, referring to FIG. 11, in a radial direction of the pole 101, a width W21 of the first sub-step surface 20321 is greater than or equal to 0.2 mm. The width W21 of the first sub-step surface 20321 is not likely to be too small, otherwise the step surface is difficult to form and the step surface is prone to damage. As an example, the width W21 of the first sub-step surface 20321 is 0.2 mm, 0.3 mm, 0.4 mm, 0.5 mm, 0.6 mm, or 0.7 mm.

In some embodiments, referring to FIG. 11, along an axial direction of the pole 101, a height H21 of the second sub-step surface 20322 is greater than or equal to 0.2 mm. The height H21 of the second sub-step surface 20322 is not likely to be too small, otherwise the step surface is difficult to form and the step surface is prone to damage. As an example, the height H21 of the second sub-step surface 20322 is 0.2 mm, 0.3 mm, 0.4 mm, 0.5 mm, 0.6 mm, or 0.7 mm.

In some embodiments, referring to FIG. 13, in the radial direction of the pole 101, the width W2 of the supporting surface 203 is greater than or equal to 0.3 mm and is less than or equal to a thickness of the second-metal layer 2. In the radial direction of the pole 101, a maximum value of the width W2 of the supporting surface 203 is limited by the thickness of the second-metal layer 2, but a minimum value of the width W2 of the supporting surface 203 is related to the design of the supporting surface 203, and the minimum value should not be too small, otherwise it may affect the supporting effect of the supporting surface 203 on the terminal pressing block 102, and then affect the effect of the second-metal layer 2 on blocking the laser during laser welding. As an example, the width W2 of the supporting surface 203 is 0.3 mm, 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm.

In some embodiments, referring to FIG. 14, the conductive structure 10 is a pole 101. The pole 101 and the terminal pressing block 102 are connected to form a conductive module 10a, and the end portion 20 of the second-metal layer 2 is sandwiched between the first-metal post 1 and the terminal pressing block 102. The end portion 20 is formed as a clamping portion 2a, and the clamping portion 2a is sandwiched between the first-metal post 1 and the terminal pressing block 102. That is, a portion of the second-metal layer 2 is sandwiched between the first-metal post 1 and the terminal pressing block 102.

By clamping the portion of the second-metal layer 2 (i.e. the end portion 20) between the first-metal post 1 and the terminal pressing block 102, on the one hand, the first-metal post 1 and the terminal pressing block 102 limit the end portion 20 to prevent the second-metal layer 2 from being separated from the first-metal post 1; on the other hand, due to the ductility of metal, when the first-metal post 1 and the terminal pressing block 102 clamp the end portion 20, the first metal and the second metal mutually penetrate each other, so that the second-metal layer 2 and the first-metal post 1 are more tightly bonded. This dual action jointly reduces the risk of the second-metal layer 2 detaching from the first-metal post 1.

In some embodiments, referring to FIG. 15, a through hole 1021 is provided on the terminal pressing block 102, and the terminal pressing block 102 is sleeved on the pole 101 through the through hole 1021. That is, the pole 101 is provided penetrating the terminal pressing block 102 through the through hole 1021. As an example, an end of the pole 101 (specifically, the first end 11 of the first-metal post 1) extends into the through hole 1021, and the terminal pressing block 102 is sleeved on the end of the pole 101. By sleeving the terminal pressing block 102 on the pole 101, a height of the conductive module 10a can be appropriately lowered, and the terminal pressing block 102 can also limit the pole 101.

In some embodiments, the terminal pressing block 102 is sleeved on the first-metal post 1 through the through hole 1021. A part of a hole wall 1022 of the through hole 1021 may be in direct contact with the first-metal post 1, or the entire hole wall 1022 of the through hole 1021 may be in direct contact with the first-metal post 1, that is, there is no second-metal layer 2 between the hole wall 1022 of the through hole 1021 and the first-metal post 1. By sleeving the terminal pressing block 102 on the first-metal post 1 through the through hole 1021, it facilitates the terminal pressing block 102 and the first-metal post 1 to be welded, for example, to be welded together by means of laser welding.

In some embodiments, the through hole 1021 is in an interference fit with the pole 101. In this way, the tight fit between the terminal pressing block 102 and the pole 101 can be realized, and the thrust resistance and the torsion resistance of the pole 101 can be improved. At the same time, the interference fit mode does not need to introduce other connecting components, making the structure simple and the connection method highly reliable.

In some embodiments, the terminal pressing block 102 is riveted and fixed to the pole 101. As an example, the assembly process includes: inserting one end of the pole 101 into the through hole 1021 of the terminal pressing block 102, at which time the pole 101 and the through hole 1021 may be gap fitted, and then riveting the pole 101 and the through hole 1021 together by a press-riveting fixing process. In detail, during the press-riveting fixing process, the pole 101 can be pressed along the axial direction of the pole 101 by using a press-riveting machine, the pole post 101 is deformed during the process of being pressed, and the pole 101 contracts along the axial direction, but the pole 101 expands along the radial direction. At this time, a portion of the pole 101 located in the through hole 1021 fills the gap between the pole 101 and the through hole 1021 and squeeze the hole wall 1022 of the through hole 1021 to realize the interference fit between the pole 101 and the through hole 1021. A portion of the pole 101 located outside the through hole 1021 forms a stopping step fitted with the terminal pressing block 102, that is, the pole 101 is equivalent to a rivet, which improves the reliability of the connection between the terminal pressing block 102 and the pole 101, and reduces the risk of the pole 101 detaching from the terminal pressing block 102. Optionally, during the press-riveting fixing process, the terminal pressing block 102 is fixed by a clamping device, and the terminal pressing block 102 cannot be moved.

In some embodiments, referring to FIG. 15, a matching surface 1023 matching the supporting surface 203 is formed on the hole wall 1022 of the through hole 1021. When the supporting surface 203 is the inclined surface 2031, the matching surface 1023 is an inclined matching surface 1023 adapted to the inclined surface 2031. When the supporting surface 203 is the step surface 2032, the matching surface 1023 is the step-matching surface 1023 adapted to the step surface 2032. By utilizing the complementarity between the supporting surface 203 and the matching surface 1023, the stability of the matching between the terminal pressing block 102 and the pole 101 is effectively improved, and the risk of laser penetration during laser welding is reduced. In addition, when the supporting surface 203 is an inclined flat surface, the inclined flat surface being adapted to the matching surface 1023 can also play a guide role, further enhancing the reliability of the matching between the terminal pressing block 102 and the pole 101. In some embodiments, the clamping portion 2a is provided in a looped shape, and the clamping portion 2a is connected to a peripheral portion of the first-metal post 1. By providing the clamping portion 2a in the looped shape, a contact area between the clamping portion 2a and a circumferential surface of the first-metal post 1 can be increased, the bonding area between the second-metal layer 2 and the first-metal post 1 can be increased, the risk of the second-metal layer 2 detaching can be reduced, and the manufacturing difficulty of the pole 101 can be effectively reduced. Of course, in other embodiments, the clamping portion 2a may also be configured to include a plurality of protruding pieces, the plurality of protruding pieces are distributed at intervals around the peripheral portion of the first-metal post 1, and the protruding pieces are clamped between the first-metal post 1 and the terminal pressing block 102.

In some embodiments, referring to FIG. 1 to FIG. 5 and FIG. 16 to FIG. 28, the first-metal post 1 is radially protruded to form a boss 13, and the second-metal layer 2 extends at least onto the boss 13. Specifically, the first-metal post 1 locally protrudes outward approximately along the radial direction of the first-metal post 1 to form the boss 13. Optionally, an angular deviation between the boss 13 and the radial direction of the first-metal post 1 is within $\pm 15°$. The second-metal layer 2 extends at least onto the boss 13, which may refer to that the end portion 20 of the second-metal layer 2 extends onto the boss 13, or the end portion 20 of the second-metal layer 2 extends beyond the boss 13, i.e., the boss 13 may be completely wrapped in the second-metal layer 2 or partially wrapped in the second-metal layer 2. When the end portion 20 of the second-metal layer 2 extends onto the boss 13, the end portion 20 of the second-metal layer 2 may be embedded in the boss 13 or may be only located on the surface of the boss 13.

As an example, referring to FIG. 2, the boss 13 is away from the first end 11, the end portion 20 of the second-metal layer 2 extends to a side of the boss 13 adjacent to the first end 11, and the end portion 20 of the second-metal layer 2 is embedded in the boss 13.

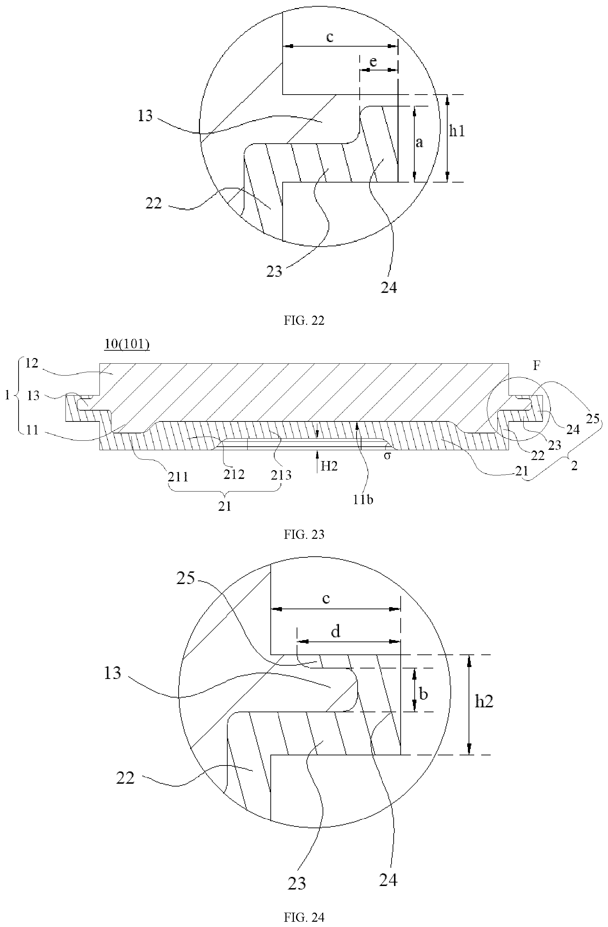

As an example, referring to FIG. 23, the boss 13 is away from the first end 11, and the end portion 20 of the second-metal layer 2 extends to a side of the boss 13 away from the first end 11.

By making the first-metal post 1 radially protrude to form the boss 13, an area of the outer surface of the first-metal post 1 can be increased by the boss 13, and the second-metal layer 2 also partially or even completely wraps the boss 13, so that the bonding area between the second-metal layer 2 and the first-metal post 1 is increased, thereby enhancing the bonding strength, reducing the risk of the second-metal layer 2 detaching from the first-metal post 1, and simultaneously improving the overcurrent capacity of the conductive structure 10.

In addition, when the conductive structure 10 is applied to a battery cell, the boss 13 can act as a stopping structure in a stopping fit with other components (such as a cover plate 110). At the same time, since the second-metal layer 2 extends at least to the boss 13, the second-metal layer 2 can be clamped between the boss 13 and the component in a stopping fit with the boss 13, thereby reducing the risk of the second-metal layer 2 detaching from the first-metal post 1.

In some embodiments, referring to FIG. 4 and FIG. 5, the boss 13 is located at the first end 11, and the boss 13 is completely encased within the second-metal layer 2. As an example, referring to FIG. 5, an outer shape of the conductive structure 10 is roughly a shape of an inverted T. When the conductive structure 10 is assembled to the cover plate 110, the smaller end of the conductive structure 10 can be inserted upward through a mounting hole 114 on the cover plate 110 until the boss 13 comes into contact with the cover plate 110, and the second-metal layer 2 on an upper surface of the boss 13 is clamped between the boss 13 and the cover plate 110 to prevent the second-metal layer 2 from detaching.

In some embodiments, referring to FIG. 4 and FIG. 5, the boss 13 is located at the first end 11. The second-metal layer 2 includes a first section and a second section. The first section corresponds to an end surface of the boss 13 (i.e., the first end 11), and the second section 22 covers at least a side surface of the boss 13 and a surface of a side of the boss 13 adjacent to the second end 12, i.e., the boss 13 is completely wrapped in the second-metal layer 2.

In some embodiments, referring to FIG. 4 and FIG. 5, the conductive structure 10 is a pole-current collector integrated structure, that is, the conductive structure 10 is a pole 101 and a current collector 120 integrated with each other, and the boss 13 is the current collector 120. By integrating the pole 101 and the current collector 120, the step of assembling the pole 101 and the current collector 120 can be omitted, reducing the production cost of the battery cell. In addition, since the second-metal layer 2 extends to the boss 13, that is, the second-metal layer 2 extends to the current collector 120, it is not necessary to increase the volume of the pole 101, and only by reusing the current collector 120, the bonding area of the second-metal layer 2 can be significantly increased, the risk of the second-metal layer 2 detaching can be reduced, and the overcurrent capacity of the conductive structure 10 can be improved without bringing the burden of volume and weight. The current collector 120 described above is also a component of the battery cell, and the current collector 120 is usually located inside the battery cell. That is, when the pole-current collector integrated structure is assembled on the battery cell, such as on the cover plate 110 of the battery cell, the boss 13 is positioned inside the battery cell. The current collector 120 is also configured to electrically connect with the tab of the electrode assembly.

In some embodiments, referring to FIG. 1 to FIG. 3 and FIG. 16 to FIG. 28, the boss 13 is away from the first end 11, and a radial dimension of the boss 13 is greater than a radial dimension of the first end 11. The boss 13 may be located at the second end 12 or may be located between the first end 11 and the second end 12. As an example, referring to FIG. 1, when the boss 13 is located at the second end 12, the outer shape of the conductive structure 10 is roughly a shape of an upright T. When the conductive structure 10 is assembled to the cover plate 110, the smaller end of the conductive structure 10 can be inserted downward through the mounting hole on the cover plate 110 until the boss 13 comes into contact with the cover plate 110, and the second-metal layer 2 on a lower surface of the boss 13 is clamped between the boss 13 and the cover plate 110 to prevent the second-metal layer 2 from detaching.

In some embodiments, referring to FIG. 1 to FIG. 3 and FIG. 16 to FIG. 20, the boss 13 is located at the second end 12, and the boss 13 is partially exposed outside the second-metal layer 2. The boss 13 is located at the second end 12. During the assembly of the conductive structure 10 and the cover plate 110, the boss 13 is generally located on an outer side of the cover plate 110. By setting the boss 13 to be partially exposed outside the second-metal layer 2, it facilitates the direct connection of the boss 13 with other components (such as the module bus bars).

In some embodiments, the conductive structure 10 is a pole-terminal pressing block integrated structure, that is, the conductive structure 10 is a pole 101 and a terminal pressing block 102 integrated with each other, and the boss 13 is the terminal pressing block 102. By integrating the pole 101 and the terminal pressing block 102, the step of assembling the pole 101 and the terminal pressing block 102 can be omitted, reducing the production cost of the battery cell. In addition, since the second-metal layer 2 extends to the boss 13, that is, the second-metal layer 2 extends to the terminal pressing block 102, it is not necessary to increase the volume of the pole 101, and only by reusing the terminal pressing block 102, the bonding area of the second-metal layer 2 can be significantly increased, the risk of the second-metal layer 2 detaching can be reduced, and the overcurrent capacity of the conductive structure 10 can be improved without bringing the burden of volume and weight. When the pole-terminal pressing block integrated structure is assembled on the battery cell, for example, on the cover plate 110 of the battery cell, the boss 13 is located outside the battery cell.

In some embodiments, referring to FIG. 2 and FIG. 16 to FIG. 28, the second-metal layer 2 includes a first section 21, a second section 22, and a third section 23. The first section 21 corresponds to an end surface of the first end 11, the second section 22 corresponds to a side surface of the first end 11, the third section 23 corresponds to a side surface of the boss 13 adjacent to the first end 11, and the second section 22 connects the first section 21 with the third section 23. The first section 21, the second section 22, and the third section 23 refer to three different portions of the second-metal layer 2. The end portion 20 of the second-metal layer 2 may be located in the third section 23, or may not be located in the third section 23. When the end portion 20 of the second-metal layer 2 is not located in the third section 23, it is meant that the second-metal layer 2 also includes other sections, i.e. other portions. Optionally, a number of sections of the second-metal layer 2 is less than or equal to five, as more sections lead to greater manufacturing difficulty and higher costs.

By setting the second-metal layer 2 to include at least three sections, the first section 21 and the second section 22 can wrap the first end 11 to protect the first end 11, and the risk of the first end 11 being corroded by the electrolyte is reduced. The third section 23 extends to the surface of the boss 13, which can further increase the bonding area of the second-metal layer 2, improve the overcurrent capacity of the conductive structure 10, and reduce the risk of the second-metal layer 2 detaching.

In some embodiments, referring to FIG. 2, FIG. 17, and FIG. 19, the third section 23 is formed as the end portion 20 of the second-metal layer 2, and the third section 23 is embedded in the boss 13. By setting the second-metal layer 2 to include only three sections, the manufacturing difficulty of the conductive structure 10 can be reduced. At the same time, the third section 23, which serves as the end portion 20 of the second-metal layer 2, is also embedded in the boss 13, thereby increasing the bonding area and ensuring the bonding strength of the second-metal layer 2. This allows the conductive structure 10 to achieve a higher cost performance. In addition, in this way, under high-temperature conditions, when the third section 23 expands, the first-metal post 1 can limit the third section 23 from both ends of the third section 23, allowing the third section 23 to better achieve a tight fit with the first-metal post 1 and enhancing the bonding strength of the second-metal layer 2.

In some embodiments, referring to FIG. 2, an average thickness d1 of the first section 21 is greater than an average thickness d2 of the second section 22, and the average thickness d2 of the second section 22 is greater than an average thickness d3 of the third section 23. That is, the first section 21, the second section 22, and the third section 23 satisfy the following thickness relationship: d1 > d2 > d3. When the conductive structure 10 is applied to the battery cell 1000, the first end 11 of the first-metal post 1 is oriented towards the interior of the battery cell 1000. In terms of the probability of contacting the electrolyte, the probability of the first section 21 is greater than the probability of the second section 22, and the probability of the second section 22 is greater than the probability of the third section 23. By setting the first section 21, the second section 22, and the third section 23 so that the average thickness of the first section 21, the average thickness of the second section 22, and the average thickness of the third section 23 to decrease sequentially, the risk of the first end 11 being corroded by the electrolyte can be reduced while controlling costs.

In some embodiments, referring to FIG. 2, the average thickness d2 of the second section 22 is greater than half of the average thickness d1 of the first section 21. Within this range, the second-metal layer 2 has both mechanical strength and cost advantages. As an example, a ratio of d2 to d1 is 0.5, 0.6, 0.7, 0.8, or 0.9.

In some embodiments, referring to FIG. 2, the average thickness d3 of the third section 23 is greater than half of the average thickness d2 of the second section 22. Within this range, the second-metal layer 2 has both mechanical strength and cost advantages. As an example, a ratio of d3 to d2 is 0.5, 0.6, 0.7, 0.8, or 0.9.

In some embodiments, referring to FIG. 2, a thickness d23 of a portion of the second section 22 adjacent to the third section 23 is greater than a thickness d21 of a portion of the second section adjacent 22 adjacent to the first section 21. In this way, the portion of the second section 22 adjacent to the third section 23 ,can function as a reverse lock, enhancing the bonding strength between the second-metal layer 2 and the first metal column 1 at this position.

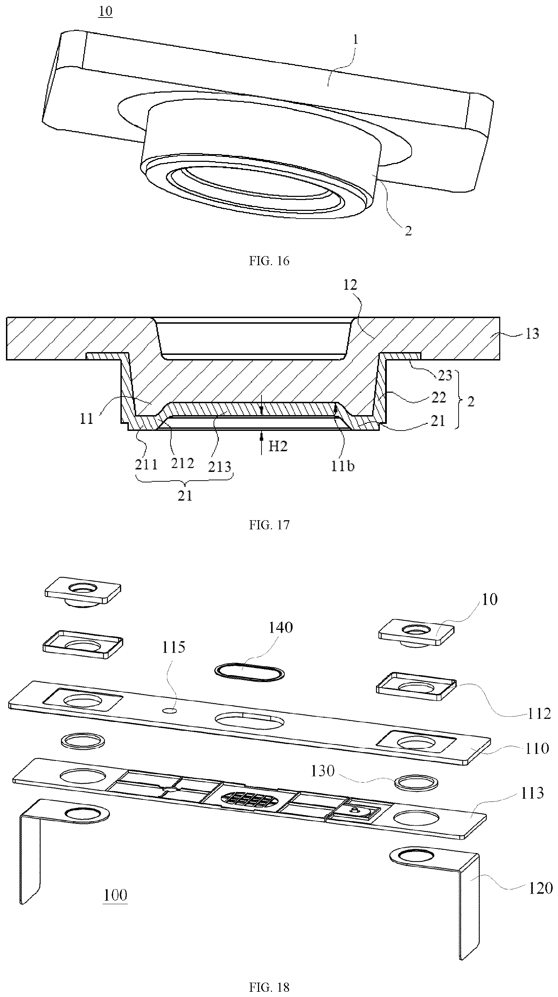

In some embodiments, referring to FIG. 17 and FIG. 21 to FIG. 28, the end surface of the first end 11 is locally recessed to form a groove 11b. The first section 21 includes a first sub-section 211, a second sub-section 212, and a third sub-section 213 connected in sequence. The first sub-section 211 is located outside the groove 11b, the second sub-section 212 is located on a sidewall of the groove 11b, and the third sub-section 213 is located on a bottom wall of the groove 11b. The "recessed" here refers to "recessed toward the interior of the first-metal post 1". The end surface of the first end 11 forms the groove 11b, and the second-metal layer 2 also matches the surface of the first end 11 to form the second sub-section 212 and the third sub-section 213 that fit the inner wall surface of the groove 11b. By providing the groove 11b on the end surface of the first end 11, and attaching the second-metal layer 2 to the inner wall surface of the groove 11b, the bonding area between the second-metal layer 2 and the first-metal post 1 is increased, and the bonding strength is improved.

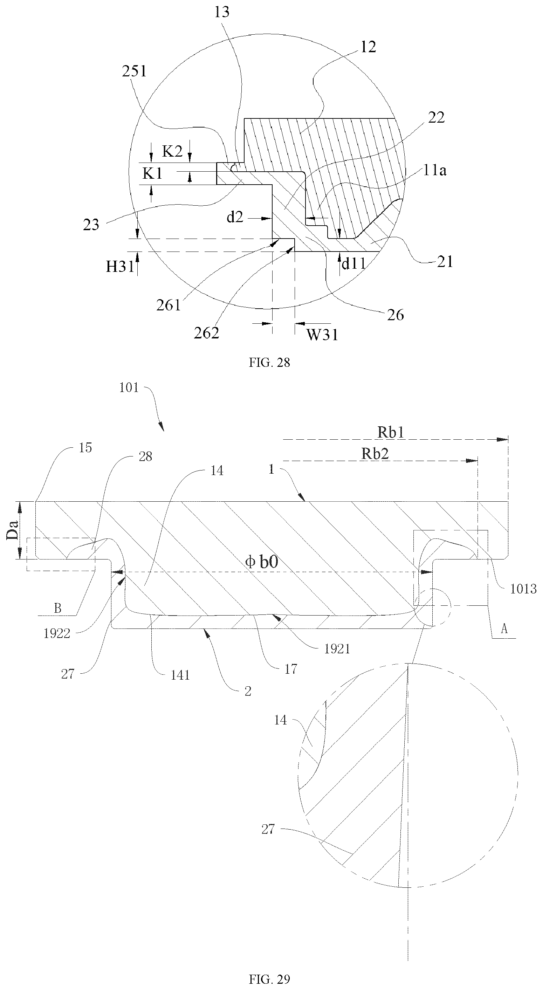

In some embodiments, referring to FIG. 28, the average thickness d2 of the second section 22 is greater than or equal to 0.5 mm. Generally, the greater the average thickness d2 of the second section 22, the higher the mechanical strength of the second section 22, and the better the corrosion resistance and fracture resistance. As an example, the average thickness d2 of the second section 22 is 0.5 mm, 0.6 mm, 0.8 mm, 1.0 mm, 1.2 mm, 1.5 mm, 1.6 mm, 1.8 mm, 2.0 mm, 2.2 mm, 2.4 mm, or 2.5 mm.

In some embodiments, referring to FIG. 28, an average thickness d11 of the first sub-section 211 is greater than or equal to 0.5 mm. Generally, the greater the average thickness of the first sub-section 211, the higher the mechanical strength of the first sub-section 211, and the better the corrosion resistance and fracture resistance. As an example, the average thickness d11 of the first sub-section 211 is 0.5 mm, 0.6 mm, 0.8 mm, 1.0 mm, 1.2 mm, 1.5 mm, 1.6 mm, 1.8 mm, 2.0 mm, 2.2 mm, 2.4 mm, or 2.5 mm.

In some embodiments, referring to FIG. 17, FIG. 21, FIG. 23, and FIG. 27, a vertical distance H2 between an outer surface of the first sub-section 211 and an outer surface of the third sub-section 213 is less than or equal to 2.5 mm. As an example, H2 is 0.2 mm, 0.5 mm, 0.8 mm, 1.0 mm, 1.2 mm, 1.5 mm, 1.6 mm, 1.8 mm, 2.0 mm, 2.2 mm, 2.4 mm, or 2.5 mm. The vertical distance H2 between the outer surface of the first sub-section 211 and the outer surface of the third sub-section 213 within the aforementioned range can ensure better bonding strength between the first metal column 1 and the second-metal layer 2, while maintaining a low manufacturing difficulty for the conductive structure 10.

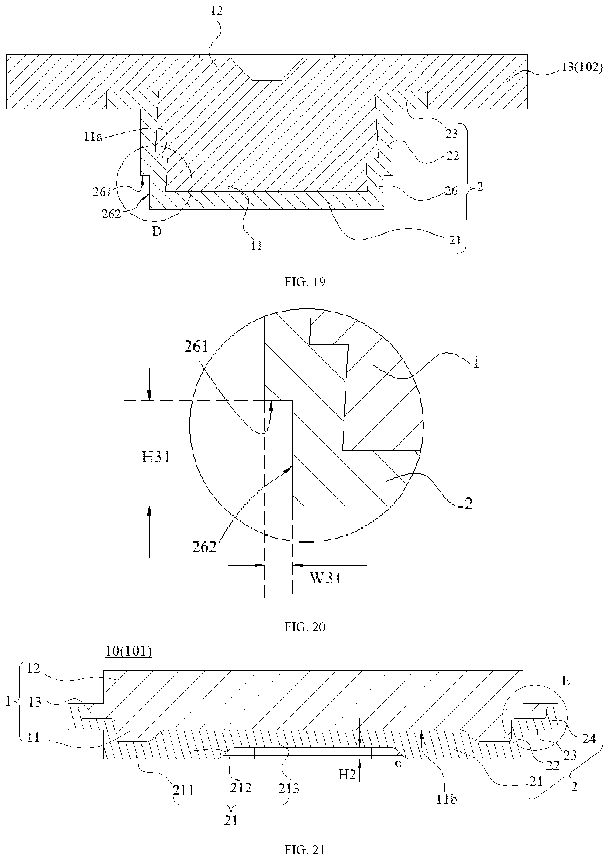

In some embodiments, referring to FIG. 21 and FIG. 23, the second sub-section 212 extends obliquely from the first sub-section 211 toward the third sub-section 213, and an inclination angle $\sigma$ of the second sub-section 212 satisfies the following condition: $15° \le \sigma \le 60°$. Here, the inclination angle $\sigma$ refers to an inclination angle of the second sub-section 212 relative to a plane extending in the radial direction of the first-metal post 1. As an example, the inclination angle $\sigma$ is 15°, 20°, 25°, 30°, 35°, 40°, 45°, 50°, 55°, or 60°. By controlling the inclination angle $\sigma$ of the second sub-section 212, the second sub-section 212 can smoothly transition from the first sub-section 211 to the third sub-section 213, alleviating the phenomenon that the second-metal layer 2 is broken due to stress concentration at the connection between the second sub-section 212 and the first sub-section 211 and the connection between the second sub-section 212 and the third sub-section 213.

In some embodiments, referring to FIG. 21 to FIG. 28, the boss 13 is located between the first end 11 and the second end 12, and the radial dimension of the boss 13 is further greater than a radial dimension of the second end 12. As an example, referring to FIG. 21 and FIG. 23, when the boss 13 is located between the first end 11 and the second end 12, the outer shape of the conductive structure 10 is roughly a shape of the Chinese character "中". For the conductive structure 10 of this shape, when the boss 13 is used as the stopping structure, the boss 13 can be clamped from both sides of the boss 13, achieving a more stable fixation of the second-metal layer 2. Generally, in order to prevent the conductive structure 10 from being too high, the boss 13 is optionally made thinner, while the second end 12 is configured to electrically connect with other components.

In some embodiments, referring to FIG. 21 to FIG. 28, the second-metal layer 2 further includes a fourth section 24, the fourth section 24 corresponds to the side surface of the boss 13, the fourth section 24 is connected to the third section 23. The arrangement of the fourth section 24 may further increase the bonding area of the second-metal layer 2 and the first-metal post 1. Here, the side surface of the boss 13 may be completely covered by the fourth section 24, or may be partially covered by the fourth section 24.

In some embodiments, referring to FIG. 22, along the axial direction of the first-metal post 1, a distance between an outer surface of the third section 23 and an end of the fourth section 24 facing away from the first end 11 is defined as a; and along the radial direction of the first-metal post 1, a distance between an outer surface and an inner surface of the fourth section 24 is defined as e, where $a > e > 0.5$ mm. Within this range, the bonding area between the fourth section 24 and the boss 13 is relatively large, and the strength of the fourth section 24 itself is also relatively large, which not only improves the overcurrent capacity of the conductive structure 10, but also improves the bonding strength between the second-metal layer 2 and the first-metal post 1. In the axial direction of the first-metal post 1, the distance between the outer surface of the third section 23 and the outer surface of the boss 13 is defined as h1.

In some embodiments, referring to FIG. 23 to FIG. 28, the second-metal layer 2 further includes a fifth section 25, the fifth section 25 corresponds to the surface of the side the boss 13 away from the first end 11, and the fourth section 24 connects the fifth section 25 with the third section 23. The arrangement of the fifth section 25 may further increase the bonding area between the second-metal layer 2 and the first-metal post 1. Optionally, the end portion 20 of the second-metal layer 2 is located in the fifth section 25.

In some embodiments, referring to FIG. 24, along the axial direction of the first-metal post 1, a distance between an inner surface of the fifth section 25 and an inner surface of the third section 23 is defined as b, and $b > 0.5$ mm. Since the boss 13 is at least partially located between the inner surface of the fifth section 25 and the inner surface of the third section 23, by setting $b > 0.5$ mm, it is advantageous to ensure the mechanical strength of the boss 13, especially when the boss 13 serves as the stopping structure, the risk of breaking of the boss 13 can be reduced.

In some embodiments, referring to FIG. 24, along the axial direction of the first-metal post 1, a distance between the outer surface of the third section 23 and the outer surface of the fifth section 25 is defined as h2; along the radial direction of the first-metal post 1, a distance between the outer surface of the fourth section 24 and a root on the side of the boss 13 adjacent to the second end 12 is defined as c, and a distance between the outer surface of the fourth section 24 and an end of the fifth section 25 adjacent to a central axial line of the first-metal post 1 is defined as d; where $c > h2$ and $d \ge 2/3c$, or $c \le h2$ and $d > 0.5$ mm. Within the above range, the bonding strength between the second-metal layer 2 and the first-metal post 1 can be effectively improved.

In some embodiment, the fourth section 24 and the fifth section 25 form an inversely-clasping layer 251 wrapping a free end of the boss 13. Along the axial direction of the first-metal post 1, a distance between the outer surface of the third section and an outer surface of the inversely-clasping layer 251 is defined as K1, a thickness of the inversely-clasping layer 251 is defined as K2, and f = K2/K1, where f is greater than or equal to 0.3 and is less than 1. The inversely-clasping layer 251 can enhance the mounting strength of the conductive structure 10.

In some embodiments, referring to FIG. 19, FIG. 20, and FIG. 25 to FIG. 28, an edge of the end surface of the first end 11 is recessed to form a first stepped portion 11a, the second-metal layer 2 further includes a second stepped portion 26, the second stepped portion 26 matches the first stepped portion 11a, the second stepped portion 26 is connected between the first section 21 and the second section 22, and the second stepped portion 26 is configured to be connected with the tab. It can be foreseen that one end of the conductive structure 10 may also have a step, and the step is formed by stacking the second stepped portion 26 on the first stepped portion 11a, equivalent to the simultaneous inward recess formation of the first-metal post 1 and the second-metal layer 2. The advantage of this arrangement lies in altering the strong correlation between the area of the second stepped portion 26 and the thickness of the second-metal layer 2, allowing the formation of a sufficiently large second stepped portion 26 even if the thickness of the second-metal layer 2 is very small, thereby ensuring the effectiveness of the connection between the second stepped portion 26 and the tab. Optionally, the first stepped portion 11a is a sunk platform located at an edge of the end surface of the first end 11, and the sunk platform is formed by the end surface of the first end 11 being sunken in a direction toward the second end 12. In the second-metal layer 2, the first section 21, the second stepped portion 26, and the second section 22 are connected in sequence. Optionally, the second stepped portion 26 is configured to be welded with the current collector 120 connected to the tab. For example, when welding the second stepped portion 26 and the current collector 120, the current collector 120 may first be sleeved on the conductive structure 10, and the current collector 120 and the second stepped portion 26 may fit with each other, and the current collector 120 may be welded to the second stepped portion 26 by laser welding. The larger the surface area of the second stepped portion 26, the larger the area of a surface of the second stepped portion 26 can be welded to the current collector 120, and the larger the welding surface, the higher the reliability of welding.

In some embodiments, referring to FIG. 19, FIG. 20, and FIG. 28, the second stepped portion 26 includes a first step surface 261 and a second step surface 262 connected with each other. Specifically, the second stepped portion 26 has an L-shape, the first step surface 261 is a surface on the second stepped portion 26 extending in a first direction, and the second step surface 262 is a surface on the second stepped portion 26 extending in a second direction. The first direction intersects with the second direction. Optionally, the first direction and the second direction are perpendicular to each other. As an example, the first direction is the radial direction of the first-metal post 1, and the second direction is the axial direction of the first-metal post 1. In the radial direction of the first-metal post 1, a width W31 of the first step surface 261 is greater than or equal to 0.5 mm. As an example, the width W31 of the first step surface 261 is 0.5 mm, 0.6 mm, 0.7 mm, 0.8 mm, 0.9 mm, or 1.0 mm. In the axial direction of the first-metal post 1, a height H31 of the second step surface 262 is greater than or equal to 0.4 mm. As an example, the height H31 of the second step surface 262 is 0.4 mm, 0.5 mm, 0.6 mm, 0.7 mm, 0.8 mm, 0.9 mm, or 1.0 mm. By increasing the width of the first step surface 261 and the height of the second step surface 262, it can be ensured that the second stepped portion 26 has sufficient contact area, thereby improving the overcurrent capacity and connection strength.

In some embodiments, the first metal is aluminum, that is, the first-metal post 1 is an aluminum column. The second metal is copper, that is, the second-metal layer 2 is a copper layer. Compared to copper, aluminum is cheaper. By configuring the conductive structure 10 to include an aluminum column and a copper layer, the costs of the conductive structure 10 can be effectively reduced. For example, the conductive structure 10 is a negative pole.

In some embodiments, an average thickness D1 of the second-metal layer 2 is less than or equal to 3 mm. By thinning the second-metal layer 2, the production costs of the conductive structure 10 can be effectively reduced, especially under the condition that the first-metal post 1 is an aluminum column and the second-metal layer 2 is a copper layer, the use of more expensive copper can be reduced, and the weight of the conductive structure 10 can be reduced while effectively reducing the weight of the conductive structure 10. As an example, the average thickness D1 of the second-metal layer 2 is 0.4 mm, 0.5 mm, 0.6 mm, 0.8 mm, 1.0 mm, 1.2 mm, 1.5 mm, 1.8 mm, 2.0 mm, 2.2 mm, 2.5 mm, 2.8 mm, or 3.0 mm. Optionally, the average thickness D1 of the second-metal layer 2 is less than or equal to 1.8 mm.

In some embodiments, the average thickness D1 of the second-metal layer 2 ranges from 0.2 mm to 1.5 mm. Generally, when the average thickness D1 of the second-metal layer 2 decreases, the overcurrent capacity of the conductive structure 10 decreases, and the cost of the conductive structure 10 decreases. By designing the average thickness D1 of the second-metal layer 2 to range from 0.2 mm to 1.5 mm, the conductive structure 10 can achieve both cost advantages and sufficient overcurrent capacity within this range. As an example, the average thickness D1 of the second-metal layer 2 is 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

In some embodiments, an uneven micro-structure is provided at the bonding interface between the second-metal layer 2 and the first-metal post 1. This refers to the micro-level where a surface of the second-metal layer 2 fits in a concave-convex manner with a surface of the first-metal post 1. Optionally, the conductive structure 10 is a cold heading forming part. As an example, the first-metal post 1 is an aluminum column, the second-metal layer 2 is a copper layer, and the conductive structure 10 is formed by cold heading from a copper-aluminum composite plate. Since the metal has ductility, during the cold heading process, under the action of pressure, the first metal in the first-metal post 1 and the second metal in the second-metal layer 2 are deformed and mutually penetrate each other, so that the bonding interface between the first-metal post 1 and the second-metal layer 2 is formed into a microscopically uneven wavy surface, so that the bonding area between the first-metal post 1 and the second-metal layer 2 can be further increased, thereby enhancing the bonding strength.

In some embodiments, a diameter φ of the conductive structure 10 is less than or equal to 30 mm. The diameter φ of the conductive structure 10 should not be too large, otherwise the weight and cost of the battery cell are increased. Optionally, 5 mm ≤ φ ≤ 30 mm, within this range, the conductive structure 10 has both better overcurrent capability and cost advantages. As an example, the diameter φ of the conductive structure 10 is 5 mm, 10 mm, 15 mm, 20 mm, 25 mm, or 30 mm.

In some embodiments, the diameter φ of the conductive structure 10 is less than or equal to 10 mm. By reducing the size of the conductive structure 10, the production cost of the conductive structure 10 can be effectively reduced. As an example, the diameter φ of the conductive structure 10 is 5 mm, 6 mm, 7 mm, 8 mm, 9 mm, or 10 mm.

In some embodiments, in the conductive structure 10, a ratio of the volume of the second-metal layer 2 to the total volume of the conductive structure 10 ranges from 5 vol% to 70vol%. Within this range, the conductive structure 10 has better bonding strength, better overcurrent capability, and cost advantages. As an example, a volume percentage of the second-metal layer 2 is 5vol%, 10vol%, 15vol%, 20vol%, 25vol%, 30vol%, 35vol%, 40vol%, 45vol%, 50vol%, 55vol%, 60vol%, 65vol%, or 70vol%.

In some embodiments, in the conductive structure 10, the ratio of the volume of the second-metal layer 2 to the total volume of the conductive structure 10 ranges from 5vol% to 40vol%. Within this range, the conductive structure 10 has better bonding strength, better overcurrent capability, and cost advantages. As an example, the volume percentage of the second-metal layer 2 is 5vol%, 10vol%, 15vol%, 20vol%, 25vol%, 30vol%, 35vol%, or 40vol%.

In some embodiments, the first-metal post 1 is sectioned along the radial direction of the first-metal post 1, and a cross-sectional shape of the first-metal post 1 may be one of square, circular, hexagonal, or racetrack-shaped.

In some embodiments, the bonding area between the second-metal layer 2 and the first-metal post 1 is greater than or equal to 20 mm$^2$. When the second-metal layer 2 is bonded to the surface of the first-metal post 1, the surface between the second-metal layer 2 and the first-metal post 1 in contact with each other is the bonding interface, also referred to as a contact surface. The bonding area between the second-metal layer 2 and the first-metal post 1 refers to an area of the surface of the second-metal layer 2 in contact with the first-metal post 1. As an example, the bonding area is 20 mm$^2$, 30 mm$^2$, 40 mm$^2$, 50 mm$^2$, 100 mm$^2$, 150 mm$^2$, 200 mm$^2$, 300 mm$^2$, 400 mm$^2$, or 500 mm$^2$. By increasing the bonding area, the overcurrent capability of the conductive structure 10 can be improved, and the risk of the second-metal layer 2 detaching can be reduced.

In some embodiments, the bonding area between the second-metal layer 2 and the first-metal post 1 is greater than or equal to 80 mm$^2$. As an example, the bonding area is 80 mm$^2$, 90 mm$^2$, 100 mm$^2$, 120 mm$^2$, 130 mm$^2$, 140 mm$^2$, 150 mm$^2$, 200 mm$^2$, 250 mm$^2$, 300 mm$^2$, 400 mm$^2$, or 500 mm$^2$.

In some embodiments, a volume ratio of the second-metal layer 2 to the first-metal post 1 ranges from 0.1 to 0.65. That is, the volume of the first-metal post 1 is 1.54 to 10 times the volume of the second-metal layer 2, meaning that the volume percentage of the first-metal post 1 in the conductive structure 10 is much greater than the volume percentage of the second-metal layer 2. Under the condition that the bonding area between the second-metal layer 2 and the first-metal post 1 is increased, the conductive structure 10 is ensured to still have sufficient overcurrent capacity, and the cost of the conductive structure 10 can be reduced by reducing the volume percentage of the second-metal layer 2 in the conductive structure 10, especially when the first-metal post 1 is an aluminum column and the second-metal layer 2 is a copper layer. As an example, the volume ratio of the second-metal layer 2 to the first-metal post 1 is 0.1, 0.2, 0.3, 0.4, 0.5, 0.6, or 0.65. Generally, the volume ratio of the second-metal layer 2 to the first-metal post 1 fluctuates following the size (e.g. diameter) of the conductive structure 10, and the larger the size of the conductive structure 10, the smaller the volume ratio of the second-metal layer 2 to the first-metal post 1.

In some embodiments, referring to FIG. 2, on an appearance surface of the conductive structure 10, a ratio A of the surface area of the second-metal layer 2 to the surface area of the first-metal post 1 is greater than or equal to 0.25. Since the second-metal layer 2 is bonded to the surface of the first-metal post 1, the exposed surface of the second-metal layer 2 is formed as the appearance surface of the conductive structure 10. When the second-metal layer 2 is not completely covered on the first-metal post 1, the exposed surface of the first-metal post 1 may also form the appearance surface of the conductive structure 10. It can be understood that, on the appearance surface of the conductive structure 10, the surface area of the second-metal layer 2 is the area of the exposed surface of the second-metal layer 2, and the surface area of the first-metal post 1 is the area of the exposed surface of the first-metal post 1. Increasing the surface area of the second-metal layer 2 on the appearance surface of the conductive structure 10 is equivalent to increasing the area of the second-metal layer 2 covering on the first-metal post 1, that is, increasing the bonding area between the second-metal layer 2 and the first-metal post 1. As an example, on the appearance surface of the conductive structure 10, the ratio A of the surface area of the second-metal layer 2 to the surface area of the first-metal post 1 is 0.25, 0.5, 0.75, 1, 1.5, 2, 2.5, or 3.

In some embodiments, the diameter $\varphi$ of the conductive structure 10 is less than or equal to 10 mm, and the ratio A of the surface area of the second-metal layer 2 to the surface area of the first-metal post 1 is greater than or equal to 0.25 and is less than or equal to 0.6. In order to facilitate direct connection of the second end 12 with other components, the second end 12 is at least partially exposed outside the second-metal layer 2. Generally, the smaller the diameter of the conductive structure 10, the smaller the surface area of the conductive structure 10. Under the condition that $\varphi \leq 10$ mm, controlling $0.25 \leq A \leq 0.6$ can ensure that the second end 12 has sufficient connection surface to connect with other components, and the bonding area is sufficiently large, thereby ensuring the overcurrent capacity of the conductive structure 10. As an example, $\varphi$ is 5 mm, 6 mm, 7 mm, 8 mm, 9 mm, or 10 mm, and A is 0.25, 0.3, 0.4, 0.5, or 0.6.

In some embodiments, the diameter $\varphi$ of the conductive structure 10 is greater than 10 mm and is less than or equal to 30 mm, and the ratio of the surface area of the second-metal layer 2 to the surface area of the first-metal post 1 is greater than or equal to 0.75 and is less than or equal to 2. When the diameter of the conductive structure 10 increases, the overcurrent capacity of the conductive structure 10 is improved, but the cost of the conductive structure 10 is increased and the volume and quality burden are imposed. Under the condition that 10 mm < $\varphi \leq 30$ mm, the conductive structure 10 can have both cost advantages and better overcurrent capability. In addition, as the diameter of the conductive structure 10 increases, the surface area of the conductive structure 10 also increases, and the second end 12 remains partially exposed outside the second-metal layer 2, and other regions can be covered with the second-metal layer 2 to increase the bonding area. Under the condition that 10 mm < $\varphi \leq 30$ mm, controlling $0.75 \leq A \leq 2$ can ensure that the bonding area is sufficiently large, thereby ensuring the overcurrent capacity of the conductive structure 10. As an example, $\varphi$ is 10.1 mm, 11 mm, 12 mm, 14 mm, 16 mm, 18 mm, 20 mm, 22 mm, 24 mm, 26 mm, 28 mm, or 30 mm, and A is 0.75, 0.8, 0.9, 1.0, 1.2, 1.5, 1.7, 1.85, or 2.

In addition to the conductive structure 10 provided in the above embodiments, the embodiments of the present application also provide the conductive structure 10 having the following structures.

Referring to FIG. 29, FIG. 29 is a structural schematic diagram of an eleventh conductive structure 10 provided in embodiments of the present application. Embodiments of the present application provide a conductive structure 10. The conductive structure 10 includes a first metal layer 1 and a second-metal layer 2. The first-metal post 1 includes a first segment 14 and a second segment 15 connected with each other. An outer diameter of the first segment 14 is less than an outer diameter of the second segment 15. An end of the first segment 14 away from the second segment 15 is a first end, and an end of the second segment 15 away from the first segment 14 is a second end. The second-metal layer 2 includes a barrel body 27 and a flange 28. The barrel body 27 wraps the first segment 14. The flange 28 is connected to an end surface of the barrel body 27 adjacent to the second segment 15. The flange 28 extends along a radial direction of the conductive structure 10 and is embedded within an end portion of the second segment 15 facing the first segment 14. In an axial direction of the conductive structure 10, the flange 28 has a thickness dimension Hb. The thickness dimension Hb of at least a portion of the flange 28 increases as approaching an axial line of the conductive structure 10.

It can be understood that the flange 28 may include the end portion where the thickness dimension Hb gradually changes, as well as a uniform-height portion with a consistent thickness dimension Hb. Alternatively, the thickness dimension Hb of the entire flange 28 is gradually changed.

It can be understood that the first segment 14 and the second segment 15 are connected axially. Optionally, the first segment 14 and the second segment 15 are coaxially arranged.

It can be understood that a diameter of the second segment 15 is greater than a diameter of the first segment 14, so that the flange 28 can be embedded into the end surface of the second segment 15 facing the first segment 14.

It can be understood that the first-metal post 1 has a columnar structure, and the material of the first-metal post 1 includes a first metal. The second-metal layer 2 has a layered structure, and the material of the second-metal layer 2 includes a second metal. The second metal and the first metal are different metals.

Optionally, a conductivity of the second metal is greater than a conductivity of the first metal, that is, the conductivity of the second metal is better than the conductivity of the first metal.

Optionally, the fluidity of the first metal is greater than the fluidity of the second metal.

Optionally, the hardness of the second metal is better than the hardness of the first metal.

It can be understood that when the conductive structure 10 is applied to a battery cell, the first segment 14 and the flange 28 can be located outside the battery cell, serving as an output terminal of the battery cell. At this time, the material of the second-metal layer 2 is the same as the material of a negative current collector. The material of the first-metal post 1 may be aluminum. The first segment 14 and the flange 28 may also be located inside the battery cell to prevent the conductive structure 10 from detaching from a cover plate 110 of the battery cell under high pressure inside the battery cell. At this time, the material of the first-metal post 1 is the same as the material of the negative current collector, and the material of the second-metal layer 2 may be aluminum.

In the embodiments, by increasing the thickness dimension Hb of at least a part of the flange 28 as approaching the axial line of the conductive structure 10, on the one hand, it is advantageous to increase the thickness of an edge of the second segment 15 to ensure a welding thickness of the edge of the second segment 15, so that when the edge of the second segment 15 is welded with other components, the edge of the second segment 15 can have more material to block welding heat transfer, so as to effectively prevent the second segment 15 from being welded through. On the other hand, the thickness dimension Hb of the edge of the flange 28 can be reduced by pier pressing, so that the material of the edge of the flange 28 flows toward the axial line of the conductive structure 10, so that the end of the flange 28 adjacent to the axial line has more material, so as to facilitate improving an embedding depth of a portion of the second-metal layer 2 adjacent to the axial line into the first-metal post 1. Thus, the reliability of the bonding between the first-metal post 1 and the second-metal layer 2 can be improved.

In addition, by causing the material of the edge of the flange 28 to flow toward the axial line of the conductive structure 10 so that the end of the flange 28 adjacent to the axial line has more material, it is also helpful to increase the depth dimension of the second-metal layer 2 to penetrate the first-metal post 1 in the radial direction, so that the side of the flange 28 adjacent to the axial line can be in a stopping fit with the first-metal post 1 along the axial line of the conductive structure 10 to prevent the first segment 14 from detaching from the barrel body 27.

In one embodiment, the thickness dimension Hb of the flange 28 gradually increases in a direction toward the axial line of the conductive structure 10. In a longitudinal cross-section of the conductive structure 10 passing through the flange 28, along the direction toward the axial line of the conductive structure 10, a bonding interface 17 formed between the flange 28 embedded in the second segment 15 includes a first line segment 161, a second line segment 162, and a third line segment 163 connected in sequence. A curvature of the second line segment 162 is less than a curvature of the first line segment 161 and a curvature of the third line segment 163. An end of the third line segment 163 away from the second line segment 162 extends to be located between an outer circumferential surface of the first segment 14 and an inner wall of the barrel body 27.

It can be understood that the first line segment 161, the second line segment 162, and the third line segment 163 are smoothly connected in sequence.

Specifically, a concave side of the first line segment 161 and a concave side the third line segment 163 are facing away from the second line segment 15.

In the embodiments, through the above-described arrangement, firstly, a portion of the flange 28 forming the first line segment 161 can smoothly connect a side of the flange 28 facing away from the second segment 15 to a surface of the flange 28 embedded in the second segment 15; secondly, the thickness dimension Hb can be smoothly increased at the position along the second line segment 162; thirdly, the surface of the flange 28 embedded into the second segment 15 can transition more smoothly to the inner wall of the barrel body 27. In this way, the stress concentration at the fitting portion between the flange 28 and the first-metal post 1 can be improved, thereby enhancing the stress condition of the conductive structure 10, and consequently improving the reliability of the bonding between the first-metal post 1 and the second-metal layer 2.

In one embodiment, the curvature of the third line segment 163 is greater than the curvature of the first line segment 161. It can be understood that this configuration makes a radius of an end of the flange 28 away from the axial line of the conductive structure 10 larger, while a radius of the end of the flange 28 adjacent to the axial line of the conductive structure 10 smaller. As such, the convexity of the end of the flange 28 away from the axial line of the conductive structure 10 may be reduced, so as to reduce the material of the end of the flange 28 away from the axial line of the conductive structure 10, so that more material of the flange 28 may flow toward the axial line of the conductive structure 10. At the same time, the end of the flange 28 adjacent to the conductive structure 10 can be made to have more material, so as to facilitate increasing the embedding depth of the second-metal layer 2 into the first-metal post 1. Thus, it is beneficial to improve the reliability of the bonding

In one embodiment, the curvature of the first line segment 161 ranges from $2 \times 10^{-4}$ mm$^{-1}$ to $8 \times 10^{-4}$ mm$^{-1}$, and the curvature of the third line segment 163 ranges from $7 \times 10^{-3}$ mm$^{-1}$ to $1.2 \times 10^{-2}$ mm$^{-1}$.

It can be understood that the curvature of the first line segment 161 includes, but is not limited to, $2 \times 10^{-4}$ mm$^{-1}$, $3 \times 10^{-4}$ mm$^{-1}$, $4 \times 10^{-4}$ mm$^{-1}$, $5 \times 10^{-4}$ mm$^{-1}$, $6 \times 10^{-4}$ mm$^{-1}$, $7 \times 10^{-4}$ mm$^{-1}$, $8 \times 10^{-4}$ mm$^{-1}$.

The curvature of the third line segment 163 includes, but is not limited to, $7 \times 10^{-3}$ mm$^{-1}$, $8 \times 10^{-3}$ mm$^{-1}$, $9 \times 10^{-3}$ mm$^{-1}$, $1 \times 10^{-2}$ mm$^{-1}$, $1.2 \times 10^{-2}$ mm$^{-1}$.

In the embodiments, through the aforementioned limitations, the first line segment 161 can relatively gently connect the surface of the flange 28 facing away from the second segment 15 with the surface of the flange 28 embedded in the second segment 15, and the third line segment 163 can relatively gently connect the surface of the flange 28 embedded in the second segment 15 with the inner surface of the barrel body 27.

In one embodiment, the curvature of the second line segment 162 is less than or equal to $1 \times 10^{-4}$ mm$^{-1}$. In this way, the material of the portion of the flange 28 forming the second line segment 162 can be reduced, so that the material of the portion can flow toward the third line segment 163, so as to facilitate the end of the flange 28 adjacent to the axial line having more material, and thus the embedding depth of the portion of the second-metal layer 2 adjacent to the axial line into the first-metal post 1 can be increased.

It can be understood that when the curvature of the second line segment 162 is 0, the second line segment 162 is a straight line. When the curvature of the second line segment 162 is less than 0, the center of the second line segment 162 and the center of the first line segment 161 are respectively located on both sides of the bonding interface between the flange 28 and the second segment 15. Specifically, the center of the second line segment 162 is located on a side of the bonding interface between the flange 28 and the second segment 15 facing away from the first segment 14, and the center of the first line segment 161 and the center of the third line segment 163 are located on a side of the bonding interface between the flange 28 and the second segment 15 adjacent to the first segment 14.

On the basis of the structure of the bonding interface between the flange 28 and the second segment 15 provided in the above embodiments, the embodiments of the present application further describe the structure of the bonding interface between the flange 28 and the second segment 15 as follows.

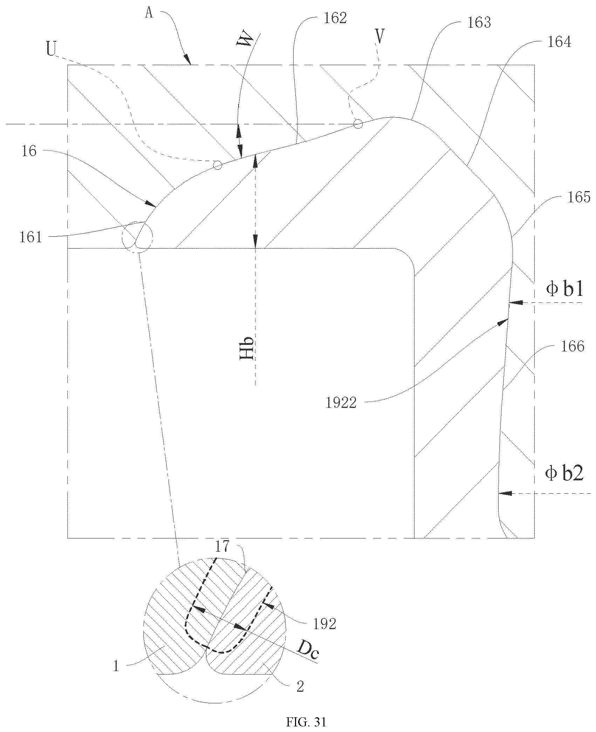

Referring to FIG. 31, FIG. 31 is an enlarged view of another structure at portion A in FIG. 29 provided by embodiments of the present application. In one embodiment, in the longitudinal cross-section of the conductive structure 10 passing through the flange 28, along the axial direction of the conductive structure 10, a bonding interface 17 formed between the surface of the second-metal layer 2 adjacent to the axial line of the conductive structure 10 and the outer circumferential surface of the first-metal post 1 includes a fourth line segment 164 and a fifth line segment 165. Both ends of the fourth line segment 164 are connected to the third line segment 163 and the fifth line segment 165, respectively. A curvature of the fourth line segment 164 is less than the curvature of the third line segment 163 and a curvature of the fifth line segment 165.

It can be understood that the bonding interface 17 formed between the surface of the second-metal layer 2 adjacent to the axial line of the conductive structure 10 and the first-metal post 1 further includes a sixth line segment 166, and an end of the sixth line segment 166 is connected to the fifth line segment 165, and the other end of the sixth line segment 166 extends toward the bottom wall of the barrel body 27.

It can be understood that the bottom wall of the barrel body 27 is a portion of the second-metal layer 2 wrapping the first segment 14 and facing away from the second segment 15.

In the embodiments, through the above arrangement, the material of the flange 28 located at the fourth line segment 164 can be reduced, so that the material originally located at the fourth line segment 164 at least flows toward the fifth line segment 165 based on the pier pressure, which is beneficial for the fifth line segment 165 to protrude radially towards the axial line of the conductive structure 10, so that the embedding depth of the portion of the second-metal layer 2 adjacent to the axial line in the first-metal post 1 can be increased. In this way, the side of the flange 28 adjacent to the axial line can be in a stopping fit with the first-metal post 1 along the axial line of the conductive structure 10, so as to prevent the first segment 14 from detaching from the barrel body 27.

In one embodiment, the curvature of the first line segment 161 is less than the curvature of the fifth line segment 165. It can be understood that this configuration makes a radius of an end of the flange 28 away from the axial line of the conductive structure 10 larger, while a radius of the end of the flange 28 adjacent to the axial line of the conductive structure 10 smaller. As such, the convexity of the end of the flange 28 away from the axial line of the conductive structure 10 may be reduced, so as to reduce the material of the end of the flange 28 away from the axial line of the conductive structure 10, so that more material of the flange 28 may flow toward the axial line of the conductive structure 10. At the same time, the end of the flange 28 adjacent to the conductive structure 10 can be made to have more material, so as to facilitate increasing the embedding depth of the second-metal layer 2 into the first-metal post 1. Thus, it is beneficial to improve the reliability of the bonding.

In one embodiment, the curvature of the first line segment 161 ranges from $3 \times 10^{-4}$ mm$^{-1}$ to $9.5 \times 10^{-4}$ mm$^{-1}$, the curvature of the third line segment 163 ranges from $5 \times 10^{-4}$ mm$^{-1}$ to $2 \times 10^{-3}$ mm$^{-1}$, and the curvature of the fifth line segment 165 ranges from $7 \times 10^{-4}$ mm$^{-1}$ to $3 \times 10^{-3}$ mm$^{-1}$.

It can be understood that the curvature of the first line segment 161 includes, but is not limited to, $3 \times 10^{-4}$ mm$^{-1}$, $4 \times 10^{-4}$ mm$^{-1}$, $5 \times 10^{-4}$ mm$^{-1}$, $6 \times 10^{-4}$ mm$^{-1}$, $7 \times 10^{-4}$ mm$^{-1}$, $8 \times 10^{-4}$ mm$^{-1}$, $9 \times 10^{-4}$ mm$^{-1}$, $9.5 \times 10^{-4}$ mm$^{-1}$.

It can be understood that the curvature of the third line segment 163 includes, but is not limited to, $5 \times 10^{-4}$ mm$^{-1}$, $6 \times 10^{-4}$ mm$^{-1}$, $7 \times 10^{-4}$ mm$^{-1}$, $8 \times 10^{-4}$ mm$^{-1}$, $9 \times 10^{-4}$ mm$^{-1}$, $1 \times 10^{-3}$ mm$^{-1}$, $2 \times 10^{-3}$ mm$^{-1}$.

It can be understood that the curvature of the fifth line segment 165 includes, but is not limited to, $7 \times 10^{-4}$ mm$^{-1}$, $8 \times 10^{-4}$ mm$^{-1}$, $9 \times 10^{-4}$ mm$^{-1}$, $1 \times 10^{-3}$ mm$^{-1}$, $2 \times 10^{-3}$ mm$^{-1}$, $3 \times 10^{-3}$ mm$^{-1}$.

In the embodiments, through the aforementioned limitations, the first line segment 161 can relatively gently connect the surface of the flange 28 facing away from the second segment 15 with the surface of the flange 28 embedded in the second segment 15, and the third line segment 163 and the fifth line segment 165 can relatively gently connect the surface of the flange 28 embedded in the second segment 15 with the inner surface of the barrel body 27.

In one embodiment, the curvature of the fourth line segment 164 is less than or equal to $1 \times 10^{-4}$ mm$^{-1}$. Thus, compared to the structure where the curvature of the fourth line segment 164 is greater than $1 \times 10^{-4}$ mm$^{-1}$, this setting can reduce the material at the portion of the flange 28 forming the fourth line segment 164. This allows the material at the portion to flow towards the fifth line segment 165, facilitating more material at the end of the flange 28 adjacent to the axial line. Consequently, this can enhance the embedding depth of the portion of the second-metal layer 2 adjacent to the axial line into the first-metal post 1.

It can be understood that when the curvature of the fourth line segment 164 is 0, the fourth line segment 164 is a straight line. When the curvature of the fourth line segment 164 is less than 0, the center of the fourth line segment 164 and the center of the third line segment 163 are located on both sides of the bonding interface between the flange 28 and the second line segment 15, respectively. Specifically, the center of the fourth line segment 164 is located on a side of the bonding interface between the flange 28 and the second segment 15 facing away from a connecting portion between the flange 28 and the barrel body 27, and the center of the third line segment 163 and the center of the fifth line segment 165 are located on a side of the bonding interface between the flange 28 and the second segment 15 adjacent to the connecting portion between the flange 28 and the barrel body 27.

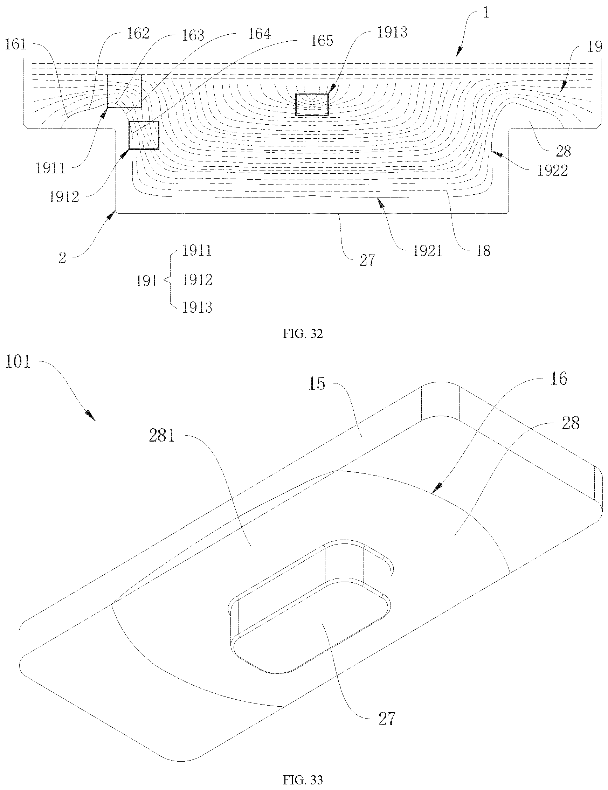

Referring to FIG. 32, FIG. 32 is a schematic diagram of forging flow lines 18 of the first-metal post provided in embodiments of the present application. In one embodiment, in the longitudinal cross-section of the conductive structure 10, the first-metal post 1 includes a plurality of forging flow lines 18. The contact portion between the first-metal post 1 and the second-metal layer 2 forms the bonding interface 17. The first-metal post 1 includes a bonding region 19 adjacent to the second-metal layer 2, and a plurality of the forging flow lines 18 within the bonding region 19 extend along the bonding interface 17. The bonding region 19 includes a compact region 191, and a spacing of a plurality of the forging flow lines 18 within the compact region 191 is less than a spacing of a plurality of the forging flow lines 18 within other regions of the bonding region 19. The compact region 191 includes a first dense region 1911, a second dense region 1912, and a third dense region 1913, and along the thickness direction of the second-metal layer 2, the first dense region 1911 and the second dense region 1912 are disposed opposite to the third line segment 163 and the fifth line segment 165, respectively. The third dense region 1913 is located at the axial line of the first-metal post 1 and is arranged away from the bottom wall of the barrel body 27.

It can be understood that metal grains of a portion of the first metal material located in the compact region 191 are highly refined and arranged closely, so that the ability of the portion of the first metal material located in the compact region 191 to hinder the dislocation movement is enhanced, thereby improving the strength and hardness of the first-metal post 1, and improving the structural reliability of the conductive structure 10.

In addition, the first dense region 1911 and the second dense region 1912 are disposed opposite to the third line segment 163 and the fifth line segment 165, respectively, so that the first dense region 1911 and the second dense region 1912 can clamp the flange 28, thereby improving the reliability of the bonding between the first-metal post 1 and the second-metal layer 2.

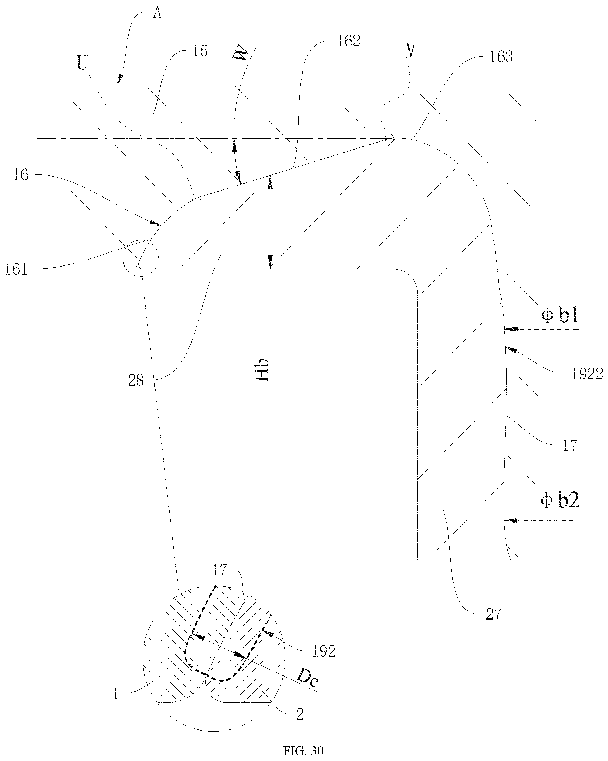

Referring to FIG. 30 or FIG. 31, in one embodiment, two end points of the second line segment 162 are defined as a point U and a point V, respectively. A straight line UV forms an included angle W with the radial direction of the conductive structure 10 on a side facing away from the flange 28, satisfying: $0 < W \leq 20°$. In this way, the steepness of the bonding interface between the first-metal post 1 and the second-metal layer 2 between the point U and the point V can be controlled. In this way, the bonding surface between the first-metal post 1 and the second-metal layer 2 between the point U and the point V is relatively gentle, so that under the premise of a fixed maximum thickness dimension of the flange 28, the first-metal post 1 and the second-metal layer 2 can have a larger bonding interface in the axial direction, so as to facilitate improving the reliability of the bonding between the first-metal post 1 and the second-metal layer 2.

Referring to FIG. 29, in one embodiment, the outer diameter of the second segment 15 is defined as Rb1, and a maximum radius of the flange 28 is defined as Rb2, satisfying: $65\% Rb1 \leq Rb2 \leq 93\% Rb1$.

It can be understood that the maximum radius Rb2 f the flange 28 includes, but is not limited to, 65%Rb1, 66%Rb1, 68%Rb1, 69%Rb1, 70%Rb1, 76%Rb1, 81%Rb1, 85%Rb1, 90%Rb1, 93%Rb1.

In the embodiments, through the above limitation, on the one hand, the radial dimension of the flange 28 embedded in the second segment 15 can be ensured, so that there is a sufficient radial bonding dimension between the flange 28 and the second segment 15, thereby helping to ensure the reliability of the bonding between the first-metal post 1 and the second-metal layer 2. On the other hand, the radial dimension of the flange 28 can be prevented from being too large, which may affect the thickness of the second segment 15, thereby ensuring the smooth welding between the second segment 15 with other components, and preventing the second segment 15 from being welded through, which may affect the reliability of the bonding between the second segment 15 and the flange 28.

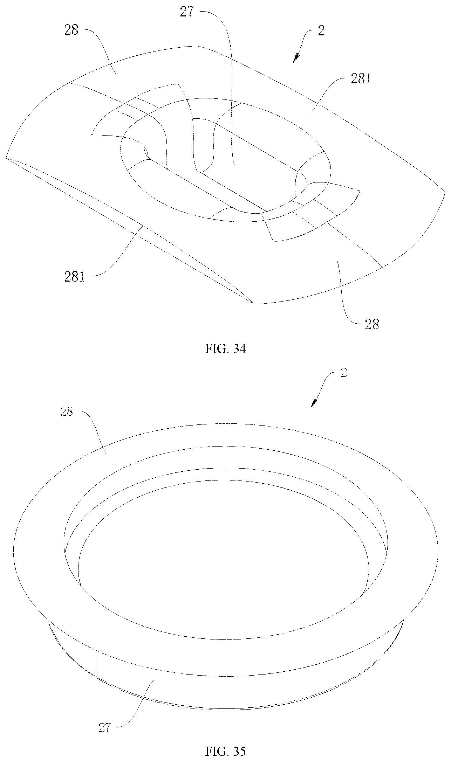

Referring to FIG. 33 and FIG. 34, FIG. 33 is a structural schematic diagram of a twelfth conductive structure 10 provided in the embodiments of the present application, and FIG. 34 is a structural schematic diagram of the second-metal layer 2 provided in the embodiments of the present application. In some embodiments, a plurality of flanges 28 are provided. The plurality of flanges 28 are arranged sequentially along a circumferential direction of the conductive structure 10. At least two flanges 28 are oppositely arranged along the radial direction of the conductive structure 10. In this way, the reliability of the bonding between the first-metal post 1 and the second-metal layer 2 can be improved, and the structural symmetry of the conductive structure 10 can be improved, so as to facilitate the improvement of the stress state of the conductive structure 10.

In one embodiment, in an axial cross-section of the conductive structure 10, a length of the bonding interface 17 formed through the contact between the first-metal post 1 and the second-metal layer 2 is defined as Lb, and the outer diameter of the barrel body 27 is defined as $\varphi$b0, satisfying: $1\varphi b0 \leq Lb \leq 5\varphi b0$. In this way, the length of the bonding interface 17 in a larger conductive structure 10 can be made larger, which allows the bonding force between the first-metal post 1 and the second-metal layer 2 to match with the size of the conductive structure 10, thereby improving the structural reliability of the conductive structure 10.

It can be understood that the length Lb of the bonding interface 17 formed through the contact between the first-metal post 1 and the second-metal layer 2 includes, but is not limited to, $1\varphi b0$, $1.2\varphi b0$, $1.5\varphi b0$, $1.8\varphi b0$, $2\varphi b0$, $2.2\varphi b0$, $2.4\varphi b0$, $2.5\varphi b0$, $2.8\varphi b0$, $3\varphi b0$, $3.5\varphi b0$, $3.6\varphi b0$, $4\varphi b0$, $4.3\varphi b0$, $4.8\varphi b0$, $5\varphi b0$.

In one embodiment, $\varphi b0 \leq 4$ mm, and $3.6\varphi b0 \leq Lb \leq 5\varphi b0$. 4 mm $< \varphi b0 < 8$ mm, and $3\varphi b0 \leq Lb \leq 3.6\varphi b0$. $\varphi b0 \geq 8$ mm, and $1\varphi b0 \leq Lb \leq 3\varphi b0$.

It can be understood that when $\varphi b0 \leq 4$ mm, the length Lb of the bonding interface 17 formed through the contact between the first-metal post 1 and the second-metal layer 2 includes, but is not limited to, $3.6\varphi b0$, $3.7\varphi b0$, $3.8\varphi b0$, $3.9\varphi b0$, $4\varphi b0$, $4.1\varphi b0$, $4.2\varphi b0$, $4.3\varphi b0$, $4.4\varphi b0$, $4.5\varphi b0$, $4.6\varphi b0$, $4.7\varphi b0$, $4.8\varphi b0$, $4.9\varphi b0$, and $5\varphi b0$.

When 4 mm $< \varphi b0 < 8$ mm, the length Lb of the bonding interface 17 formed through the contact between the first-metal post 1 and the second-metal layer 2 includes, but is not limited to, $3\varphi b0$, $3.1\varphi b0$, $3.2\varphi b0$, $3.3\varphi b0$, $3.4\varphi b0$, $3.5\varphi b0$, and $3.6\varphi b0$.

When $\varphi b0 \geq 8$ mm, the length Lb of the bonding interface 17 through the contact between the first-metal post 1 and the second-metal layer 2 includes, but is not limited to, $1\varphi b0$, $1.2\varphi b0$, $1.5\varphi b0$, $1.8\varphi b0$, $2\varphi b0$, $2.3\varphi b0$, $2.4\varphi b0$, $2.5\varphi b0$, $2.6\varphi b0$, $2.7\varphi b0$, $2.8\varphi b0$, $2.9\varphi b0$, and $3\varphi b0$.

It can be understood that the larger the size of the conductive structure 10, the smaller the ratio of the length Lb of the bonding interface 17 to the outer diameter $\varphi$b0 of the barrel body 27. The smaller the size of the conductive structure 10, the larger the ratio of the length Lb of the bonding interface 17 to the outer diameter $\varphi$b0 of the barrel body 27.

Referring to FIG. 34, in one embodiment, the second-metal layer 2 further includes a transition portion 281. The transition portion 281 is connected to an end surface of the barrel body 27 adjacent to the second segment 15. Here, the transition portion 281 is embedded in an end surface of the second segment 15 facing the first segment 14. A part of the bonding interface 17 between the transition portion 281 and the second segment 15 is located on a circumferential surface of the second segment 15. In this way, the structural symmetry of the conductive structure 10 can be improved, and the structural strength of the second-metal layer 2 at the flange 28 can be improved, thereby facilitating an increase in the structural strength of the conductive structure 10.

Specifically, there are two flanges 28 and two transition portions 281. The two transition portions 281 and the two flanges 28 are arranged alternately along the circumferential direction of the conductive structure 10. Both ends of the flange 28 along the circumferential direction of the conductive structure 10 are connected to the two transition portions 281, respectively.

Referring to FIG. 33 and FIG. 34, in one embodiment, a cross-section of the second segment 15 is shaped as a rectangle. The two flanges 28 are arranged at intervals along a direction of long sides of the rectangle. The flanges 28 extend along wide sides of the rectangle. The two transition portions 281 are arranged at intervals along a direction of narrow sides of the rectangle. The transition portions 281 extend along the long sides of the rectangle. It can be understood that in the width direction of the rectangle, the conductive structure 10 has a smaller size, which is not conducive to forming the flanges 28.

In the embodiments, through the above arrangement, the conductive structure 10 can be facilitated to include the flanges 28, so as to facilitate improving the reliability of the bonding between the first-metal post 1 and the second-metal layer 2. Additionally, the bonding structure between the first-metal post 1 and the second-metal layer 2 can be matched with the overall shape of the conductive structure 10, so as to reduce the difficulty of forming the conductive structure 10.

Referring to FIG. 33, in one embodiment, an end surface of the transition portion 281 away from the axial line of the conductive structure 10 is coplanar with the sidewall on which the long sides of the second segment 15 are located. Thus, the surface structure of the conductive structure 10 is made orderly, facilitating assembly with other components.

Referring to FIG. 30 or FIG. 31, in one embodiment, the contact portion between the first-metal post 1 and the second-metal layer 2 forms the bonding interface 17. The conductive structure 10 includes a metal mixing layer 192. The metal mixing layer 192 extends along the bonding interface 17, and the metal mixing layer 192 wraps the bonding interface 17. The metal mixing layer 192 includes a first metal material and a second metal material mixed with each other. A thickness of the metal mixing layer 192 is defined as Dc, and the thickness of the metal mixing layer 192 is not uniform.

It can be understood that a portion of the metal mixing layer 192 in the thickness direction is located in the first-metal post 1, and another portion of the metal mixing layer 192 in the thickness direction is located in the second-metal layer 2.

It can be understood that under the action of the pier pressure, atoms in the contact portion between the first-metal post 1 and the second-metal layer 2 approach each other, causing one to diffuse into the other, thereby forming the metal mixing layer 192 in which the first metal and the second metal are mixed with each other.

The uneven thickness of the metal mixing layer 192 means that at least two portions of the metal mixing layer 192 have the same thickness dimensions.

In the embodiments, by forming the metal mixing layer 192 extending along the bonding interface 17, the interlocking force between the opposing surfaces of the first-metal post 1 and the second-metal layer 2 can be enhanced, that is, an interlocking connection structure, in which a plurality of projections and a plurality of recesses are fitted to each other, can be formed on the surfaces of the two metals, so that the connection between the first-metal post 1 and the second-metal layer 2 can be more tightly and securely, thereby improving the ability to resist separation between the first-metal post 1 and the second-metal layer 2.

Referring to FIG. 30 or FIG. 31, in one embodiment, the thickness Dc satisfies: $1 \mu m \leq Dc \leq 8 \mu m$.

It can be understood that the thickness Dc of the metal mixing layer 192 includes, but is not limited to, 1 $\mu m$, 1.2 $\mu m$, 1.5 $\mu m$, 2.1 $\mu m$, 2.7 $\mu m$, 3.3 $\mu m$, 3.8 $\mu m$, 4.2 $\mu m$, 4.6 $\mu m$, 5.1 $\mu m$, 5.5 $\mu m$, 6.0 $\mu m$, 6.4 $\mu m$, 6.8 $\mu m$, 7.2 $\mu m$, 7.9 $\mu m$, and 8 $\mu m$.

It can be understood that for the limitation of the thickness Dc of the metal mixing layer 192, on the one hand, it can ensure the material mixing depth between the first-metal post 1 and the second-metal layer 2, so as to facilitate the reliability of the bonding between the first-metal post 1 and the second-metal layer 2; on the other hand, it prevents the depth dimension of the metal mixing layer 192 from being excessively large, which may lead to higher costs in forming the conductive structure 10.

Referring to FIG. 29 and FIG. 30, in one embodiment, the metal mixing layer 192 includes a first mixing portion 1921 and a second mixing portion 1922. The first mixing portion 1921 is formed by mixing the material of the bottom wall of the barrel body 27 and the material at the end surface of the first segment 14 away from the second segment 15. The second mixing portion 1922 is formed by mixing the material of a portion at an inner circumferential surface of the barrel body 27 adjacent to the flange 28 and the material of a portion at the outer circumferential surface of the first segment 14 adjacent to the second segment 15. A thickness of the first mixing portion 1921 is greater than a thickness of the second mixing portion 1922. In this way, the bonding force between the first-metal post 1 and the second-metal layer 2 in the axial direction of the conductive structure 10 can be improved, so as to improve the reliability of the bonding between the first-metal post 1 and the second-metal layer 2.

The metal mixing layer 192 is a metallurgical layer, or the metal mixing layer 192 is an alloy layer in which the first metal material and the second metal material are embedded with each other.

Referring to FIG. 35, FIG. 35 is a structural schematic diagram of another second-metal layer 2 provided in embodiments of the present application. In one embodiment, the flange 28 extends in a looped shape along the circumferential direction of the first segment 14. In this way, the structural symmetry of the conductive structure 10 can be improved, so as to improve the stress state of the conductive structure 10, thereby enhancing the structural reliability of the conductive structure 10.

Referring to FIG. 30 or FIG. 3, in one embodiment, a diameter $\varphi b1$ of an end of the first segment 14 adjacent to the second segment 15 is less than a diameter $\varphi b2$ of an end of the first segment 14 away from the second segment 15. In this way, the side of the flange 28 adjacent to the axial line can be in a stopping fit with the first-metal post 1 along the axial line of the conductive structure 10, so as to prevent the first segment 14 from detaching from the barrel body 27.

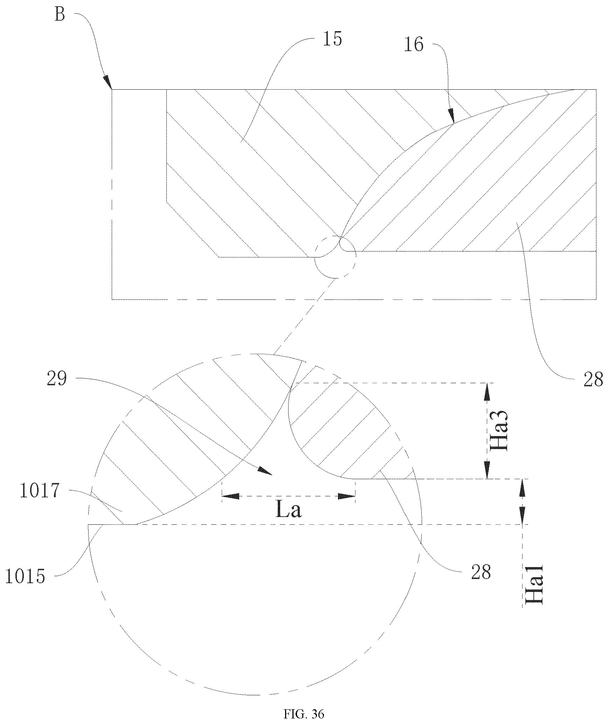

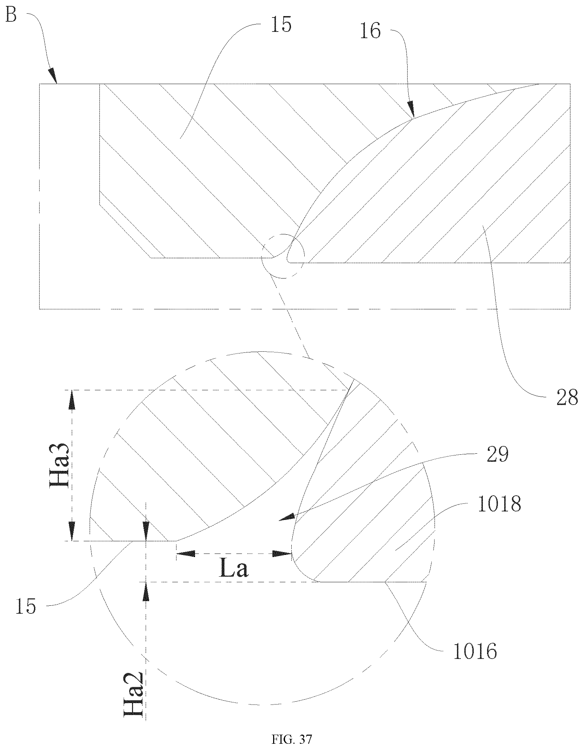

Referring to FIG. 36 or FIG. 37, in one embodiment, the end surface of the second segment 15 facing the first segment 14 is provided with a fitting groove 16. The flange 28 is embedded into the fitting groove 16. There is a second gap 29 formed between the flange 28 and the fitting groove 16. Specifically, the second gap 29 is located between the end of the flange 28 away from the axial line of the conductive structure 10 and a groove wall of the fitting groove 16. This second gap 29 compensates for the impact of thermal expansion and mutual compression between the first-metal post 1 and the second-metal layer 2 during the welding and heating process of the conductive structure 10, thereby improving the stress state of the first-metal post 1 and the second-metal layer 2.

Specifically, along the axial direction of the conductive structure 10 and along the direction toward the axial line of the conductive structure 10, the size of the second gap 29 in the radial direction of the conductive structure 10 gradually decreases, so that stress concentration at the bonding portion between the first-metal post 1 and the second-metal layer 2 can be avoided, thereby improving the stressed state of the conductive structure 10.

In addition, the side of the groove wall of the fitting groove 16 away from the axial line of the conductive structure 10 smoothly transitions to the end surface of the first segment 14 facing the second segment 15. The surface of the flange 28 away from the axial line of the conductive structure 10 transitions smoothly onto the surface of the flange 28 facing away from the first segment 14.

For example, a width of the second gap is less than or equal to 0.5 mm. The width of the second gap is a distance between two surfaces on both sides forming the second gap. Specifically, the width of the second gap is the distance of the two surfaces forming the second gap in the radial direction of the conductive structure 10.

Referring to FIG. 36 or FIG. 37, in one embodiment, the second segment 15 has a thickness Da in the axial direction of the conductive structure 10. The dimension of the second gap 29 in the radial direction of the conductive structure 10 is defined as La, satisfying: $0 < La \leq 10\%Da$; and/or the dimension of the second gap 29 in the axial direction of the conductive structure 10 is defined as Ha3, satisfying: $0 < Ha3 \leq 40\%Da$.

Specifically, the dimension of the second gap 29 in the radial direction of the conductive structure 10 is defined as La, satisfying: $0 < La \leq 10\%Da$, or the dimension of the second gap 29 in the axial direction of the conductive structure 10 is defined as Ha3, satisfying: $0 < Ha3 \leq 40\%Da$; or the dimension of the second gap 29 in the radial direction of the conductive structure 10 is defined as La, satisfying: $0 < La \leq 10\% Da$, and the dimension of the second gap 29 in the axial direction of the conductive structure 10 is defined as Ha3, satisfying: $0 < Ha3 \leq 40\%Da$.

It can be understood that the dimension La of the second gap 29 in the radial direction of the conductive structure 10 includes, but is not limited to, 1%Da, 2%Da, 3%Da, 4%Da, 5%Da, 6%Da, 7%Da, 8%Da, 9%Da, and 10%Da.

It can be understood that the dimension Ha3 of the second gap 29 in the axial direction of the conductive structure 10 includes, but is not limited to, 3%Da, 6%Da, 9%Da, 12%Da, 15%Da, 18%Da, 21%Da, 24%Da, 27% Da, 30%Da, 33%Da, 36%Da, 39%Da, and 40%Da.

In the embodiments, by limiting the dimension La of the second gap 29 in the radial direction of the conductive structure 10, it is possible to prevent the second gap 29 from being excessively wide, which may reduce the bonding property between the first-metal post 1 and the second-metal layer 2, thereby helping to ensure the structural reliability of the conductive structure 10.

In the embodiments, by limiting the dimension Ha3 of the second gap 29 in the axial direction of the conductive structure 10, it is possible to prevent the second gap 29 from being excessively high, which may reduce the bonding property between the first-metal post 1 and the second-metal layer 2, thereby helping to ensure the structural reliability of the conductive structure 10.

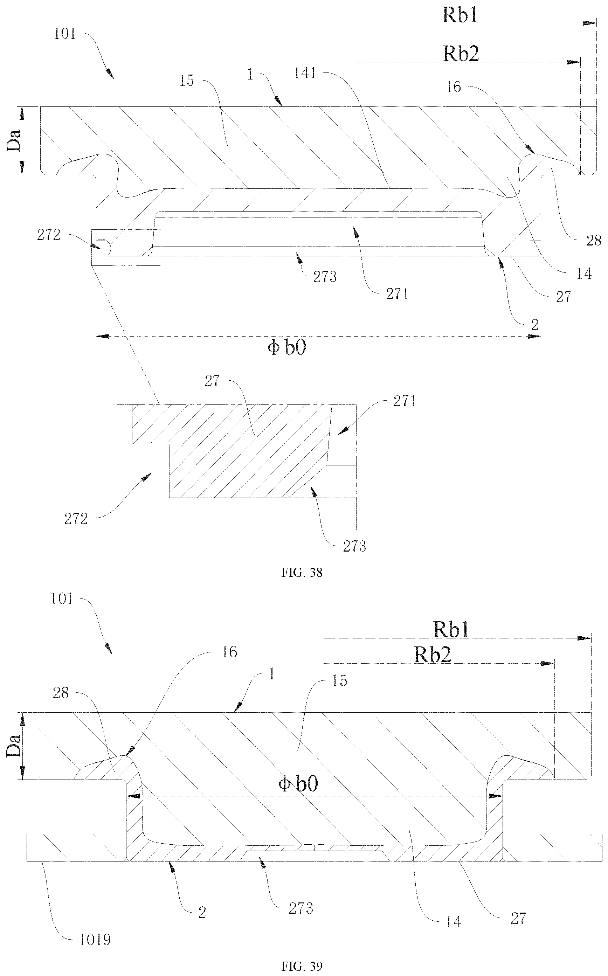

Referring to FIG. 38, FIG. 38 is a structural schematic diagram of a thirteenth conductive structure provided in embodiments of the present application. In one embodiment, an end of the barrel body 27 away from the second segment 15 is provided with a matching groove 271.

It can be understood that the current collector 120 is provided with a protruding bump 121 convex to the conductive structure 10, and the protruding bump 121 is inserted into the matching groove 271. In this way, a matching area between the current collector 120 and the conductive structure 10 can be increased by the matching between the matching groove 271 and the protruding bump 121, which is beneficial for enhancing the overcurrent capacity. Additionally, the positioning of the current collector 120 on the conductive structure 10 can be improved by the structures of the matching groove 271 and the protruding bump 121, thereby improving assembly efficiency.

The current collector 120 connects the tab with the conductive structure 10.

Referring to FIG. 38, in one embodiment, the first segment 14 includes a matching bottom wall 141 away from the second segment 15, and the bottom wall of the barrel body 27 protrudes toward the matching bottom wall 141, so as to be embedded in the matching bottom wall 141.

It can be understood that the matching groove 271 may be formed by pier pressing such that the bottom wall of the barrel body 27 protrudes toward the matching bottom wall 141, so as to be embedded in the matching bottom wall 141. In this way, the area of the bonding interface between the first-metal post 1 and the second-metal layer 2 can be increased, thereby enhancing the reliability of the bonding between the first-metal post 1 and the second-metal layer 2.

Referring to FIG. 38, in one embodiment, the first segment 14 includes the matching bottom wall 141 away from the second segment 15, a peripheral edge of the matching bottom wall 141 protrudes toward a peripheral edge of the bottom wall of the barrel body 27, so as to be embedded in the bottom wall of the barrel body 27. In this way, the area of the bonding interface between the first-metal post 1 and the second-metal layer 2 can be increased, thereby enhancing the reliability of the bonding between the first-metal post 1 and the second-metal layer 2.

Referring to FIG. 29 or FIG. 38, in one embodiment, the diameter of the end of the barrel body 27 away from the second segment 15 is less than the diameter of the end of the barrel body 27 adjacent to the second segment 15. In this way, when the barrel body 27 and other components are laser welded into one piece, the laser light can be effectively prevented from passing through the second gap 29 where the barrel body 27 is cooperated with other components, thereby preventing the component located on the side of the barrel body 27 adjacent to the second segment 15 from being burned.

For example, when a sealing member 130 is sleeved over the barrel body 27, by making the diameter of the end of the barrel body 27 away from the second segment 15 less than the diameter of the end of the barrel body 27 adjacent to the second segment 15, when the barrel body 27 and the current collector 120 are welded, a portion of the barrel body 27 having a larger diameter can block the laser light, so as to prevent the laser light from passing through the second gap 29 between the barrel body 27 and the current collector 120 and irradiating the sealing member.

Referring to FIG. 29 or FIG. 38, a specific implementation structure in which the diameter of the end of the barrel body 27 away from the second segment 15 is less than the diameter of the end of the barrel body 27 adjacent to the second segment 15 may be the following. Specifically, in one embodiment, the outer circumferential surface of the barrel body 27 is a tapered surface, or a stepped groove b 272 is provided at an end of the outer circumferential surface of the barrel body 27 away from the second segment 15, and the stepped groove b 272 extends in a looped shape along a circumferential direction of the barrel body 27. Thus, an outer circumferential structure of the barrel body 27 is simple and easy to manufacture.

It can be understood that when the diameter of the end of the barrel body 27 away from the second segment 15 is less than the diameter of the end of the barrel body 27 adjacent to the second segment 15, the aforementioned outer diameter of the barrel body 27 refers to a maximum diameter of the barrel body 27.

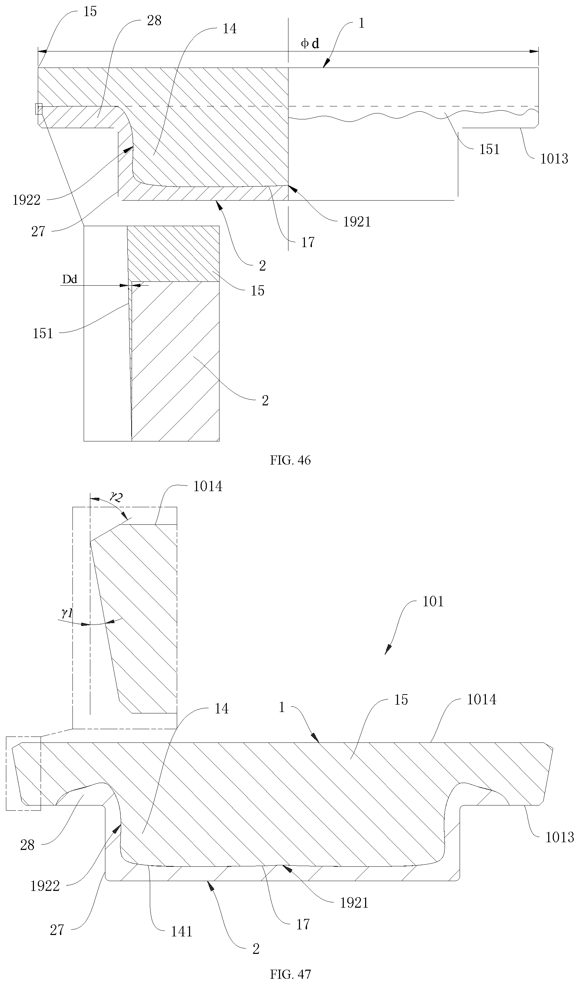

Referring to FIG. 47, in one embodiment, in a longitudinal cross-section of the first-metal post 1, the boundary line of a part of the second segment 15 is an inclined line disposed at an acute angle to the axial line of the first-metal post 1. In this way, the structural line of the second segment 15 can be increased to facilitate more positioning structure between the second segment 15 and the component to which it is connected, thereby facilitating the reliability of the matching between the second segment 15 and the component.

For example, in the longitudinal cross-section of the first-metal post 1, the boundary line corresponding to the circumferential surface of the second segment 15 is the inclined line. Specifically, the boundary line corresponding to the circumferential surface of the second segment 15 and the axial line of the first-metal post 1 form an acute included angle $\gamma 1$ on the side of the second end 12 adjacent to the second-metal layer 2.

For example, the second segment 15 includes a second surface 1014 facing away from the second-metal layer 2, and in the longitudinal cross-section of the first-metal post 1, the boundary line corresponding to a portion of the second surface 1014 adjacent to an edge is the inclined line. Specifically, the boundary line corresponding to the portion of the second surface 1014 adjacent to the edge and the axial line of the first-metal post 1 form an acute included angle $\gamma 2$ on the side of the second surface 1014 adjacent to the first end 11.

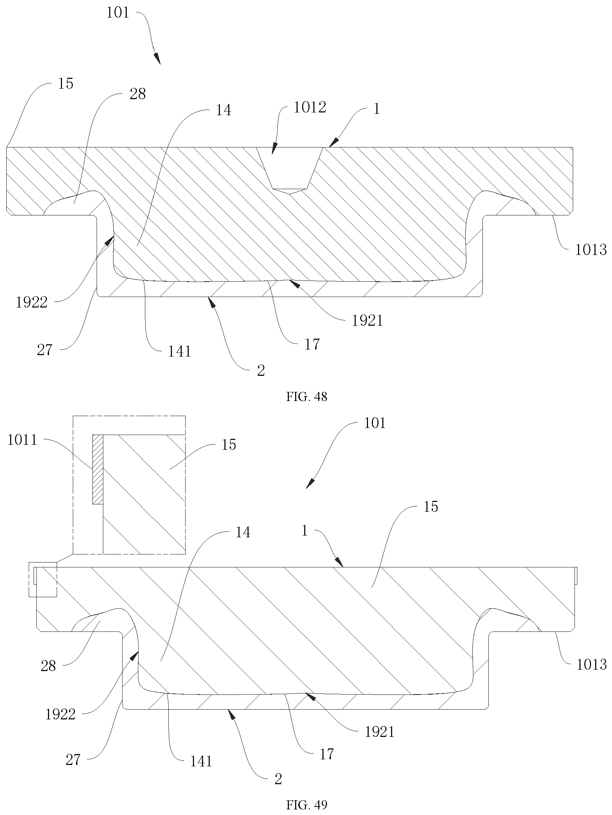

Referring to FIG. 48, in one embodiment, an end surface 20b of the second segment 15 facing away from the first segment 14 is provided with an inwardly-recessed hole 1012. The inwardly-recessed hole 1012 extends along the axial line of the first-metal post 1. The inwardly-recessed hole 1012 is disposed adjacent to the axial line of the first-metal post 1. An aperture diameter of the inwardly-recessed hole decreases as approaching the first segment 14. In this way, more positioning structure can be ensured between the second segment 15 and the component to which it is connected, thereby facilitating the reliability of the matching between the second segment 15 and the component, and increasing the surface area of the second segment 15 to facilitate heat conduction or heat dissipation.

Referring to FIG. 49, in one embodiment, the conductive structure 10 further includes a second metal strip 1011. The second metal strip 1011 is disposed on the circumferential surface of the second segment 15 and is disposed away from the first segment 14. The second metal strip 1011 extends in a looped shape along a circumferential line of the second segment 15. In this way, the electrical conductivity of the second segment 15 can be improved to facilitate the overcurrent capacity between the second segment 15 and the components to which it is connected.

It can be understood that the material of the second metal strip 1011 is the same as the material of the second-metal layer 2, and both of them may be copper material.

In one embodiment, the conductive structure 10 is the pole 101 of the battery cell, and at least the end portion 20 of the flange 28 is configured to be located on the side of the cover plate 110 of the battery cell facing away from the electrode assembly 1200 of the battery cell. In this way, the flange 28 can be supported and limited by the cover plate 110, so that the second-metal layer 2 can be effectively prevented from detaching from the aluminum layer under the pulling of the internal components of the battery core.

The second-metal layer 2 is configured to be located inside the battery cell.

Referring to FIG. 46, FIG. 46 is a structural schematic diagram of a thirteenth conductive structure provided in embodiments of the present application. In one embodiment, the second end of the first-metal post 1 is provided with an extension portion 151 extending toward the first end. The extension portion 151 at least wraps a part of the end portion of the second-metal layer 2. In this way, the area of the matching surface between the first-metal post 1 and the second-metal layer 2 can be increased, thereby enhancing the reliability of the bonding between the first-metal post 1 and the second-metal layer 2.

For example, the blank material for forming the first-metal post 1 and the blank material for forming the second-metal layer 2 are integrated by pier pressing, followed by a shaping process, to obtain a finished part.

A portion of the finished part with a larger radial dimension is then trimmed, with a trimming direction being from the second segment toward the first segment. During trimming, a part of the first metal material is driven to slide or flow toward the end portion of the second-metal layer 2 by the squeezing force between a cutting blade and the first-metal post 1, thereby forming the extension portion 151 that covers a portion of the end portion of the second-metal layer 2.

In one embodiment, at least both sides of the second-metal layer 2 are wrapped by the extension portions 151. In this way, the symmetry of the wrapping of the second-metal layer 2 by the extension portions 151 can be improved, thereby enhancing the reliability of the bonding between the first-metal post 1 and the second-metal layer 2.

In one embodiment, the thicknesses of the two extension portions 151 are different. It can be understood that a battery pack includes a plurality of battery cores arranged in parallel. Each battery core is provided with a pole. When the conductive structure 10 serves as the pole, the heat it experiences varies depending on the position of the battery core. Correspondingly, the temperature around the circumference of the pole may also vary depending on the orientation. Based on this, according to the layout position of the battery cores, the extension portion 151 at the portion where the pole is subjected to higher heat may be thickened, so that the portion where the pole is subjected to higher heat may have better heat dissipation performance.

In one embodiment, the first-metal post 1 includes the first segment 14, the second segment 15, and extension portion 151 connected in sequence. An outer diameter of the first segment 14 is less than an outer diameter of the second segment 15. The second segment 15 includes a first surface 1013 adjacent to the first segment 14. An end of the first segment 14 away from the second segment 15 is a first end, and an end of the second segment 15 away from the first segment 14 is a second end. The second-metal layer 2 wraps the first segment 14, and the end portion of the second-metal layer 2 extends along the first surface 1013 toward a circumferential surface of the second segment 15. An end of the extension portion 151 is connected to the circumferential surface of the second segment 15, and another end of the extension portion 151 extends toward the first end. In this way, the conductive structure 10 can be made to have a T-shaped structure, which is beneficial for the conductive structure 10, when serving as the pole 101, to include a structure in a stopping fit with the cover plate 110 of the battery core, so that the conductive structure 10 can be clamped on the cover plate 110 by the second segment 15 and the terminal pressing block 102 or by the second segment 15 and the bottom plate 1019. In this way, the reliability of the matching between the conductive structure 10 and the cover plate 110 can be improved.

Referring to FIG. 46, in one embodiment, the diameter of the second segment is $\varphi d$, and the extension portion 151 has a thickness Dd in the radial direction of the first-metal post, satisfying: $0 < Dd \leq 0.3\varphi d$.

It is understood that the thickness Dd includes, but is not limited to, $0.02\varphi d$, $0.05\varphi d$, $0.08\varphi d$, $0.1\varphi d$, $0.12\varphi d$, $0.14\varphi d$, $0.16\varphi d$, $0.18\varphi d$, $0.2\varphi d$, $0.22\varphi d$, $0.24\varphi d$, $0.26\varphi d$, $0.28\varphi d$, $0.29\varphi d$, and $0.3\varphi d$.

In the embodiments, through the aforementioned limitations, the thickness Dd of the extension portion 151 can be presented from becoming excessively large, which would otherwise result in a smaller radial bonding dimension between the first-metal post 1 and the second-metal layer 2, thereby ensuring the reliability of the bonding between the first-metal post 1 and the second-metal layer 2.

In a second aspect, embodiments the present application also provide a manufacturing method of a conductive structure 10. Specifically, the manufacturing method of the conductive structure 10 includes:

S10, providing a blank material, the blank material including a first layer and a second layer, the first layer including a first metal, and the second layer including a second metal;

S20, placing the blank material in a mold cavity of a first cold heading mold, and keeping the first layer and the second layer sequentially stacked along a direction from the outside to the inside of the mold cavity,

S30, performing a first cold heading treatment on the blank material, such that when the first layer presses the second layer by means of high-force constraint of the first cold heading mold, the first layer deforms and penetrates into the second layer, and the second layer is thinned and extends toward a peripheral side of the first layer, so as to obtain a semi-finished product; and

S40, performing a first shaping process on the semi-finished product to obtain the conductive structure 10.

The blank material includes the first layer and the second layer. The first layer includes the first metal, that is, the first layer is a metal layer, and the material of the first layer is the first metal. The second layer includes the second metal, that is, the second layer is also a metal layer, and the material of the second layer is the second metal. The first metal is different from the second metal. As an example, the first metal is aluminum, and the second metal is copper. Optionally, the first layer and the second layer in the blank material are stacked or laminated together. Of course, under some conditions, the first layer and the second layer in the blank material may also be separable, since the subsequent first cold heading process may also cause the first layer and the second layer to be bonded together, and therefore the first layer and the second layer are not necessarily required to be bonded together in the blank material.

The first cold heading mold includes a mold cavity, and the blank material is placed in the mold cavity. Specifically, along the direction from the outside to the inside of the mold cavity, the first layer and the second layer are kept stacked sequentially, that is, the second layer is closer to a bottom wall of the mold cavity than the first layer, and the first layer is closer to an opening of the mold cavity than the second layer. When the blank material is placed in the mold cavity, the blank material may be completely accommodated in the mold cavity, or one end of the blank material may be inserted into the mold cavity. A portion of the blank material inserted into the mold cavity may be exactly adapted to the size of the mold cavity or may be smaller than the mold cavity. The mold cavity may have different shapes. Generally, the shape of the mold cavity affects a shape of the semi-finished product. As an example, when the mold cavity includes a first cavity section and second cavity section communicated with each other. An inner diameter of the first cavity section is less than an inner diameter of the second cavity section, the first cavity section is columnar, and the second cavity section is bowl-shaped.

The first cold heading treatment refers to performing pier pressing on the blank material. For example, a punch of a cold heading machine is used to stamp the blank material. Since when the blank material is placed in the mold cavity of the first cold heading mold, the second layer of the blank material is oriented towards the inside of the mold cavity, and the first layer of the blank material is oriented towards the outside of the mold cavity, so that the punch of the cold heading machine acts directly on the first layer, i.e. presses the blank material from a side surface of the first layer facing away from the second layer. Since both the first layer and the second layer are metal layers, and metal has ductility, when the blank material is subjected by pier pressing, the first layer and the second layer are deformed and stretched. For example, when the blank material is subjected by pier pressing in an axial direction of the blank material, the first layer and the second layer are stretched in a radial direction of the blank material.

Since the blank material is placed in the mold cavity of the first cold heading mold, the first cold heading mold, specifically a high-force constraint action applied by a sidewall of the mold cavity on the blank material, which is referred to as high-force constraint for short, regulates the direction in which the first layer and the second layer are deformed and stretched. Therefore, the first cold heading treatment may also be referred to as high-force constraint processing or cold heading forming. Generally, a thickness of the sidewall of the mold cavity in the first cold heading mold, the material of the first cold heading mold, etc. may affect the high-force constraint of the first cold heading mold. As an example, the first cold heading mold is a stainless steel mold.

It can be understood that when the blank material is subjected by pier pressing, since the first layer and the second layer are stacked, the first layer presses the second layer. However, due to the high-force constraint of the first cold heading mold, the first layer is deformed and intrudes into the second layer due to the pressure, and the second layer is deformed and thinned due to the pressure and extends to a peripheral side of the first layer, i.e. along a tiny gap between the first layer and the sidewall of the mold cavity, to obtain the semi-finished product.

In order to improve the dimensional accuracy, shape, surface roughness of the semi-finished product, remove excess material, etc., the semi-finished product is continuously subjected to the first shaping process, thereby obtaining the conductive structure 10 satisfying the requirements. The first shaping process includes, but is not limited to, at least one of die cutting, polishing, and grinding.

Optionally, the manufacturing method of the conductive structure 10 is configured to prepare the conductive structure 10 provided in the first aspect. The first layer is deformed by pier pressing to obtain the first-metal post 1, and the second layer is deformed by pier pressing to obtain the second-metal layer 2.

In the manufacturing method of the conductive structure 10 provided in the embodiments of the present application, the first layer and the second layer are bonded together by using cold heading forming, and during the process of cold heading forming, the deformation, extension and intrusion of the first layer and the second layer can make the bonding interface between the first layer and the second layer become a microscopically uneven surface, so that the area of the bonding interface is increased and the bonding strength is enhanced. In addition, during the process of cold heading forming, the second layer extends to the peripheral side of the first layer, that is, the second layer is not only bonded to the bottom surface of the first layer, but also bonded to the side surface of the first layer, further increasing the bonding area of the two and enhancing the bonding strength.

In some embodiments, in the blank material, the first layer and the second layer are stacked together. It can be understood that in the blank material, the first layer is located on a side of the second layer, and the first layer and the second layer are bonded together. By first stacking and bonding the first layer and the second layer, it facilitates feeding both the first layer and the second layer together and placing them into the mold cavity, thereby simplifying the manufacturing process of the conductive structure 10.

In some embodiments, in the blank material, a ratio of an average thickness of the second layer to an average thickness of the blank material ranges from 0.1 to 0.2. That is, the average thickness of the first layer is much greater than the average thickness of the second layer. Generally, the second layer should not be too large, otherwise the second layer is not easily extended, especially when the hardness of the second metal is greater than the hardness of the first metal, the manufacturing difficulty during the first cold heading process increased. The second layer should not be too thin, otherwise the second layer is easily broken during the process of the cold heading forming. As an example, the ratio of the average thickness of the second layer to the average thickness of the blank material is 0.1, 0.11, 0.12, 0.13, 0.14, 0.15, 0.16, 0.17, 0.18, 0.19, or 0.2.

In some embodiments, in the blank material, an edge of the second layer protrudes from an edge of the first layer. The edge of the second layer appropriately protrudes from the edge of the first layer, so that when the blank material is placed into the mold cavity of the first cold heading mold, a certain gap can be maintained between the side of the first layer and the inner sidewall of the mold cavity, and during the first cold heading process, the existence of the gap can promote the extension to the peripheral side of the first layer, thereby reducing the manufacturing difficulty.

In some embodiments, the providing the blank material includes preparing the blank material, and the manufacturing process of the blank material includes:

S11, providing a composite plate, the composite plate including the first layer and the second layer stacked and bonded together; and
S12, performing die cutting on the composite plate to obtain the blank material.

Optionally, the blank material is columnar. As an example, the first metal is aluminum, and the second metal is copper, the composite plate is a copper-aluminum composite plate, and the copper-aluminum composite plate includes a copper layer and an aluminum layer arranged in a stacking manner. A copper-aluminum composite column, i.e., the blank material, can be obtained by die cutting the copper-aluminum composite plate.

By applying the composite plate to obtain the blank material, the process is simple and easy to manufacture.

In some embodiments, the manufacture method of the conductive structure further includes:
S13, performing a second shaping process on the blank material before placing the blank material in the mold cavity.

It can be understood that shaping refers to adjusting the geometry, size, etc. of the blank material.

In some embodiments, the manufacture method of the conductive structure further includes:
S14, before placing the blank material in the mold cavity, screening the blank material such that the second layer faces the bottom wall of the mold cavity when the blank material is fed into the mold cavity.

During the manufacturing process, the conductive structures 10 are mass-produced. During the manufacturing process, the blank materials may experience situations such as tipping over or reversing, which may affect the feeding process, especially automatic feeding. Therefore, the blank materials are screened before feeding, and the blank materials meeting the requirements are screened out for feeding. The reversing here means that the orientation of the first layer and the second layer in the blank material is opposite to what is required. For example, when feeding, it is required that the first layer in the blank material is facing upward and the second layer is facing downward, when the first layer in the blank material is facing downward and the second layer is facing upward, it is considered reversing.

As an example, the columnar blank materials may be placed in a screening tray, and the screening tray may be used to screen the blank materials so that the orientation of the first layer in the screened blank materials is consistent and meets the requirements.

In some embodiments, the manufacture method of the conductive structure further includes:
S31, after performing the first cold heading treatment on the blank material, placing the blank material that has completed the first cold heading treatment in a second cold heading mold, i.e., placing the semi-finished product in the second cold heading mold, and pressing a side surface of the first layer facing away from the second layer.

This refers to performing a secondary cold heading process on the semi-finished product, where the second cold heading mold can be used to further adjust the size, shape, etc., of the semi-finished product. If a different second cold heading mold is used, the shape of the resulting conductive structure 10 is also different.

The manufacturing method of the conductive structure 10 provided in the embodiments of the present application can also effectively improve the production efficiency of the conductive structure 10, reduce the waste of materials, and better control the production cost, and the conductive structure 10 produced by the method has a stable dimension and is easy to meet product usage requirements.

In a third aspect, embodiments of the present application further provide a cover plate assembly. The cover plate assembly is configured to fit with a shell of the battery cell to form a closed accommodating cavity, and the accommodating cavity is configured to accommodate an electrode assembly of the battery cell.

Specifically, referring to FIG. 8, FIG. 9, and FIG. 18, the cover plate assembly 100 includes a cover plate 110 and the aforementioned conductive structure 10 (which may be the conductive structure 10 provided in the first aspect or the conductive structure 10 manufactured by the method provided in the second aspect), and the conductive structure 10 is connected to the cover plate 110. Specifically, the conductive structure 10 is provided penetrating the cover plate 110. It may mean that the first-metal post 1 is provided penetrating the cover plate 110, or the second-metal layer 2 is provided penetrating the cover plate 110, or the first-metal post 1 and the second-metal layer 2 are together provided penetrating the cover plate 110.

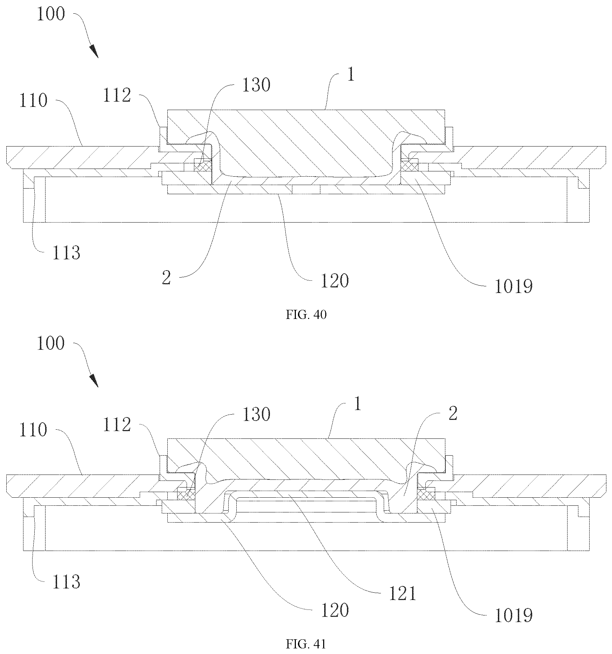

In addition, referring to FIG. 40, FIG. 41, FIG.

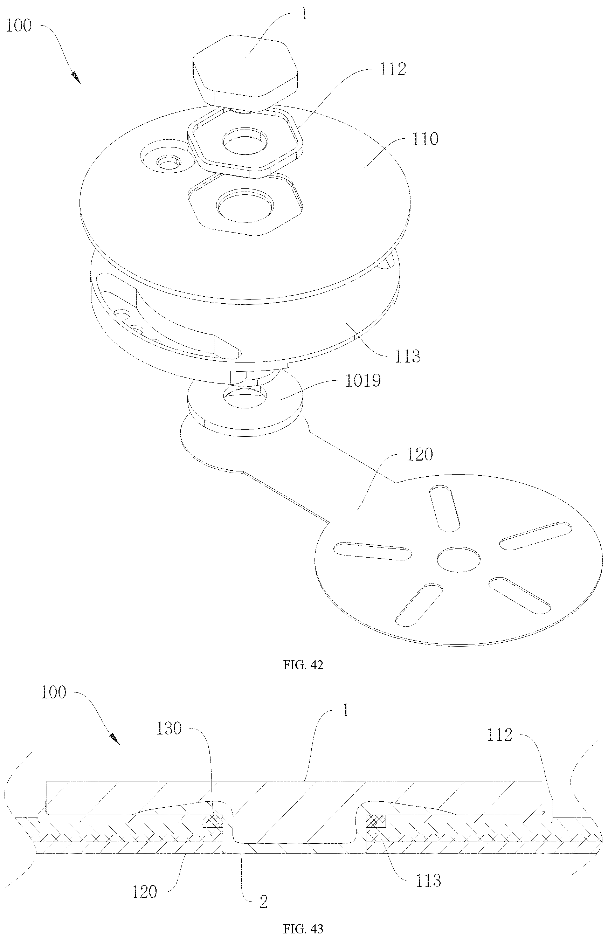

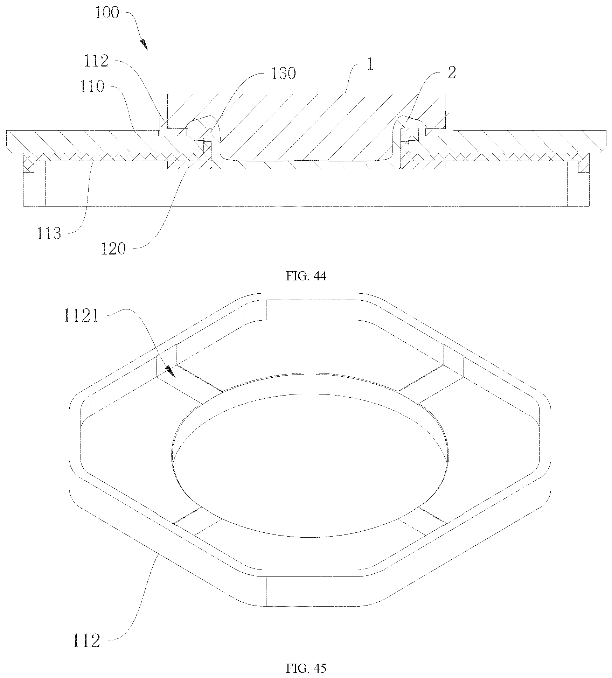

42, FIG. 43, or FIG. 44, FIG. 40 is a structural schematic diagram of a first cover plate assembly 100 provided in embodiments of the present application, FIG. 41 is a structural schematic diagram of a second cover plate assembly 100 provided in embodiments of the present application, FIG. 42 is a structural schematic diagram of a third cover plate assembly 100 provided in embodiments of the present application, FIG. 43 is a structural schematic diagram of a fourth cover plate assembly 100 provided in embodiments of the present application, and FIG. 44 is a structural schematic diagram of a fifth cover plate assembly 100 provided in embodiments of the present application. It can be understood that the conductive structure 10 may include a bottom plate 1019, as shown in FIG. 40 to FIG. 43. The conductive structure 10 may also lack the base plate 1019 and be directly clamped onto the cover plate via the current collector 120 and the second segment 15, as shown in FIG. 44.

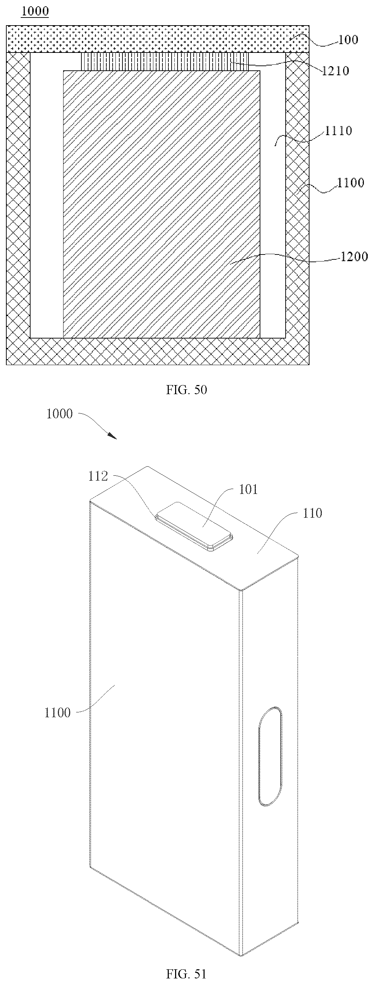

In detail, along a thickness direction of the cover plate 110, the cover plate 110 includes a first surface A and a second surface A opposite to each other. Referring to FIG. 50, when the cover plate assembly 100 is installed on the shell 1100 of the battery cell 1000, the first surface A is a side surface away from the shell 1100, and the second surface A is a side surface adjacent to the shell 1100. In the thickness direction of the cover plate 110, a mounting hole 114 is provided to penetrate through the cover plate 110, and the conductive structure 10 is provided penetrating the cover plate 110 via the mounting hole 114.

In some embodiments, the conductive structure 10 is a pole 101, or the conductive structure 10 is a pole 101 and a terminal pressing block 102 integrated with each other. The cover plate assembly 100 further includes a current collector 120. The current collector 120 is a conductive component in the battery cell 1000 configured to connect with the tab 1210 of the electrode assembly 1200. The current collector 120 is located on a side of the cover plate 110, specifically a side of the cover plate 110 facing away from the terminal pressing block 102, i.e. the current collector 120 is located on the second surface A of the cover plate 110. The current collector 120 is welded to the conductive structure 10. Specifically, the current collector 120 is welded to the second-metal layer 2 in the conductive structure 10. Optionally, the material of the current collector 120 is the same as the material of the second-metal layer 2, that is, the material of the current collector 120 is the second metal, so that the difficulty of welding between the current collector 120 and the second-metal layer 2 can be reduced and the reliability of welding can be improved.

In some embodiments, the current collector 120 includes at least one of a current collecting plate and a connecting piece 1202.

In some embodiments, referring to FIG. 9, the current collector 120 includes a current collector body 1201 and a connecting piece 1202. The current collector body 1201 is connected to the connecting piece 1202.

The current collector body 1201 is configured to connect to the tab 1210 of the electrode assembly 1200, and the connecting piece 1202 is welded to the second-metal layer 2.

In some embodiments, the cover plate assembly 100 includes a cover plate 110, a first insulating member 112, and a second insulating member 113. The first insulating member 112 and the second insulating member 113 are respectively arranged on opposite sides of the cover plate 110. The first insulating member 112 is arranged between the conductive structure 10 and the cover plate 110, and the second insulating member 113 is arranged between the cover plate 110 and the current collector 120. Optionally, under the condition that the first-metal post 1 in the conductive structure 10 is provided with the boss 13, the first insulating member 112 is arranged between the boss 13 and the cover plate 110. The cover plate 110 is provided with a mounting hole 114, the mounting hole 114 penetrates through the cover plate 110, the first insulating member 112, and the second insulating member 113. As an example, the cover plate 110 is an aluminum foil light sheet, and the first insulating member 112 and the second insulating member 113 are both plastic members.

It can be understood that the first insulating member 112 is an upper plastic member, and the second insulating member 113 is a lower plastic member. The first insulating member 112 insulates and isolates the second segment 15 and the flange 28 from the cover plate 110. The second insulating member 113 insulates and isolates the cover plate 110 from the current collector 120, the tab, the electrode assembly, etc.

In some embodiments, the cover plate assembly 100 further includes a sealing member 130. The sealing member 130 is disposed on a side of the cover plate 110 adjacent to the first insulating member 112, for example, as shown in FIG. 42 and FIG. 43, the sealing member 130 is located between the cover plate 110 and the conductive structure 10, so as to seal a gap between the conductive structure 10 and the mounting hole to prevent electrolyte from leaking therefrom. As an example, the sealing member 130 is located between the cover plate 110 and the second insulating member 113.

In another embodiment, the sealing member 130 may also be disposed on a side of the cover plate 110 adjacent to the second insulating member 113, for example, the sealing member 130 may be disposed between the bottom plate 1019 and the cover plate 110, and the bottom plate 1019 is connected to the end of the barrel body 27 away from the second segment 15, as shown in FIG. 40 and FIG. 41.

The specific installation position of the sealing member 130 is selected according to the application scenario.

Referring to FIG. 45, FIG. 45 is a structural schematic diagram of the first insulating member 112 provided in embodiments of the present application. In one embodiment, a surface of the first insulating member 112 away from the cover plate 110 is provided with an air-exhausting groove 1121. Both ends of the air-exhausting groove 1121 extend to an inner circumferential surface and an outer circumferential surface of the first insulating member 112, respectively. The air-exhausting groove 1121 facilitates that after the air pressure in the battery cell 1000 reaches a certain threshold, the gas inside the battery cell 1000 passes through the sealing member 130 to come between the flange 28 and the air-exhausting groove 1121, and is discharged through the air-exhausting groove 1121, so as to facilitate the pressure relief of the battery cell 1000.

In addition, a cross-section of a terminal is non-circular, and a limiting groove is provided on the first insulating member 112, and at least a part of the terminal is positioned in the limiting groove and fits with an inner wall of the limiting groove. In this way, the first insulating member 112 can prevent the terminal from being twisted, thereby improving the torsional strength of the cover plate assembly 100.

For example, the cross-section of the terminal is rectangular, and and chamfered corners are provided at all four corners.

In the embodiments of the present application, the sealing member 130 may be disposed between the cover plate 110 and the flange 28, as shown in FIG. 43; and the sealing member 130 may also be disposed between the bottom plate 1019 and the cover plate 110, as shown in FIG. 40 and FIG. 41. The barrel body 27 may be welded to the bottom plate 1019 or may be riveted to the bottom plate 1019. When the barrel body 27 and the bottom plate 1019 are welded, the barrel body 27 and the bottom plate 1019 may be riveted first, and then welded together. In order to achieve riveting, the bottom of the barrel body 27 is provided with a pre-punched hole 273, as shown in FIG. 38 and FIG. 39. A matching groove 271 may be provided at the bottom of the barrel body 27 to fit with a protruding bump 121 on the current collector 120, as shown in FIG. 38 and FIG. 41. As shown in FIG. 29, FIG. 40, and FIG. 43, the bottom of the barrel body 27 may be a flat surface. The conductive structure may include a bottom plate, as shown in FIG. 40 and FIG. 43; and the bottom plate 1019 may not be provided at the bottom of the conductive structure 10, as shown in FIG. 44. Each of the above-described setting methods and combinations thereof are set according to actual application scenarios, and the embodiments are not limited thereto.

Referring to FIG. 36 or FIG. 37, in one embodiment, the first-metal post 1 includes a first segment 14 and a second segment 15 connected to each other, and the outer diameter of the first segment 14 is less than the outer diameter of the second segment 15. An end of the first segment 14 away from the second segment 15 is the first end, and an end of the second segment away from the first segment is the second end. The second-metal layer 2 includes the barrel body 27 and the flange 28. The barrel body 27 wraps the first segment 14, and the flange 28 is connected to the end of the barrel body 27 adjacent to the second segment 15. The flange 28 extends in the radial direction of the conductive structure 10 and is embedded in the end surface of the second segment 15 facing the first segment 14. The second segment 15 and the flange 28 are located on a side of the first insulating member 112 facing away from the cover plate 110. Moreover, when the second segment 15 and the flange 28 are configured to be located outside the battery cell, and the second segment 15 includes a first surface 1013 adjacent to the first segment 14. The first surface 1013 includes a first region 1015 located on an outer peripheral side of the flange 28. The surface of flange 28 facing away from the second segment 15 is a second region 1016. There is a height difference between the first region 1015 and the second region 1016. The first region 1015 and the second region 1016 are both connected with the first insulating member 112 in a pressing manner.

It can be understood that one of the first region 1015 and the second region 1016 is outwardly protruded in the axial direction of the conductive structure 10 to form the height difference.

For example, along the axial direction of the first-metal post 1, the first region 1015 is outwardly protruded from the first surface 1013. Alternatively, along the axial direction of the first-metal post 1, the second region 1016 is outwardly protruded from a plane on which the first surface 1013 is located.

It can be understood that a cross-section of the second segment 15 may be cylindrical, polygonal, or special-shaped.

It can be understood that the first region 1015 and the second region 1016 are in contact with the first insulating member 112 such that the first insulating member 112 is axially compressed, thereby achieving sealing of a mating surface between the conductive structure 10 and the first insulating member 112. While there is a height difference between the first region 1015 and the second region 1016 such that one of the two closer to the first insulating member 112 exerts a greater pressing force on the first insulating member 112.

In the embodiments, by forming the height difference between the first region 1015 and the second region 1016, one of the two closer to the first insulating member 112 exerts a greater pressing force on the first insulating member 112. In this way, the pressing force of the conductive structure 10 to the first insulating member 112 can be locally increased, so that the sealing property between the conductive structure 10 and the first insulating member 112 can be improved on the basis of controlling the amount of material used in the conductive structure 10, so as to facilitate improving the reliability of the battery cell 1000.

Additionally, when the first region 1015 is outwardly protruded in the axial direction of the conductive structure 10, the sealing property of an outer periphery of a press-fit surface between the conductive structure 10 and the first insulating member 112 can be improved, so that external debris, impurities, etc. can be effectively prevented from entering between the conductive structure 10 and the first insulating member 112, and the stability of the sealing structure between the conductive structure 10 and the first insulating member 112 can be facilitated.

At the same time, when the second region 1016 is outwardly protruded in the axial direction of the conductive structure 10, the pressure on the inner peripheral side of the first insulating member 112 can be greatly increased, so that the amount of deformation on the inner peripheral side of the insulating member 112 is increased, allowing the periphery of the first insulating member 112 to be warped towards the end surface of the second segment 15, so as to facilitate improving the sealing property between the conductive structure 10 and the first insulating member 112 at the peripheral edge.

Referring to FIG. 36, in one embodiment, along the axial direction of the first-metal post 1, the first region 1015 is outwardly protruded along the axial direction of the conductive structure 10, and a thickness dimension of the first region 1015 protruding relative to the second region 1016 is defined as Ha1, and the second segment 15 has a thickness Da in the axial direction of the conductive structure 10, satisfying: $0 < Ha1 \leq 15\%Da$.

It can be understood that the thickness dimension Ha1 of the first region 1015 protruding outwardly includes, but is not limited to, 1%Da, 2%Da, 3%Da, 4%Da, 5%Da, 6%Da, 7%Da, 8%Da, 9%Da, 10%Da, 11%Da, 12%Da, 13%Da, 14%Da, and 15%Da.

For example, the thickness Da of the conductive structure 10 is 2 mm, and Ha1 = 10%Da = 0.2 mm.

In the embodiments, through the above limitations, on the one hand, the material amount of the first region 1015 protruding outwardly can be controlled to facilitate the control of the weight of the conductive structure 10. On the other hand, the thickness dimension Ha1 of the first region 1015 protruding outwardly can be prevented from being excessively large, which may make the fit between the conductive structure 10 and the first insulating component 112 more difficult and the dimensional chain more complex.

When the air-exhausting groove 1121 is provided on the surface of the first insulating member 112 facing away from the cover plate 110, the first region 1015 is outwardly protruded along the axial direction of the first-metal post 1. In this way, the flow of gas between the first insulating member 112 and the second region 1016 can be improved, thereby facilitating the improvement of the exhaust effect.

In one embodiment, $2\%Da \leq Ha1 \leq 15\%Da$. In this way, the pressing connection of the first region 1015 with the first insulating member 112 can be made more obvious, so that the first region 1015 protruding outwardly can be more obvious in improving the sealing performance between the conductive structure 10 and the first insulating member 112.

Referring to FIG. 37, in one embodiment, along the axial direction of the first-metal post 1, the second region 1016 is outwardly protruded in the axial direction of the conductive structure 10. A thickness dimension of the second region 1016 protruding relative to the first region 1015 is defined as Ha2. The second segment 15 has a thickness Da in the axial direction of the conductive structure 10, satisfying: $0 < Ha2 \leq 15\%Da$.

It can be understood that the thickness dimension Ha2 of the second region 1016 protruding outwardly includes, but is not limited to, 1%Da, 2%Da, 3%Da, 4%Da, 5%Da, 6%Da, 7%Da, 8%Da, 9%Da, 10%Da, 11%Da, 12%Da, 13%Da, 14%Da, and 15%Da.

For example, the thickness Da of the second segment 15 in the axial direction of of the conductive structure 10 is 2 mm, and Ha2 = 10%Da = 0.2 mm.

In the embodiments, through the above limitations, on the one hand, the material amount of the second region 1016 protruding outwardly can be controlled to facilitate the control of the weight of the conductive structure 10. On the other hand, the thickness dimension Ha2 of the second region 1016 protruding outwardly can be prevented from being excessively large, which may make the fit between the conductive structure 10 and the first insulating component 112 more difficult and the dimensional chain more complex.

In one embodiment, $2\%Da \leq Ha2 \leq 15\%Da$. In this way, the pressing connection of the second region 1016 with the first insulating member 112 can be made more obvious, so that the second region 1016 protruding outwardly can be more obvious in improving the sealing performance between the conductive structure 10 and the first insulating member 112.

In one embodiment, the first region 1015 is outwardly protruded in the axial direction of the conductive structure 10 to form a first protruding portion 1017, and the first protruding portion 1017 extends in a looped shape along a circumferential direction of the conductive structure 10; or the second region 1016 is outwardly protruded along the axial direction of the conductive structure 10 to form a second protruding portion 1018, and the second protruding portion 1018 extends in a looped shape along the circumferential direction of the conductive structure 10.

In the embodiments, by making the first protruding portion 1017 extend in a looped shape along the circumferential direction of the conductive structure 10, the stress uniformity of the conductive structure 10 and the first insulating member 112 can be improved, so as to facilitate the improvement of the stress state of the battery cell 1000 and avoid stress concentration.

In addition, by making the second protruding portion 1018 extend in a looped shape along the circumferential direction of the conductive structure 10, the stress uniformity of the conductive structure 10 and the first insulating member 112 can be improved, so as to facilitate the improvement of the stress state of the battery cell 1000 and avoid stress concentration.

In some embodiments, the assembly process of the cover plate assembly 100 includes: stacking the second insulating member 113, the sealing member 130, the cover plate 110, and the first insulating member 112 in sequential hole alignment from bottom to top; inserting the conductive structure 10 through the mounting hole 114 from top to bottom such that a larger end (e.g., the boss 13) of the conductive structure 10 abuts on the first insulating member 112; installing the current collector 120 on a side of the second insulating member 113 facing away from the sealing member 130; and welding the current collector 120 to the conductive structure 10, e.g., the second-metal layer 2 in the conductive structure 10, by laser welding.

In some embodiments, the cover plate assembly 100 further includes an explosion-proof valve 140, and the explosion-proof valve 140 is disposed on the cover plate 110.

In some embodiments, the cover plate 110 is further provided with a liquid-injecting hole 115 and a sealing structure (not shown) for sealing the liquid-injecting hole.

Referring to FIG. 39, FIG. 39 is a structural schematic diagram of a thirteenth conductive structure provided in embodiments of the present application. In one embodiment, the conductive structure 10 further includes the bottom plate 1019. The second-metal layer 2 includes the barrel body 28. The barrel body 27 wraps the first end and extends toward the second end. The bottom plate 1019 is connected to the end of the barrel body 27 away from the second end.

Specifically, the bottom plate 1019 is welded to the barrel body 27, or the conductive structure 10 is riveted to the bottom plate 1019.

It can be understood that the bottom plate 1019 may mate with the cover plate 110 of the battery cell to compress the sealing member 130 therebetween, thereby achieving a sealing fit between the conductive structure 10 and the cover plate 110.

Referring to FIG. 39, in one embodiment, the bottom plate 1019 is sleeved on the barrel body 27. The bottom plate 1019 is riveted to the barrel body 27. The end of the barrel body 27 away from the second end is provided with a pre-punched hole 273. In a direction away from the second end, a hole diameter of the pre-punched hole 273 gradually increases. Thus, when connecting the conductive structure 10 and the bottom plate 1019, a tooling device can be applied to compress the pre-drilled hole 273, causing the second-metal layer 2 to expand radially outward, thereby reducing the fitting second gap 29 between the conductive structure 10 and the bottom plate 1019 to facilitate riveting of the conductive structure 10 and the bottom plate 1019.

It can be understood that when the matching groove 271 is provided at the end of the barrel body 27 away from the second end, the pre-punched hole 273 is provided at an opening of the matching groove 271.

In one embodiment, a stepped groove b 272 is provided at the end of the barrel body 27 away from the second end. The stepped groove b 272 extends in a looped shape along the circumferential direction of the barrel body 27. The bottom plate 1019 is sleeved in the stepped groove b 272. In this way, the stepped groove b 272 can be used to enhance the fitting structure between the bottom plate 1019 and the barrel body 27, thereby facilitating the installation of the bottom plate 1019 onto the barrel body 27, and improving assembly efficiency.

In one embodiment, the bottom plate 1019 is welded to the barrel body 27. In this way, the stability of the connection between the bottom plate 1019 and the barrel body 27 can be improved.

It can be understood that when welding the conductive structure 10 to the bottom plate 1019, a tooling device can be applied first to compress the pre-drilled hole 273, causing the second-metal layer 2 to expand radially outward, thereby reducing the fitting second gap 29 between the conductive structure 10 and the bottom plate 1019 to rivet the conductive structure 10 to the bottom plate 1019. The conductive structure 10 is then welded to the bottom plate 1019. In this way, the riveting action before welding is beneficial to improving the welding yield rate between the conductive structure 10 and the bottom plate 1019, thereby enhancing the welding quality between the conductive structure 10 and the bottom plate 1019.

Referring to FIG. 29, FIG. 33, or FIG. 38, in one embodiment, the first-metal post 1 includes a first segment 14 and a second segment 15 connected to each other. An outer diameter of the first segment 14 is less than an outer diameter of the second segment 15, and the end of the first segment 14 away from the second segment 15 is the first end. The end of the second segment 15 away from the first segment is the second end. The second-metal layer 2 includes the barrel body 27, and the barrel body 27 wraps the first segment 14. The second segment 15 is configured to be located outside the battery cell 1000. The end of the barrel body 27 away from the second segment 15 is configured to be connected to the current collector 120, so that the conductive structure 10 is clamped on the cover plate 110 of the battery cell 1000 by the current collector 120 and the second segment 15.

It can be understood that the second segment 15 is located on one side of the cover plate 110, and the current collector 120 is located on the other side of the cover plate 110.

It can be understood that in a cylindrical battery cell, the current collector 120 may be a current collecting plate; and in a square case battery cell, the current collector 120 may be a current collecting sheet or a current collecting leg.

In the embodiments, through the above-described arrangement, the arrangement of the bottom plate 1019 is eliminated, thereby reducing a number of components within the battery cell 1000. In this way, not only the weight of the battery cell 1000 can be reduced, but also the space originally configured for arranging the bottom plate 1019 can be used for arranging the electrode assembly, thereby facilitating the improvement of the energy density of the battery cell 1000.

In a fourth aspect, referring to FIG. 50 or FIG. 51, embodiments of the present application also provide a battery cell 1000. The battery cell 1000 is also referred to as a battery core, and the battery cell 1000 refers to a basic unit that realizes mutual conversion of chemical energy and electrical energy.

Specifically, referring to FIG. 50, the battery cell 1000 includes a shell 1100, an electrode assembly 1200, and the aforementioned cover plate assembly 100. Specifically, the shell 1100 includes an accommodation cavity 1110, the electrode assembly 1200 is disposed in the accommodation cavity 1110, and the cover plate assembly 100 is connected to the shell 1100 and closes an opening of the accommodation cavity 1110. The electrode assembly 1200 includes a tab 1210, and the conductive structure 10 is connected to the tab 1210.

Specifically, the electrode assembly 1200 further includes an electrode sheet and a diaphragm, and the tab 1210 is connected to the electrode sheet. The electrode sheet includes a positive electrode sheet and a negative electrode sheet, and the diaphragm is located between the positive electrode sheet and the negative electrode sheet. It can be understood that the tab 1210 also includes a positive tab and a negative tab. The positive tab is connected to the positive electrode sheet, and the negative tab is connected to the negative electrode sheet.

In addition, the battery cell 1000 further includes the electrolyte. The electrolyte is located in the accommodation cavity 1110, and the electrode assembly 1200 is immersed in the electrolyte.

It can be understood that the battery cell 1000 may be specifically a cylindrical battery cell 1000, a square case battery cell 1000, a soft pack battery cell 1000, a blade battery cell 1000, etc.

The possible implementations of the present application have been described in detail above, and the principles and implementations of the present application have been described herein with specific examples, and the description of the above implementations is only for helping to understand the methods and core ideas of the present application. Meanwhile, those skilled in the art may change the specific embodiments and the scope of application according to the ideas of the present application, and in summary, the contents of the present specification should not be construed as limiting the present application.

**Claims**

1. A conductive structure (10), **characterized by** comprising:

    a first-metal post (1) comprising a first end (11) and a second end (12) opposite to each other; and
    a second-metal layer (2) bonded to a surface of the first-metal post (1), wherein the second-metal layer (2) wraps the first end (11) and extends toward the second end (12).

2. The conductive structure (10) according to claim 1, **characterized in that** the second-metal layer (2) and the first-metal post (1) are cooperated with each other in an embedding manner;

    an end portion (20) of the second-metal layer (2) is embedded in the first-metal post (1);
    a first gap (20a) is presented between the end portion (20) of the second-metal layer (2) and the first-metal post (1); and
    an end surface (20b) and a transition surface (20c) connected in sequence are formed on the end portion (20) of the second-metal layer (2), and the first gap (20a) is formed only between the end surface (20b) and the transition surface (20c) and the first-metal post (1), wherein the conductive structure (10) satisfies at least one of conditions that:

    a side of the end surface (20b) away from the transition surface (20c) is connected to an outer surface of the second-metal layer (2), and the transition surface (20c) is curved and transitioned from the end surface (20b) onto the first-metal post (1); and an average dimension of the first gap (20a) is less than 0.1 mm.

3. The conductive structure (10) according to claim 1, **characterized in that** an end portion (20) of the second-metal layer (2) comprises at least one of a first extension segment (201) and a second extension segment (202), the first extension segment (201) extends in a first direction, the second extension segment (202) extends in a second direction, and the first direction intersects with the second direction.

4. The conductive structure (10) according to claim 1, **characterized in that** the conductive structure (10) is a pole (101), a supporting surface (203) is formed on an end portion (20) of the second-metal layer (2), and the supporting surface (203) is configured to support a terminal pressing block (102);

    the supporting surface (203) is an inclined surface (2031), and in a direction away from the first end (11), the inclined surface (2031) gradually approaches an outer side surface of the first-metal post (1) from an outer side surface of the second-metal layer (2); and

the inclined surface (2031) is an inclined flat surface, and an included angle between the inclined flat surface and the outer side surface of the second-metal layer (2) ranges from 110° to 130°.

5. The conductive structure (10) according to claim 1, **characterized in that** the conductive structure (10) is a pole (101), a supporting surface (203) is formed on an end portion (20) of the second-metal layer (2), and the supporting surface (203) is configured to support a terminal pressing block (102);

the supporting surface (203) is a step surface (2032), the step surface (2032) comprises a first sub-step surface (20321) and a second sub-step surface (20322) connected in sequence, a number of the first sub-step surface (20321) is greater than or equal to 1, and a number of the second sub-step surface (20322) is greater than or equal to 1; and
the conductive structure (10) satisfies at least one of conditions that:

a height of the second sub-step surface (20322) along an axial direction of the pole (101) is greater than or equal to 0.2 mm; and
a width of the first sub-step surface (20321) along a radial direction of the pole (101) is greater than or equal to 0.2 mm.

6. The conductive structure (10) according to claim 1, **characterized in that** the conductive structure (10) is a pole (101), a supporting surface (203) is formed on an end portion (20) of the second-metal layer (2), and the supporting surface (203) is configured to support a terminal pressing block (102);
a width of the supporting surface (203) along a radial direction of the pole (101) is greater than or equal to 0.3 mm and is less than or equal to a thickness of the second-metal layer (2).

7. The conductive structure (10) according to claim 1, **characterized in that** the first-metal post (1) is radially protruded to form a boss (13), and the second-metal layer (2) extends at least onto the boss (13);

the boss (13) is located at the first end (11), and the boss (13) is completely encased within the second-metal layer (2); and
the conductive structure (10) is a pole (101) and a current collector (120) integrated with each other, wherein the boss (13) is the current collector (120), and the current collector (120) is configured to be connected with a tab (1210).

8. The conductive structure (10) according to claim 1, **characterized in that** the first-metal post (1) is radially protruded to form a boss (13), and the second-metal layer (2) extends at least onto the boss (13); and

the boss (13) is arranged away from the first end (11), and a radial dimension of the boss (13) is greater than a radial dimension of the first end (11).

9. The conductive structure (10) according to claim 8, **characterized in that** the boss (13) is located at the second end (12), and the boss (13) is partially exposed outside the second-metal layer (2); and
the conductive structure (10) is a pole (101) and a terminal pressing block (102) integrated with each other, and wherein the boss (13) is the terminal pressing block (102).

10. The conductive structure (10) according to claim 8, **characterized in that** the second-metal layer (2) comprises a first section (21), a second section (22), and a third section (23), the first section (21) corresponds to an end surface (20b) of the first end (11), the second section (22) corresponds to a side surface of the first end (11), the third section (23) corresponds to a side surface of the boss (13) adjacent to the first end (11), and the second section (22) connects the first section (21) with the third section (23).

11. The conductive structure (10) according to claim 10, **characterized in that** the third section (23) is formed as an end portion (20) of the second-metal layer (2), and the third section (23) is embedded in the boss (13).

12. The conductive structure (10) according to claim 10, **characterized in that** an average thickness of the first section (21) is greater than an average thickness of the second section (22), and the average thickness of the second section (22) is greater than an average thickness of the third section (23); and the conductive structure (10) satisfies at least one of conditions that: the average thickness of the second section (22) is greater than half of the average thickness of the first section (21); and the average thickness of the third section (23) is greater than half of the average thickness of the second section (22); or a thickness of a portion of the second section (22) adjacent to the third section (23) is greater than a thickness of a portion of the second section (22) adjacent to the first section (21).

13. The conductive structure (10) according to claim 10, **characterized in that** the end surface (20b) of the first end (11) is locally recessed to form a groove (11b), the first section (21) comprises a first sub-section (211), a second sub-section (212), and a third sub-section (213) connected in sequence, the first sub-section (211) is located outside the groove (11b), the second sub-section (212) is located on a sidewall of the groove (11b), and the third sub-section (213) is located on a bottom wall of the groove (11b); and

a vertical distance between an outer surface of the first sub-section (211) and an outer surface of the third sub-section (213) is less than or equal to 2.5 mm; or
the conductive structure (10) satisfies at least one of conditions that: an average thickness of the first sub-section (211) is greater than or equal to 0.5 mm, and the average thickness of the second section (22) is greater than or equal to 0.5 mm; or
the second sub-section (212) extends obliquely from the first sub-section (211) toward the third sub-section (213), and an inclination angle of the second sub-section (212) is greater than or equal to 15° and is less than or equal to 60°.

14. The conductive structure (10) according to claim 10, **characterized in that** the boss (13) is located between the first end (11) and the second end (12), and the radial dimension of the boss (13) is further greater than a radial dimension of the second end (12); and
the second-metal layer (2) further comprises a fourth section (24), the fourth section (24) corresponds to a side surface of the boss (13), and the fourth section (24) is connected to the third section (23).

15. The conductive structure (10) according to claim 14, **characterized in that**, along an axial direction of the first-metal post (1), a distance between an outer surface of the third section (23) and an end of the fourth section (24) facing away from the first end (11) is defined as a, and along a radial direction of the first-metal post (1), a distance between an outer surface and an inner surface of the fourth section (24) is defined as e, wherein a > e > 0.5 mm.

16. The conductive structure (10) according to claim 14, **characterized in that** the second-metal layer (2) further comprises a fifth section (25), the fifth section (25) corresponds to a side surface of the boss (13) away from the first end (11), and the fourth section (24) connects the fifth section (25) with the third section (23); and

along an axial direction of the first-metal post (1), a distance between an inner surface of the fifth section (25) and an inner surface of the third section (23) is defined as b, and b > 0.5 mm; or
along an axial direction of the first-metal post (1), a distance between an outer surface of the third section (23) and an outer surface of the fifth section (25) is defined as h2; along a radial direction of the first-metal post (1), a distance between an outer surface of the fourth section (24) and a root on a side of the boss (13) adjacent to the second end (12) is defined as c, and a distance between the outer surface of the fourth section (24) and an end of the fifth section (25) adjacent to a central axial line of the first-metal post (1) is defined as d; wherein c > h2 and d ≥ 2/3c, or c ≤ h2 and d > 0.5 mm; or
the fourth section (24) and the fifth section (25) form an inversely-clasping layer (251) wrapping a free end of the boss (13), and along an axial direction of the first-metal post (1), a distance between an outer surface of the third section (23) and an outer surface of the inversely-clasping layer (251) is defined as K1, a thickness of the inversely-clasping layer (251) is defined as K2, and f = K2/K1, wherein f is greater than or equal to 0.3 and is less than 1.

17. The conductive structure (10) according to claim 14, **characterized in that** an edge of the end surface (20b) of the first end (11) is recessed to form a first stepped portion (11a), and the second-metal layer (2) further comprises a second stepped portion (26), the second stepped portion (26) matches the first stepped portion (11a), the second stepped portion (26) is connected between the first section (21) and the second section (22), and the second stepped portion (26) is configured to be connected with a tab (1210); and
the second stepped portion (26) comprises a first step surface (261) and a second step surface (262) connected with each other, a width of the first step surface (261) along a radial direction of the first-metal post (1) is greater than or equal to 0.5 mm, and a height of the second step surface (262) along an axial direction of the first-metal post (1) is greater than or equal to 0.4 mm.

18. The conductive structure (10) according to any one of claim 1 to claim 17, **characterized in that** the conductive structure (10) satisfies at least one of conditions that:

the first-metal post (1) is an aluminum post, and the second-metal layer (2) is a copper layer, and an average thickness of the second-metal layer (2) ranges from 0.1 mm to 3 mm;
an uneven micro-structure is provided at a bonding interface (17) between the second-metal layer (2) and the first-metal post (1); and
a diameter of the conductive structure (10) is less than or equal to 30 mm.

19. The conductive structure (10) according to claim 1, **characterized in that** the first-metal post (1) comprises a first segment (14) and a second segment (15) connected to each other, an outer diameter of the first segment (14) is less than an outer diameter of the second segment (15), an end of the first segment (14) away from the second segment (15) is the first end (11), and an end of the second segment (15) away from the first segment (14) is the second end (12);

the second-metal layer (2) comprises a barrel body (27) and a flange (28), the barrel body (27) wraps the first segment (14), the flange (28) is connected to an end portion (20) of the barrel body (27) adjacent to the second segment (15), the flange (28) extends in a radial direction of the conductive structure (10) and embedded in an end surface (20b) of the second segment (15) facing the first segment (14);

wherein in an axial direction of the conductive structure (10), the flange (28) has a thickness dimension Hb, and the thickness dimension Hb of at least part of the flange (28) increases as approaching an axial line of the conductive structure (10);

in a longitudinal cross-section of the conductive structure (10) passing through the flange (28), along a direction toward the axial line of the conductive structure (10), a bonding interface (17) formed between the flange (28) embedded in the second segment (15) comprises a first line segment (161), a second line segment (162), and a third line segment (163) connected in sequence; and

wherein a curvature of the second line segment (162) is less than a curvature of the first line segment (161) and a curvature of the third line segment (163).

20. The conductive structure (10) according to claim 19, **characterized in that** the conductive structure (10) satisfies at least one of conditions that:

the curvature of the third line segment (163) is greater than the curvature of the first line segment (161), the curvature of the first line segment (161) ranges from $2 \times 10^{-4}$ mm$^{-1}$ to $8 \times 10^{-4}$ mm$^{-1}$, and the curvature of the third line segment (163) ranges from $7 \times 10^{-3}$ mm$^{-1}$ to $1.2 \times 10^{-2}$ mm$^{-1}$; and

the curvature of the second line segment (162) is less than or equal to $1 \times 10^{-4}$ mm$^{-1}$.

21. The conductive structure (10) according to claim 19, **characterized in that**, in the longitudinal cross-section, along the axial direction of the conductive structure (10), a bonding interface (17) formed between a surface of the second-metal layer (2) adjacent to the axial line of the conductive structure (10) and an outer circumferential surface of the first-metal post (1) comprises a fourth line segment (164) and a fifth line segment (165), and both ends of the fourth line segment (164) are connected to the third line segment (163) and the fifth line segment (165), respectively; and

wherein a curvature of the fourth line segment (164) is less than the curvature of the third line segment (163) and a curvature of the fifth line segment (165).

22. The conductive structure (10) according to claim 21, **characterized in that** the conductive structure (10) satisfies at least one of conditions that:

the curvature of the first line segment (161) is less than the curvature of the fifth line segment (165), the curvature of the first line segment (161) ranges from $3 \times 10^{-4}$ mm$^{-1}$ to $9.5 \times 10^{-4}$ mm$^{-1}$, the curvature of the third line segment (163) ranges from $5 \times 10^{-4}$ mm$^{-1}$ to $2 \times 10^{-3}$ mm$^{-1}$, and the curvature of the fifth line segment (165) ranges from $7 \times 10^{-4}$ mm$^{-1}$ to $3 \times 10^{-3}$ mm$^{-1}$; or

the curvature of the fourth line segment (164) is less than or equal to $1 \times 10^{-4}$ mm$^{-1}$.

23. The conductive structure (10) of claim 21 or claim 22, **characterized in that**, in the longitudinal cross-section of the conductive structure (10), the first-metal post (1) comprises a plurality of forging flow lines (18), and a contact area between the first-metal post (1) and the second-metal layer (2) forms a bonding interface (17);

the first-metal post (1) comprises a bonding region (19) adjacent to the second-metal layer (2), a plurality of the forging flow lines (18) within the bonding region (19) extend along the bonding interface (17); the bonding region (19) comprises a compact region (191), a spacing of a plurality of the forging flow lines (18) within the compact region (191) is less than a spacing of a plurality of the forging flow lines (18) within other regions of the bonding region (19); and

wherein the compact region (191) comprises a first dense region (1911), a second dense region (1912), and a third dense region (1913), and along a thickness direction of the second-metal layer (2), the first dense region (1911) and the second dense region (1912) are arranged opposite to the third line segment (163) and the fifth line segment (165), respectively; and the third dense region (1913) is disposed at an axial line of the first-metal post (1) and is arranged away from a bottom wall of the barrel body (27).

24. The conductive structure (10) according to any one of claim 19 to claim 22, **characterized in that** two end points of the second line segment (162) are defined as a point U and a point V, respectively; and a straight line UV and the radial direction of the conductive structure (10) form an included angle W on a side facing away from the flange (28), satisfying: $0 < W \leq 20°$.

25. The conductive structure (10) according to any one of claim 19 to claim 22, **characterized in that** the outer diameter of the second segment (15) is defined as Rb1, and a maximum radius of the flange (28) is defined as Rb2, satisfying: $65\%Rb1 \leq Rb2 \leq 93\%Rb1$.

26. The conductive structure (10) according to any one of claim 19 to claim 22, **characterized in that** a plurality of flanges (28) are provided, the plurality of flanges (28) are sequentially arranged along a circumferential direction of the conductive structure (10), and at least two of the flanges (28) are oppositely arranged along the radial direction of the conductive structure (10).

27. The conductive structure (10) according to any one of claim 19 to claim 22, **characterized in that** in an axial cross-section of the conductive structure (10), a length of a bonding interface (17) formed through the contact between the first-metal post (1) and the second-metal layer (2) is defined as Lb, and an outer diameter of the barrel body (27) is defined as $\varphi b0$, satisfying: $1\varphi b0 \leq Lb \leq 5\varphi b0$; and

when $\varphi b0 \leq 4$ mm, $3.6\varphi b0 \leq Lb \leq 5\varphi b0$;
when $4$ mm $< \varphi b0 < 8$ mm, $3\varphi b0 \leq Lb \leq 3.6\varphi b0$; and
when $\varphi b0 \geq 8$ mm, $1\varphi b0 \leq Lb \leq 3\varphi b0$.

28. The conductive structure (10) of any one of claim 19 to claim 22, **characterized in that** the second-metal layer (2) further comprises transition portions (281), and the transition portions (281) are connected to an end surface (20b) of the barrel body (27) adjacent to the second segment (15);

wherein the transition portions (281) are embedded in an end surface (20b) of the second segment (15) facing the first segment (14), and a part of a bonding interface (17) between the transition portions (281) and the second segment (15) is located on a circumferential surface of the second segment (15); a cross-section of the second segment (15) is shaped as a rectangle, two of the flanges (28) are arranged at intervals along a direction of long sides of the rectangle, the flanges (28) extend along wide sides of the rectangle, two of the transition portions (281) are arranged at intervals along a direction of narrow sides of the rectangle, and the transition portions (281) extend along the long sides of the rectangle; and end surfaces (20b) of the transition portions (281) away from the axial line of the conductive structure (10) is coplanar with a sidewall on which the long sides of the second segment (15) are located.

29. The conductive structure (10) of any one of claim 19 to claim 22, **characterized in that** a contact area between the first-metal post (1) and the second-metal layer (2) forms a bonding interface (17); the conductive structure (10) comprises a metal mixing layer (192), the metal mixing layer (192) extends along the bonding interface (17), the metal mixing layer (192) wraps the bonding interface (17), and the metal mixing layer (192) comprises a first-metal material and a second-metal material mixed with each other;

wherein a thickness of the metal mixing layer (192) is defined as Dc, and the thickness of the metal mixing layer (192) is not uniform; and the thickness Dc satisfies: $1 \mu m \leq Dc \leq 8 \mu m$.

30. The conductive structure (10) according to claim 29, **characterized in that** the metal mixing layer (192) comprises a first mixing portion (1921) and a second mixing portion (1922), the first mixing portion (1921) is formed by mixing a material of a bottom wall of the barrel body (27) and a material of an end surface (20b) of the first segment (14) away from the second segment (15), and the second mixing portion (1922) is formed by mixing a material of a portion of an inner circumferential surface of the barrel body (27) adjacent to the flange (28) and a material of a portion of an outer circumferential surface of the first segment (14) adjacent to the second segment (15), and a thickness of the first mixing portion (1921) is greater than a thickness of the second mixing portion (1922); or the metal mixing layer (192) is a metallurgical layer, or the metal mixing layer (192) is an alloy layer in which the first-metal material and the second-metal material are embedded with each other.

31. The conductive structure (10) of any one of claim 19 to claim 22, **characterized in that** the flange (28) extends in a looped shape along a circumferential direction of the first segment (14).

32. The conductive structure (10) of any one of claim 19 to claim 22, **characterized in that** a diameter of an end of the first segment (14) adjacent to the second segment (15) is less than a diameter of an end of the first segment (14) away from the second segment (15).

33. The conductive structure (10) according to any one of claim 19 to claim 22, **characterized in that** an end surface (20b) of the second segment (15) facing the first segment (14) is provided with a fitting groove (16), and the flange (28) is embedded in the fitting groove (16); and a second gap (29) is formed between the flange (28) and the fitting groove (16);

the second gap (29) is located between an end of the flange (28) away from an axial line of the conductive structure (10) and a groove wall of the fitting groove (16);
the second segment (15) has a thickness Da in the axial direction of the conductive structure (10); and
wherein the conductive structure (10) satisfies at least one of conditions that: a dimension of the second gap (29) in the radial direction of the conductive structure (10) is defined as La, satisfying: $0 < La \leq 10\%$ Da; and a dimension of the second gap (29) in the axial direction of the conductive structure (10) is defined as Ha3 satisfying: $0 < Ha3 \leq 40\%$ Da.

34. The conductive structure (10) of any one of claim 19 to claim 22, **characterized in that** an end of the barrel body (27) away from the second segment (15) is provided with a matching groove (271); and the conductive structure (10) satisfies at least one of conditions that:

the first segment (14) comprises a matching bottom wall (141) away from the second segment (15), and a bottom wall of the barrel body (27) protrudes toward the matching bottom wall (141) to be embedded within the matching bottom wall (141); and
the first segment (14) comprises a matching bottom wall (141) away from the second segment (15), and a peripheral edge of the matching bottom wall (141) protrudes toward a peripheral edge of a bottom wall of the barrel body (27), so as to be embedded in the bottom wall of the barrel body (27).

35. The conductive structure (10) according to any one of claim 19 to claim 22, **characterized in that** a diameter of an end of the barrel body (27) away from the second segment (15) is less than a diameter of an end of the barrel body (27) adjacent to the second segment (15); and an outer circumferential surface of the barrel body (27) is a tapered surface, or a stepped groove b (272) is formed at an end of the outer circumferential surface of the barrel body (27) away from the second segment (15), and the stepped groove b (272) extends in a looped shape along a circumferential direction of the barrel body (27).

36. The conductive structure (10) of any one of claim 19 to claim 22, **characterized in that**, in the longitudinal cross-section of the first-metal post (1), a boundary line of a part of the second segment (15) is an inclined line disposed at an acute angle to an axial line of the first-metal post (1); and the conductive structure (10) satisfies at least one of conditions that:

in the longitudinal cross-section of the first-metal post (1), a boundary line corresponding to a circumferential surface of the second segment (15) is the inclined line; and
the second segment (15) comprises a second surface (1014) facing away from the second-metal layer (2), and in the longitudinal cross-section of the first-metal post (1), a boundary line corresponding to a portion of the second surface (1014) adjacent to an edge is the inclined line.

37. The conductive structure (10) of any one of claim 19 to claim 22, **characterized in that** an end surface (20b) of the second segment (15) facing away from the first segment (14) is provided with an inwardly-recessed hole (1012), the inwardly-recessed hole (1012) extends along an axial line of the first-metal post (1), and the inwardly-recessed hole (1012) is disposed adjacent to the axial line of the first-metal post (1); and wherein a diameter of the inwardly-recessed hole (1012) decreases as approaching the first segment (14).

38. The conductive structure (10) of any one of claim 19 to claim 22, **characterized in that** the conductive structure (10) further comprises a second-metal strip (1011), the second-metal strip (1011) is disposed on a circumferential surface of the second segment (15) and disposed away from the first segment (14), and the second-metal strip (1011) extends in a looped shape along a circumferential line of the second segment (15).

39. The conductive structure (10) according to any one of claim 19 to claim 22, **characterized in that** the conductive structure (10) is a pole (101) of a battery cell (1000), and at least an end portion (20) of the flange (28) is configured to be located on a side of a cover plate (110) of the battery cell (1000) facing away from an electrode assembly (1200) of the battery cell (1000).

40. The conductive structure (10) according to claim 1, **characterized in that**, the second end (12) of the first-metal post (1) is provided with extension portions (151) extending toward the first end (11), the extension portions (151) at least wrap a part of an end portion (20) of the second-metal layer (2).

41. The conductive structure (10) according to claim 40, **characterized in that** at least two sides of the second-metal layer (2) are wrapped by the extension portion (151), and thicknesses of two of the extension portions (151) are different.

42. The conductive structure (10) according to claim 40, **characterized in that** the first-metal post (1) comprises a first segment (14) and a second segment (15) connected in sequence, an outer diameter of the first segment (14) is less than an outer diameter of the second segment (15), the second segment (15) comprises a first surface (1013) adjacent to the first segment (14), an end of the first segment (14) away from the second segment (15) is the first end (11), and an end of the second segment (15) away from the first segment (14) is the second end (12);

> wherein an end of the extension portions (151) is connected to a circumferential surface of the second segment (15), and another end of the extension portions (151) extends toward the first end (11); and
> a diameter of the second segment (15) is defined as φd, along a radial direction of the first-metal post (1), a thickness of each of the extension portions (151) is defined as Dd, satisfying: $0 < Dd \leq 0.3\varphi d$.

43. A cover plate assembly (100), **characterized by** comprising:

> a cover plate (110); and
> a conductive structure (10), wherein the conductive structure (10) comprises a first-metal post (1) and a second-metal layer (2), the first-metal post (1) comprises a first end (11) and a second end (12) opposite to each other; the second-metal layer (2) is bonded to a surface of the first-metal post (1), and the second-metal layer (2) wraps the first end (11) and extends toward the second end (12); and
> wherein the conductive structure (10) is provided penetrating the cover plate (110).

44. The cover plate assembly (100) according to claim 43, **characterized in that** the conductive structure (10) is a pole (101), or the conductive structure (10) is a pole (101) and a terminal pressing block (102) integrated with each other; and

> the cover plate assembly (100) further comprises a current collector (120), and the current collector (120) is located on a side of the cover plate (110) and welded to the conductive structure (10);

the cover plate assembly (100) further comprises:

> a first insulating member (112) disposed between the conductive structure (10) and the cover plate (110); and
> a second insulating member (113) disposed between the cover plate (110) and the current collector (120); and/or
> the cover plate assembly (100) further comprises a sealing member (130), and the sealing member (130) is disposed between the cover plate (110) and the conductive structure (10).

45. The cover plate assembly (100) according to claim 44, **characterized in that** the sealing member (130) is located on a side of the cover plate (110) adjacent to the first insulating member (112); alternatively, the sealing member (130) is located on a side of the cover plate (110) adjacent to the second insulating member (113).

46. The cover plate assembly (100) according to claim 44, **characterized in that** a surface of the first insulating member (112) facing away from the cover plate (110) is provided with an air-exhausting groove (1121), and both ends of the air-exhausting groove (1121) extend to an inner circumferential surface and an outer circumferential surface of the first insulating member (112), respectively.

47. The cover plate assembly (100) of claim 44, **characterized in that** the first-metal post (1) comprises a first segment (14) and a second segment (15) connected to each other, an outer diameter of the first segment (14) is less than an outer diameter of the second segment (15); an end of the first segment (14) away from the second segment (15) is the first end (11), and an end of the second segment (15) away from the first segment (14) is the second end (12); the second-metal layer (2) comprises a barrel body (27) and a flange (28), the barrel body (27) wraps the first segment (14), the flange (28) is connected to an end portion (20) of the barrel body (27) adjacent to the second segment (15), the flange (28) extends in a radial direction of the conductive structure (10) and embedded in an end surface (20b) of the second segment (15) facing the first segment (14);

> the second segment (15) and the flange (28) are located on a side of the first insulating member (112) facing away from the cover plate (110); the second segment (15) comprises a first surface (1013) adjacent to the first segment (14), the first surface (1013) comprises a first region (1015) located on an outer peripheral side of the flange (28); a surface of the flange facing away from the second segment (15) is a second region (1016); and

wherein a height difference is presented between the first region (1015) and the second region (1016), and both the first region (1015) and the second region (1016) are connected with the first insulating member (112) in a pressing manner.

48. The cover plate assembly (100) according to claim 47, **characterized in that** along an axial direction of the first-metal post (1), the first region (1015) is outwardly protruded along an axial direction of the conductive structure (10) to form the height difference, and a thickness dimension of the first region (1015) protruding relative to the second region (1016) is defined as Ha1, and a thickness of the second segment (15) in the axial direction of the conductive structure (10) is defined as Da, satisfying: 0 < Ha1 ≤ 15%Da; and

$$2\%Da \le Ha1 \le 15\%Da.$$

49. The cover plate assembly (100) according to claim 47, **characterized in that** along an axial direction of the first-metal post (1), the second region (1016) is outwardly protruded along an axial direction of the conductive structure (10) to form the height difference, and a thickness dimension of the second region (1016) protruding relative to the first region (1015) is Ha2, and a thickness of the second segment (15) in the axial direction of the conductive structure (10) is defined as Da, satisfying: 0 < Ha2 ≤ 15%Da; and

$$2\%Da \le Ha2 \le 15\%Da.$$

50. The cover plate assembly (100) according to claim 47, **characterized in that** the first region (1015) is outwardly protruded along an axial direction of the conductive structure (10) to form a first protruding portion (1017), and the first protruding portion (1017) extends in a looped shape along a circumferential direction of the conductive structure (10); or, the second region (1016) is outwardly protruded along the axial direction of the conductive structure (10) to form a second protruding portion (1018), and the second protruding portion (1018) extends in a looped shape along the circumferential direction of the conductive structure (10).

51. The cover plate assembly (100) according to claim 43 to claim 50, **characterized in that** the conductive structure (10) further comprises a bottom plate (1019);

the second-metal layer (2) comprises a barrel body (27), and the barrel body (27) wraps the first end (11) and extends toward the second end (12); and

the bottom plate (1019) is connected with an end of the barrel body (27) away from the second end (12).

52. The cover plate assembly (100) according to claim 51, **characterized in that** the bottom plate (1019) is sleeved on the barrel body (27) and riveted to the barrel body (27); and

wherein the end of the barrel body (27) away from the second end (12) is provided with a pre-punched hole (273), and a hole diameter of the pre-punched hole (273) gradually increases along a direction away from the second end (12).

53. The cover plate assembly (100) according to claim 51, **characterized in that** the bottom plate (1019) is welded to the barrel body (27);

a stepped groove b (272) is formed at the end of the barrel body (27) away from the second end (12), the stepped groove b (272) extends in a looped shape along a circumferential direction of the barrel body (27), and the bottom plate (1019) is sleeved in the stepped groove b (272).

54. The cover plate assembly (100) according to any one of claim 43 to claim 50, **characterized in that** the first-metal post (1) comprises a first segment (14) and a second segment (15) connected to each other, an outer diameter of the first segment (14) is less than an outer diameter of the second segment (15), an end of the first segment (14) away from the second segment (15) is the first end (11), and an end of the second segment (15) away from the first segment (14) is the second end (12);

the second-metal layer (2) comprises a barrel body (27), and the barrel body (27) wraps the first segment (14); and

wherein the second segment (15) is configured to be located outside a battery cell (1000), and an end of the barrel body (27) away from the second segment (15) is configured to be connected with a current collector (120), such that the conductive structure (10) is clamped onto the cover plate (110) of the battery cell (1000) through the current collector (120) and the second segment (15).

55. A battery cell (1000), **characterized by** comprising:

a shell (1100) comprising an accommodating cavity (1110);

an electrode assembly (1200) disposed in the accommodating cavity (1110), wherein the electrode assembly (1200) comprises a tab (1210); and

the cover plate assembly (100) of any one of claim 43 to claim 54, wherein the cover plate assembly (100) is connected to the shell (1100) and closes an opening of the accommodating cavity (1110), and the conductive structure (10) is connected to the tab (1210).

FIG. 1

FIG. 2

FIG. 3

10

FIG. 4

12(101)

1

2

13(120)

11

FIG. 5

203(2032)

1

2

FIG. 6

FIG. 7

FIG. 8

FIG. 9

10(101)

203(2032)

B

12

20

11

FIG. 10

W21

203(2032)

H21

1

20

FIG. 11

10(101)

203(2031)

C

12

20

11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

28  27  2

281

281

28

FIG. 34

2

28

27

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

FIG. 49

1000

100

1210

1110

1100

1200

FIG. 50

1000

112

101

110

1100

FIG. 51